# EUROPÄISCHE PATENTSCHRIFT

(11) **EP 3 375 943 B1**
(45) Veröffentlichungstag und Bekanntmachung des Hinweises auf die Patenterteilung: **09.08.2023**
(21) Anmeldenummer: 18158611.6
(22) Anmeldetag: 26.02.2018
(51) Int. Cl.: E03F 1/00, E03F 7/10

(54) **ABSAUGVORRICHTUNG FÜR ABWASSERBEHÄLTER UND ENTSORGUNGSSTATION FÜR EIN FAHRZEUG**
SUCTION DEVICE FOR SEWAGE TANKS AND DISPOSAL UNIT FOR A VEHICLE
DISPOSITIF D'ASPIRATION POUR RÉCIPIENTS D'EAUX USAGÉES ET STATION D'ÉVACUATION POUR UN VÉHICULE

(30) Priorität: 24.02.2017 DE 202017101065 U; 12.10.2017 DE 202017106203 U
(43) Veröffentlichungstag der Anmeldung: 19.09.2018
(73) Patentinhaber: Vogelsang GmbH & Co. KG, 49632 Essen (DE)
(72) Erfinder: Heinrichs, Martin, 49632 Essen (DE); Wilken, Heinz, 49632 Essen (DE)
(74) Vertreter: Eisenführ Speiser

(56) Entgegenhaltungen:
- WO-A1-2012/012867
- DE-U1-202015 103 442
- US-A- 3 528 462
- US-A1- 2002 174 886
- US-B1- 7 523 512

## Beschreibung

Die Erfindung betrifft eine Absaugvorrichtung für Abwasserbehälter, umfassend: einen Absaugkanal, der sich von einem zur Befestigung im Bereich einer Öffnung des Abwasserbehälters ausgebildeten Absauganschlussflansch zu einer Absaugöffnung erstreckt, eine Anschlusskupplung, die sich von dem Absauganschlussflansch erstreckt, wobei Anschlusskupplung und Absaugkanal in Bezug auf den Anschlussflansch solcherart angeordnet sind, dass bei im Bereich der Öffnung des Abwasserbehälters montiertem Anschlussflansch sich der Absaugkanal in den Abwassertank hinein erstreckt und die Anschlusskupplung außerhalb des Abwasserbehälters angeordnet ist, eine Absaugpumpe mit einer Verbindungsleitung, die mit der Anschlusskupplung flüssigkeitsdicht verbindbar ist, und eine Pumpensteuerungseinheit, die zur Ansteuerung der Absaugpumpe mit dieser signaltechnisch verbunden ist. Ein weiterer Aspekt der Erfindung ist ein Verfahren zum Absaugen von Abwässern aus Abwasserbehältern.

Das Leeren von Abwasserbehältern ist eine insbesondere im Sanitärbereich wiederkehrende Aufgabe, die z. B. bei Abwasserbehältern durchgeführt werden muss, die in Fahrzeugen installiert sind. Hier werden Abwässer, die aus dem an Bord eines solchen Fahrzeugs installierten Sanitärbereich stammen, in einem typischerweise unterhalb des Sanitärbereichs installierten Abwasserbehälter gesammelt und aus diesem Abwasserbehälter in regelmäßigen Abständen abgeführt werden müssen. Ein typisches Beispiel für solche Abwasserbehälter sind Abwasserbehälter an Bord von Reisebussen oder Schienenfahrzeugen.

Unter einem Abwasserbehälter sind auch stationäre oder mobile Auffangwannen zu verstehen, die z.B. in den Boden eingelassen sind oder unter ein Fahrzeug geschoben werden können, um Abwasser aus einem Abwassertank des Fahrzeugs wiederum aufzunehmen.

Es ist grundsätzlich bekannt, das Abwasser aus einem solchen Abwasserbehälter abzulassen, indem ein Verschluss geöffnet wird, der in der Bodenwand des Abwasserbehälters oder einem tiefliegenden Punkt des Abwasserbehälters angeordnet ist. Beispielsweise kann eine bodenseitige Öffnung mittels eines Schieberventils geöffnet und geschlossen werden, oder es kann ein Schraubverschluss oder Bajonettverschluss vorgesehen sein, um das Abwasser abzulassen. Diese Vorgehensweise erreicht in der Regel eine vollständige Entfernung des Abwassers, weist aber den Nachteil auf, dass die Bedienung des bodenseitigen Ablassventils häufig Verschmutzungen des Bedieners oder der Umgebung verursacht, da die Zugängigkeit häufig ungünstig ist, das Abwasser schwallartig aus dem Abwasserbehälter austritt und die Positionierung der Öffnung oberhalb einer Auffangwanne oder -rinne häufig nicht genau genug erfolgt.

Zur Vermeidung dieser Nachteile ist es aus DE 20 2016 106367 U1 vorbekannt, anstelle des Ablassens des Abwassers durch eine bodenseitige Öffnung den Abwassertank mit einem Absaugkanal auszurüsten, der sich von der Oberseite ausgehend in den Tank hinein nach unten erstreckt und knapp oberhalb des Bodens des Abwassertanks endet und dort eine entsprechende Absaugöffnung aufweist. Durch eine solche Absaugtechnik mittels eines Absaugkanals kann eine wesentlich weniger zu Verschmutzungen neigende Entfernung des Abwassers aus dem Abwasserbehälter durchgeführt werden, und eine hygienische Bedienung wird ermöglicht. Allerdings hat sich insbesondere dann, wenn mit einer solchen Absaugung Abwässer aus Abwasserbehältern entfernt werden, die mit Feststoffen belastet sind, gezeigt, dass solche Feststoffe durch die Absaugung nicht vollständig aus dem Abwasserbehälter entfernt werden. Solche Feststoffe können eine Verstopfung des Absaugkanals bewirken, wenn sie gehäuft auftreten und die Absaugung daher verhindern. Weiterhin verringern solche im Abwasserbehälter nach dem Absaugvorgang verbleibenden Feststoffe die Aufnahmekapazität des Abwasserbehälters und erhöhen hierdurch die Frequenz, in der die Absaugung erfolgen muss. Zudem können Feststoffe, die im Abwasserbehälter zurückbleiben, eine Geruchsbelästigung in der Umgebung erzeugen.

Aus DE 202015103442U1 ist eine Entsorgungsvorrichtung für ein Fahrzeug vorbekannt,

die ein Auffangbecken, eine daran angeschlossene Ablaufleitung aufweist, bei dem eine Vakuum-Quelle mit der Ablaufleitung verbunden ist.

Aus US 7,523,512 B1 ist ein reinigungssystem für Sanitärräume vorbekannt, bei dem mittels einer Sprühdüse in einem Tank ein Flüssigkeiststrom abgegeben wiurd und zugleich eine Flüssigkeit aus dem Tank evakuiert wird.

Aus US 2002/0174886 A1 ist eine Vorrichtung zum Spülen des Abwasserbehälters eines Freizeitmobils vorbekannt, bei dem über eine an den Abwasserbehälter angeschlossene Y-Kupplung ein Spülvorgang aus einem Spülschlauch oder ein Absaugvorgang über einen Absaugschlauch vorgenommen wird.

Aus US3528462 ist eine Abwassersammelanlage für einen Yachthafen vorbekannt. WO2012012867A1 beschreibt ein System zum Spülern und Reinigen von Wassertanks, bei dem aus einer Druckleitung ein Überdruck im Tank erzeugt wird und Abwasser mithilfe dieses Überdrucks aus dem Tank abgeführt wird.

Der Erfindung liegt die Aufgabe zugrunde, ein System zur Entfernung von Abwasser aus einem Abwasserbehälter bereitzustellen, bei dem eine hygienische und zugleich vollständige Entfernung von feststoffbeladenen Abwässern aus einem Abwasserbehälter durchführbar ist.

Diese Aufgabe wird erfindungsgemäß mit einer Absaugvorrichtung nach Anspruch 1 gelöst.

Erfindungsgemäß wird eine Vorrichtung zum Entfernen des Abwassers aus einem Abwasserbehälter bereitgestellt, die das Abwasser grundsätzlich durch einen Absaugvorgang aus dem Abwasserbehälter entfernt. Hierzu ist ein Absaugkanal vorgesehen, der sich ausgehend von einem Absauganschlussflansch in den Abwasserbehälter hinein erstreckt. Der Absauganschlussflansch ist am Abwasserbehälter montiert, vorzugsweise an dessen oberer Behälterwandung befestigt. Der Absaugkanal erstreckt sich in das Innere des Abwasserbehälters und weist an seinem Ende eine Absaugöffnung auf. Hierdurch wird es ermöglicht, den Abwasserbehälter nahezu vollständig oder vollständig abzusaugen, indem sich der Absaugkanal so weit in Richtung des Bodens des Abwasserbehälters erstreckt, dass die Absaugöffnung nur geringfügig von der inneren Oberfläche des Bodens des Abwasserbehälters entfernt ist.

Die hygienische und verschmutzungsfreie Möglichkeit der Absaugung mittels eines solchen Absaugkanals kombiniert die erfindungsgemäße Absaugvorrichtung mit einem Spülkanal und einer Pumpensteuerungseinheit, die einen Absaugvorgang solcherart steuert, dass auch Feststoffe aus dem Abwasserbehälter gelöst und abgesaugt werden können. Hierzu erstreckt sich ein Spülkanal in den Abwasserbehälter hinein, durch den eine Spülung des Abwasserbehälters durchgeführt werden kann. Der Spülkanal kann dabei als ein separat von dem Absaugkanal bereitgestellter Kanal ausgeführt sein, beispielsweise durch einen seitlich vom Absaugkanal angeordneten Spülkanal, durch einen konzentrisch innerhalb des Absaugkanals angeordneten Spülkanal oder als ein um den Absaugkanal herum angeordneter, im Querschnitt ringförmiger Spülkanal ausgeführt sein. Bei dieser getrennten Ausführung von Spülkanal und Absaugkanal sind entsprechend getrennte Führungen des abgesaugten Wassers und des Spülwassers möglich, und es kann eine zeitversetzte oder simultane Absaugung und Spülung erfolgen.

Erfindungsgemäß ist vorgesehen, dass die Pumpensteuerungseinheit ausgebildet ist, um in einem vorzugsweise ersten Schritt einen Absaugvorgang zu steuern, in einem vorzugsweise zweiten Schritt einen Spülvorgang zu steuern und in einem vorzugsweise dritten Schritt wiederum einen Absaugvorgang zu steuern. Dabei ist zu verstehen, dass vorzugsweise der dritte Schritt nach dem zweiten Schritt und der zweite Schritt nach dem ersten Schritt erfolgt. Grundsätzlich kann jedoch auch eine andere Reihenfolge der Schritte erfolgen, beispielsweise kann der Spülvorgang des zweiten Schritts vor dem Absaugvorgang des ersten Schritts erfolgen, indem zunächst bei gefülltem Abwasserbehälter eine Spülung mit Aufwirbelung durchgeführt wird, hierauf folgend insgesamt abgesaugt wird, sodass der erste und dritte Schritt als ein integraler gemeinsamer Schritt ausgeführt werden. Bevorzugt für eine effiziente Absaugung ist in vielen Anwendungsfällen und Geometrien von Abwasserbehältern jedoch zunächst eine Absaugung des Abwassers im ersten Schritt, gefolgt von einer Spülung im darauffolgenden zweiten Schritt und abschließend eine Absaugung des Spülwassers und aufgewirbelter Feststoffe und Restabwassers in einem darauffolgenden dritten Schritt. Grundsätzlich ist zu verstehen, dass bei getrennt ausgeführtem Absaugkanal und Spülkanal auch eine Überschneidung der Schritte angesteuert werden kann, also während des Absaugens von Abwasser durch den Absaugkanal im ersten oder dritten Schritt eine Spülung durch den Spülkanal im zweiten Schritt erfolgen kann und auf diese Weise durch eine vollständige oder teilweise Überschneidung eine bei bestimmten Abwasserbehältergeometrien oder Abwasserzusammensetzungen effizientere Absaugung des Abwassers und der darin gebundenen Feststoffe erreicht wird.

Neben diesen separaten Ausgestaltungen von Absaugkanal und Spülkanal kann auch eine integrale Ausführung von Absaugkanal und Spülkanal erfolgen. Bei dieser integralen Ausführung erfolgt sowohl die Absaugung als auch die Spülung durch einen gemeinsamen, sich in den Abwasserbehälter erstreckenden Kanal.

Die Pumpensteuerungseinheit ist insbesondere eine elektronische Steuerungseinheit, die eine Steuerung des Absaug- und Spülvorgangs ermöglicht. Dies kann durch eine vollautomatische oder teilautomatische Steuerungsweise erfolgen, alternativ aber auch durch eine entsprechende manuelle Steuerung. Hierbei wird in einer gewünschten Weise die Absaugpumpe und eine gegebenenfalls auch vorgesehene Spülpumpe solcherart angesteuert, dass eine Absaugung und Spülung des Abwasserbehälters solcherart erfolgt, dass darin abgesetzte Feststoffe gelöst und aus dem Abwasserbehälter entfernt werden. Dies kann in einfacher Weise durch einen Benutzer erfolgen, der zwischen Absaugung und Spülung in einer manuellen Weise hin und her schaltet oder durch automatisiert ablaufende Steuerungsvorgänge, bei denen volumengesteuert, zeitgesteuert oder durch entsprechende Sensoren, die einen Füllstand, einen Absaugunterdruck, einen Spüldruck, einen Absaugvolumenstrom oder dergleichen sensorisch erfassen, gesteuert werden.

Es ist erfindungsgemäß vorgesehen, dass die Absaugpumpe als Saug- und Spülpumpe ausgebildet ist und die Pumpensteuerungseinheit ausgebildet ist, um die Absaugpumpe solcherart anzusteuern, dass in einem ersten Schritt ein Absaugvorgang von Abwasser aus dem Abwasserbehälter durch den Absaugkanal und die Verbindungsleitung erfolgt, in einem zweiten Schritt die Förderrichtung der Absaugpumpe umgekehrt wird und ein Spülvorgang des Abwasserbehälters durch den Spülkanal erfolgt, und in einem dritten Schritt die Förderrichtung der Absaugpumpe erneut umgekehrt wird und ein Absaugvorgang aus dem Abwasserbehälter durch den Absaugkanal und die Verbindungsleitung erfolgt. Auf diese Weise wird sowohl der Absaugvorgang als auch der Spülvorgang durch die Absaugpumpe ausgeführt. Dies eignet sich grundsätzlich für eine getrennte oder eine integrale Ausführung von Spülkanal und Absaugkanal. Bei einer integralen Ausführung kann die Absaugung und Spülung durch eine einzige Verbindungsleitung zu dem integralen Spül- und Absaugkanal geführt werden, durch die dann sowohl die Absaugung als auch die Spülung erfolgt. Bei einer getrennten Ausführung sind entsprechende Ventile notwendig, um im Absaugbetrieb die Absaugung des Abwassers aus dem Absaugkanal und im Spülbetrieb bei entsprechender Umkehr der Förderrichtung der Absaugpumpe die Spülung durch den Spülkanal zu bewirken. Dies kann durch geschaltete Ventile oder durch entsprechende Rückschlagventile ausgeführt sein.

Noch weiter ist es bevorzugt, wenn der Spülkanal im Bereich der Absaugöffnung einen umlaufenden Rand aufweist, der eine axiale Öffnung umgibt und der mindestens eine, vorzugsweise mehrere, sich axial erstreckende Randausnehmungen aufweist, mehrere radiale Öffnungen aufweist, oder eine drehbar gelagerte Düse aufweist, die ausgebildet ist, um durch das beim Spülvorgang durch den Absaugkanal strömende Wasser in Rotation versetzt zu werden und das Spülwasser in einer Richtung mit radialer Richtungskomponente in einem um die Längsachse des Absaugkanals umlaufenden Winkel ausströmen lässt. Grundsätzlich ist zu verstehen, dass sich diese Richtungsangaben auf die Längsachse des Spülkanals im Bereich der Austrittsöffnung beziehen. Mehrere radiale Öffnungen und eine rotierende Düse können ebenfalls wirksam Ablagerungen ablösen, aufwirbeln und durchmischen. Durch diese Ausgestaltung des Spülkanals wird eine besonders effiziente Spülung bewirkt, indem ein dünner, mit hoher Geschwindigkeit austretender Spülstrahl oder mehrere solche dünnen, mit hoher Geschwindigkeit austretenden Spülstrahlen erzeugt werden, die wirksam abgelagerte Feststoffe vom Behälterboden ablösen und aufwirbeln können. Dabei ist zu verstehen, dass das Spülwasser insbesondere radial aus dem Spülkanal austreten kann und dieser Austritt vorzugsweise bodennah erfolgt, um eine wirksame Ablösung und Aufwirbelung der Feststoffe zu erreichen. Es kann aber auch eine radial-axiale Ausströmung oder eine radial-tangentiale Ausströmung oder eine radial-axial-tangentiale Ausströmung in Bezug auf die Längserstreckung des Spülkanals erfolgen.

Noch weiter ist es bevorzugt, wenn der Absaugkanal im Bereich der Absaugöffnung als Absaugglocke ausgeformt ist, die einen Glockeninnendurchmesser aufweist, der größer ist als der Durchmesser des Absaugkanals im Bereich des Anschlussflansches. Eine solche Absaugglocke dient einer wirksamen Absaugung des Abwassers aus dem Abwasserbehälter und wird durch eine Querschnittsvergrößerung des Absaugkanals im unteren Bereich, benachbart zur Absaugöffnung gebildet.

Dabei ist es noch weiter bevorzugt, wenn der Absaugkanal im Bereich der Absaugöffnung aus gummielastischem Material ausgebildet ist. Eine solche Ausgestaltung aus einem gummielastischen Material erleichtert einerseits die Montage des Absaugkanals, andererseits wird durch beim Absaugvorgang auftretende Verformungen des gummielastischen Materials eine Ablösung von etwaigen Anhaftungen dran bewirkt, wodurch die Verstopfungsgefahr durch sich aufbauende Anlagerungen verringert wird.

Gemäß einer weiteren bevorzugten Ausführungsform ist vorgesehen, dass der Absaugkanal und der Spülkanal als ein integraler Absaug- und Spülkanal ausgebildet sind und dass der Absauganschlussflansch und der Spülanschlussflansch als integraler Absaug- und Spülanschlussflansch ausgebildet sind, von dem sich der Absaug- und Spülkanal erstreckt. Gemäß dieser Ausführungsform wird eine integrale Ausgestaltung des Absaugkanals und des Spülkanals mit einer entsprechend integralen Ausgestaltung des Absauganschlussflansches und Spülanschlussflansches vorgesehen. Bei dieser Ausgestaltung erfolgt daher die Absaugung und die Spülung durch ein und denselben Kanal, sodass eine zeitversetzte bzw. aufeinanderfolgende Absaugung und Spülung realisiert ist. Diese Ausgestaltung eignet sich insbesondere dann, wenn die Abfuhr des abgesaugten Abwassers und die Zufuhr des Spülwassers durch eine einzige Verbindungsleitung und der Absaugvorgang und der Spülvorgang durch eine einzige Absaugpumpe mit umkehrbarer Förderrichtung erfolgt, was einen kompakten Aufbau und eine wirtschaftlich effiziente und kostengünstige Konstruktion sowohl im Bereich des Abwasserbehälters als auch im Bereich der Absaugvorrichtung ermöglicht. Dabei ist zu verstehen, dass der integrale Absaug- und Spülkanal die vorstehenden Ausgestaltungen des Spülkanals und die vorstehenden Ausgestaltungen des Absaugkanals in sich vereinen kann, um die entsprechenden Vorteile für den Absaugvorgang und den Spülvorgang aufzuweisen.

Noch weiter ist es bevorzugt, wenn die Absaugpumpe auf der der Verbindungsleitung gegenüberliegenden Anschlussseite über eine Ventilvorrichtung mit einer Abwasserleitung und mit einer Spülwasserleitung verbunden ist. Gemäß dieser Ausführungsform ist die Absaugpumpe sowohl mit einer Abführleitung für das Abwasser als auch mit einer Zuführleitung für das Spülwasser verbunden, sodass wechselweise je nach durchgeführtem Schritt die Absaugpumpe das abgesaugte Abwasser abführen kann oder der Absaugpumpe Spülwasser zugeführt wird. Zwar kann grundsätzlich der Spülvorgang auch mit dem abgesaugten Abwasser aus dem Abwasserbehälter durchgeführt werden, indem die Förderrichtung der Absaugpumpe umgekehrt wird, dies hat jedoch in vielen Anwendungen Nachteile oder erfordert zusätzlichen Aufwand, um die entsprechende Strömungsführung in der Abwasserleitung zu ermöglichen. Grundsätzlich ist zu verstehen, dass die Spülwasserbereitstellung aus einem separaten Spülwasserbehälter oder aus einer Spülwasserleitung erfolgen kann. Die hierbei vorgesehene Ventilvorrichtung dient dazu, um eine entsprechende Umschaltung zwischen der Abwasserleitung und der Spülwasserleitung zu bewirken, um wiederum geschaltet oder durch entsprechende Rückschlagventile die Verbindung je nach Förderrichtung bzw. Druckaufbau der Pumpe herzustellen.

Dabei ist es bevorzugt, wenn die Ventilvorrichtung ausgebildet ist, um die Absaugpumpe während des ersten und dritten Schritts mit der Abwasserleitung zu verbinden und während des zweiten Schritts mit der Spülwasserleitung zu verbinden. Gemäß dieser Ausführungsform ist die Ventilvorrichtung entsprechend ausgebildet, um die Zufuhr des Abwassers in die Abwasserleitung sicherzustellen und die Zufuhr von Spülwasser aus der Spülleitung sicherzustellen. Dies kann wiederum durch entsprechende simultane Schaltung der Ventilvorrichtung mit der Umkehr der Förderrichtung erfolgen oder durch eine passive Ventilvorrichtung, die in Abhängigkeit der Druckverhältnisse eine entsprechende Verschaltung durch Rückschlagventile bewirkt.

Noch weiter ist es bevorzugt, wenn die Ventilvorrichtung ausgebildet ist, um einen Zutritt von Abwasser in die Spülleitung zu sperren. Diese Ausführungsform gewährleitet, dass kein Abwasser in die Spülwasserleitung eintritt, was für viele Anschlussweisen vorteilhaft oder vorgeschrieben ist, um eine Verkeimung im Spülwasserbereich zu verhindern. Insbesondere kann bei einer solcherart ausgestalteten Ventilvorrichtung das Spülwasser aus einem Trinkwassernetz entnommen werden, da eine Verkeimung des Trinkwassernetzes durch das abgesaugte Abwasser durch die Ventilvorrichtung zuverlässig verhindert wird.

Dabei ist es noch weiter bevorzugt, wenn die Ventilvorrichtung einen Systemtrenner umfasst, der an eine Trinkwasserleitung angeschlossen ist und das daraus bezogene Trinkwasser als Spülwasser bereitstellt und den Zutritt von Spülwasser oder Abwasser in die Trinkwasserleitung sperrt. Ein solcher Systemtrenner ermöglicht es in sicherer Weise, Trinkwasser aus einem Trinkwassernetz zu entnehmen und der Absaugvorrichtung als Spülwasser zuzuführen, obwohl innerhalb der Absaugvorrichtung das Trinkwasser und das abgesaugte Abwasser in einer gemeinsamen Leitung geführt wird, da durch die Systemtrennung eine Rückwärtsverkeimung des Trinkwassernetzes zuverlässig ausgeschlossen werden kann.

Noch weiter ist es bevorzugt, wenn die Absaugpumpe eine Drehkolbenpumpe ist, die von der Pumpensteuerungseinheit zur Drehrichtungsumkehr zwischen dem ersten und zweiten Schritt und zwischen dem zweiten und dritten Schritt angesteuert wird. Die Ausführung der Absaugpumpe als Drehkolbenpumpe weist einerseits den Vorteil auf, dass die Drehkolbenpumpe gut geeignet ist, um feststoffbeladene Flüssigkeiten zuverlässig und mit geringem Verschleiß zu fördern. Die Drehkolbenpumpe ist weiterhin als Verdrängerpumpe selbstansaugend und kann in der Förderrichtung durch entsprechende Drehrichtungsumkehr der Drehkolben umgeschaltet werden. Die Drehkolbenpumpe weist in beiden Förderrichtungen in der Regel die gleiche Förderleistung auf und gewährleistet dadurch sowohl eine wirksame und effiziente Absaugung als auch eine kräftige Spülung des Abwasserbehälters. Schließlich zeichnet sich die Drehkolbenpumpe durch ein gering ausgeprägtes Anlaufverhalten aus und kann innerhalb kürzester Zeit aus dem Stillstand auf eine Förderleistung in einer Strömungsrichtung und aus der vollen Förderleistung in dieser Strömungsrichtung auf eine volle Förderleistung in der entgegengesetzten Strömungsrichtung geschaltet werden.

Die Erfindung kann fortgebildet werden durch eine Be- und Entlüftungseinheit, die einen Zutritt von Luft in den Abwasserbehälter während des Absaugens und ein Entweichen von Luft aus dem Abwasserbehälter während des Spülens ermöglicht, wobei die Be- und Entlüftungseinheit vorzugsweise im Flanschanschluss ausgebildet ist. Grundsätzlich ist zu verstehen, dass diese Be- und Entlüftung beabstandet von Absaugflansch und Spülanschlussflansch direkt in der Wandung des Abwasserbehälters angeordnet sein kann oder im Absauganschlussflansch, im Spülanschlussflansch oder in beiden oder aufgeteilt in diesen beiden Flanschen vorgesehen sein kann. Grundsätzlich kann die Belüftung und die Entlüftung durch ein integrales Lüftungselement ausgeführt sein oder durch zwei getrennte Elemente, von denen eine für die Belüftung und das andere für die Entlüftung sorgt. Die Be- und Entlüftung ist zur Vermeidung von Beschädigungen des Abwasserbehälters bei der erfindungsgemäßen Vorrichtung vorteilhaft, um hierdurch zu vermeiden, dass ein Benutzer eine separate Öffnung vor dem Absaugvorgang öffnen muss, um den Zutritt und den Austritt von Luft in den Abwasserbehälter dadurch zu ermöglichen. Die Be- und Entlüftung erreicht hierdurch eine hohe Betriebssicherheit ohne die Gefahr von durch Fehlbedienung resultierenden Beschädigungen des Abwasserbehälters, wenn in dem Abwasserbehälter bei dem Absaugvorgang ein zu hoher Unterdruck aufgrund mangelnder Belüftung oder ein zu hoher Überdruck beim Spülvorgang aufgrund mangelnder Entlüftung erzeugt würde, der eine entsprechende Beschädigung nach sich ziehen würde.

Ein weiterer Aspekt der Erfindung ist ein Verfahren zum Absaugen von Abwasser aus einem Abwasserbehälter, mit den Schritten: a) Absaugen des Abwassers aus dem Abwasserbehälter durch einen Absaugkanal, der sich in den Abwasserbehälter erstreckt, vorzugsweise bis einige Millimeter über den Innenboden des Abwasserbehälters, mittels einer Absaugpumpe in einer Absaugförderrichtung, b) Spülen des Abwasserbehälters über einen Spülkanal in einer zur Absaugförderrichtung entgegengesetzten Spülförderrichtung, c) Absaugen des Spül- und Abwassers aus dem Abwasserbehälter durch den Absaugkanal mittels der Absaugpumpe in der Absaugförderrichtung. Bei dem erfindungsgemäßen Verfahren wird eine wirksame Absaugung von feststoffbeladenem Abwasser und etwaiger Ablagerungen von Feststoffen im Abwasserbehälter erreicht, indem ein kombinierter Absaugvorgang und Spülvorgang durchgeführt wird. Dabei kann vorzugsweise eine Folge von Absaugen, Spülen und Absaugen durchgeführt werden, jedoch kann diese Abfolge auch als Spülen, gefolgt von Absaugen ausgeführt werden, oder es können sich der Absaugvorgang und der Spülvorgang teilweise überschneiden. Grundsätzlich ist zu verstehen, dass das Verfahren zum Absaugen von Abwasser bevorzugt mit der zuvor erläuterten Absaugvorrichtung durchgeführt werden kann und die mit den entsprechenden Merkmalen der Absaugvorrichtung erreichbaren Verfahrensschritte vorteilhaft bei dem erfindungsgemäßen Verfahren ausgeführt werden.

Erfindungsgemäß wird die Pumprichtung der Absaugpumpe zwischen Schritt a) und b) und zwischen Schritt b) und c) geändert.

Weiterhin ist es bevorzugt, wenn in Schritt b) der Abwasserbehälter bodennah mittels mindestens eines radial aus dem Spülkanal geführten Spülwasserstrahls gespült wird.

Erfindungsgemäß werden der Absaugkanal und der Spülkanal durch einen integralen Absaug- und Spülkanal gebildet und das Absaugen in Schritt a) und c) und das Spülen in Schritt b) erfolgt mittels der Absaugpumpe durch den Absaug- und Spülkanal.

Schließlich ist es bei dem erfindungsgemäßen Verfahren weiter bevorzugt, wenn in Schritt b) mit Spülwasser gespült wird und weiterhin umfassend den Schritt: Bereitstellen von Spülwasser aus einer Frischwasserquelle und Trennen des Systems aus Abwasserführung und Frischwasserquelle zur Vermeidung von Rückfluss von Abwasser zu der Frischwasserquelle.

Die Erfindung betrifft ferner eine Entsorgungsstation für ein Fahrzeug umfassend eine Absaugvorrichtung mit einer Förderpumpe, welche mit einem ersten Schlauchende eines Absaugschlauchs verbunden ist, und eine positionierbare, relativ zur Förderpumpe bewegbare Entsorgungsvorrichtung mit einem Auffangbecken und einer Absaugöffnung.

Entsorgungsstationen dieser Art werden zur Entsorgung von Fluiden wie Grauwasser, Schwarzwasser und Ähnlichem aus Fahrzeugen, insbesondere Lastkraftwagen oder Reisefahrzeugen wie Wohnmobilen oder Reisebussen verwendet. Derartige Fahrzeuge sind in der Regel mit einem innerhalb des Fahrzeugs angeordneten Abwassertank zur Aufnahme des Grauwassers, des Schwarzwassers und Ähnlichem ausgestattet. Der Abwassertank kann je nach Größe des Fahrzeugs ein Fassungsvermögen von bis zu 200 Litern aufweisen. Zur Entleerung des Abwassertanks mit großem Fassungsvermögen, und somit zur Entsorgung des darin enthaltenen Fluids, umfassen viele Fahrzeuge eine unterhalb des Fahrzeugs angebrachte Ablassöffnung.

Es war bisher üblich, diese Ablassöffnung für den Entsorgungsvorgang einfach über einem straßenbündig montierten Regenwasserablaufgitter, beispielsweise einem Gullieinlass, zu positionieren und im Anschluss die Ablassöffnung zu öffnen, beispielsweise mittels eines Ventils innerhalb des Fahrzeugs. Das Fluid innerhalb des Abwassertanks wurde dann mittels Schwerkraft in den Gully und von da aus in das öffentliche Abwassernetz geleitet.

Nachteilig ist hierbei, dass bei dieser Art der Entsorgung Beeinträchtigungen der Umgebung, insbesondere in Form von Spritzern und durch Entstehen von Gerüchen, auftreten, die Positionierung über dem Gully regelmäßig problematisch ist und aufwendige Rangierarbeiten des Fahrzeugs erfordert. Zudem kann das Regenablaufgitter durch Feststoffe oder Faserstoffe verschmutzen und dadurch verstopfen und es ist aus Gründen der Verschmutzung nicht wünschenswert, Abwasser aus derartigen mobilen Sanitäranlagen in einer derartig hohen Konzentration über ein Regenwasserablaufgitter in das öffentliche Abwassernetz einzuleiten.

Um den Entsorgungsvorgang zu verbessern, offenbart DE 10 2010 032 852 A1 eine Servicestation zur Entsorgung von Fäkalien und/oder Grauwasser aus Reisefahrzeugen, die ein nach oben offenes Aufnahmebecken und ein damit verbundenes Abführelement sowie ein Führungselement für ein freies Ende des Abführelements umfasst, wobei das freie Ende des Abführelements in Wirkverbindung mit einem Anschlusselement eines Abwassersammeltanks oder eines Kanals gebracht werden kann, und wobei das freie Ende des Abführelements relativ zum Anschlusselement um eine Achse schwenkbar gelagert ist. Zur Entsorgung wird das Fahrzeug hierbei zunächst grob in eine Entsorgungs-Parkposition gebracht. Im Anschluss wird das Auffangbecken unterhalb einer Ablassöffnung eines Fahrzeugabwassertanks positioniert, indem es in die entsprechende Entsorgungsposition geschwenkt wird. Die Ablassöffnung des Fahrzeugs wird dann geöffnet. Das im Fahrzeugabwassertank enthaltene Fluid läuft im freien Fall in das Aufnahmebecken und wird über das Abführelement und das Anschlusselement in den Abwassersammeltank oder Kanal geleitet.

Nachteilig an dieser Servicestation ist allerdings, dass die Position der Fahrzeugabwassertank und die Ablassöffnung nicht für jedes Fahrzeug gleich ist. Im Falle von Reisebussen beispielsweise kann die Ablassöffnung einerseits mittig auf der linken oder der rechten Seite des Fahrzeugs angeordnet sein, es gibt jedoch auch Ausführungen mit Anordnung der Ablassöffnung am Fahrzeugabwassertank im Heck des Fahrzeugs. In letzterem Fall ist die Positionierung der voranstehend beschriebenen Servicestation mit schwenkbarer Achse schwierig, da im Heckbereich die Reifen des Fahrzeugs den Schwenkvorgang stören oder sogar verhindern können.

DE 20 2015 103 442 U1 offenbart eine frei positionierbare Entsorgungsvorrichtung für ein Fahrzeug zur Entsorgung von Grauwasser und/oder Schwarzwasser umfassend ein Auffangbecken mit einer oberen Beckenöffnung und einer Ablauföffnung sowie eine Abführleitung mit einem ersten Leitungsende, das mit der Ablauföffnung verbunden ist, und einem zweiten Leitungsende, wobei die Entsorgungsvorrichtung eine Positioniervorrichtung aufweist, die eingerichtet ist, das Auffangbecken von einer Nichtbetriebsposition in eine Betriebsposition frei zu bewegen. Die Positioniervorrichtung weist einen fest angeschlossenen Absaugschlauch auf, der fest mit der Abführleitung der Entsorgungsvorrichtung verbunden ist. Die Abführleitung ist im Wesentlichen waagrecht oder nach unten geneigt unterhalb des Auffangbeckens ausgebildet, um ein Ablassen des Grauwassers und/oder Schwarzwassers aus dem Auffangbecken vorzugsweise schwerkraftsbedingt zu ermöglichen.

Nachteilig an dieser Ausführungsform ist es, dass der an der Positioniervorrichtung fest angeschlossene Schlauch schwierig bzw. aufwendig zu handhaben ist und eine lösbare Verbindung mit dem Absaugschlauch nicht möglich ist, da nicht abgelaufenes oder abgesaugtes Grauwasser und/oder Schwarzwasser durch ein Lösen der Verbindung auf den Boden tropfen würde. Ferner kann die Positioniervorrichtung nicht gegen Diebstahl gesichert oder frostsicher in einem kompakten Gehäuse und ohne eine Art Garage untergebracht werden. Es kann auch nicht verhindert werden, dass Abfälle in die Öffnung der Positioniervorrichtung eingeworfen werden oder Fäkalien durch eine falsche Positionierung neben die Beckenöffnung des Auffangbeckens abgeladen werden. Nachteilig ist auch, dass die Tiefe des Auffangbeckens durch die Abführleitung begrenzt ist. Ferner kann die unter dem Auffangbecken angeordnete Abführleitung nicht vollständig entleert werden, wodurch Frostgefahr entsteht und Gerüche entstehen können.

Ferner weisen immer mehr Abwassertanks von Fahrzeugen einen festverbauten Absaugstutzen auf, der eine Anschlussmöglichkeit für einen Absaugschlauch darstellt und Absaugen von Grauwasser und/oder Schwarzwasser aus dem Abwassertank ermöglicht. Der Absaugstutzen ist oft anstelle eines Ablassstutzens ausgebildet, so dass ein schwerkraftbedingtes Ablassen oftmals nicht möglich ist. Aufgrund dieser Entwicklung der Ausgestaltung der Fahrzeugabwassertanks muss zunehmend zusätzlich zu der Entsorgungsvorrichtung mit Positioniervorrichtung eine weitere Vorrichtung, welche ausgebildet ist, Grauwasser und/oder Schwarzwasser aus dem Fahrzeugabwassertank direkt abzusaugen, an einer Entsorgungsstelle installiert werden.

Es ist daher Aufgabe der vorliegenden Erfindung, eine Entsorgungsstation bereitzustellen, die eine Bedienung ohne Fremdpersonal ermöglicht und dabei eine komfortable Entsorgung des Grauwassers und/oder des Schwarzwassers aus sanitären Anlagen von Fahrzeugen gewährleistet. Ferner ist es Aufgabe der Erfindung eine kompakte und flexibel einsetzbare Entsorgungsstation bereitzustellen, die sowohl Ablassen als auch Absaugen des Grauwassers und/oder des Schwarzwassers aus einem Abwassertank eines Fahrzeugs ermöglicht.

Diese Aufgabe wird erfindungsgemäß durch eine Entsorgungsstation der eingangs genannten Art mit den Merkmalen von Anspruch 11 gelöst. Demnach umfasst die Entsorgungsstation eine Absaugvorrichtung nach einer der zuvor ausgeführten Ausführungsformen, mit einer Förderpumpe, welche einlassseitig mit einem ersten Schlauchende eines Absaugschlauchs verbunden ist,.

Diese Ausgestaltung ermöglicht die Absaugung des Abwassers aus einem Abwassertank insbesondere mittels des von oben in den Abwassertank eingesetzten Absaugkanals der Absaugvorrichtung.

Um auch oder nur mittels der Entsorgungsvorrichtung aus einem Abwassertank abgelassenes Wasser auffangen zu können, kann zusätzlich oder alternativ, eine positionierbare, relativ zur Förderpumpe bewegbare Entsorgungsvorrichtung mit einem Auffangbecken und einer Absaugöffnung vorgesehen sein. Das erfindungsgemäße Auffangbecken weist einen oberen Rand, eine sich von dem oberen Rand zu einem unteren Boden des Auffangbeckens erstreckende Beckenwandung und eine Abführeinheit an der Entsorgungsstation vorhanden ist. Ferner ist die erfindungsgemäße Absaugöffnung mittels einer Abführleitung mit der Abführeinheit des Auffangbeckens verbunden. Erfindungsgemäß ist die Absaugöffnung in Schwerkraftrichtung oberhalb des oberen Randes des Auffangbeckens angeordnet. Ein zweites Schlauchende des Absaugschlauchs, welches ein erstes Kupplungsteil aufweist, ist erfindungsgemäß mit einem zweiten Kupplungsteil, an der Absaugöffnung ausgebildet ist, lösbar koppelbar. Dabei kann die Absaugung des Abwassers aus dem Auffangbecken vorzugsweise mit einer Absaugvorrichtung nach einer der zuvor ausgeführten Ausführungsformen vorgesehen sein.

Der Erfindung liegt der Gedanke zu Grunde eine Entsorgungsstation zur Entsorgung von Fluiden wie Grauwasser, Schwarzwasser und Ähnlichem aus Fahrzeugen, insbesondere Lastkraftwagen oder Reisefahrzeugen wie beispielsweise Wohnmobilen, Camper oder Reisebussen bereitzustellen, die sowohl die positionierbare Entsorgungsvorrichtung für Abwassertanks mit einem Ablassstutzen als auch die Absaugvorrichtung für Abwassertanks mit einem Absaugstutzen umfasst und hierdurch höchstmögliche Flexibilität bei einer Einsatzmöglichkeit gewährleistet. Ferner soll die erfindungsgemäße Entsorgungsstation mit nur einer Antriebseinheit betreibbar sein. Aus diesem Grund ist der Absaugschlauch erfindungsgemäß lösbar koppelbar ausgestaltet.

Unter einer positionierbaren, relativ zur Förderpumpe bewegbaren Entsorgungsvorrichtung kann hierbei eine Einheit mit dem Auffangbecken verstanden werden, welche mit einem Griff und zumindest einer Rolle, vorzugsweise einer Lenkrolle, ausgestattet ist, um auf der Reifenaufstandsfläche des Fahrzeugs verfahrbar und dadurch von einer Nicht-Betriebsposition in eine Betriebsposition bewegbar zu sein, ohne hierbei die Förderpumpe selbst zu bewegen. Die Einheit der positionierbaren, relativ zur Förderpumpe bewegbaren Entsorgungsvorrichtung ist vorzugsweise als Gestell mit den Lenkrollen ausgeführt, sodass diese einem Wagen ähnelt. Besonders bevorzugt sind die Lenkrollen um eine Achse, welche parallel zu einer Schwerkraftsrichtung verläuft, schwenkbar gelagert. Hierdurch kann eine Verfahrbarkeit in alle Richtungen gewährleistet werden. Die Lenkrolle weist vorzugsweise eine Fixiervorrichtung auf, die besonders bevorzugt als Total-Stopper für die Lenkrolle ausgebildet sein kann. Die Fixiervorrichtung kann ausgebildet sein, um die positionierbare Entsorgungsvorrichtung in einer Position vorzugsweise in einer Betriebsposition zu fixieren. Weiter bevorzugt weist die Einheit einen Bügel, der sich entlang einer vertikalen Ebene erstreckt, auf und kann hierbei mit dem Griff versehen sein. Dieser Griff ermöglicht ein vereinfachtes Positionieren der Einheit. Hierdurch kann die Einheit vereinfacht auf der Reifenaufstandsfläche des Fahrzeugs verfahren werden. Ferner kann der Boden des Auffangbeckens relativ zu einer horizontalen Ebene nach unten geneigt, insbesondere im Bereich der Abführeinheit, ausgeführt sein und kann mehrere Leitflächen aufweisen, die zu dem Bereich der Abführeinheit hin ebenfalls relativ zu einer horizontalten Ebene nach unten geneigt ausgebildet sein können, so dass der Boden eine Art "Leitkanal" für das Fluid in Richtung der Abführeinheit darstellt. Die Abführeinheit kann bevorzugt am tiefsten Punkt des Bodens angeordnet sein. Das Auffangbecken kann hierbei höhenverstellbar ausgebildet sein.

Das Auffangbecken weist erfindungsgemäß die Abführeinheit auf, welche ausgebildet ist, um Abwasser in Form von Grauwasser, Schwarzwasser und/oder Ähnlichem aus dem Auffangbecken über die Abführleitung zur Absaugöffnung abzuführen. Eine derartige Abführeinheit kann eine beliebig ausgestaltete aber zweckmäßige Vorrichtung sein, die ausgebildet ist, um Abwasser entweder aktiv durch einen Abtransportiervorgang beispielsweise durch absaugen oder abpumpen oder passiv mittels Schwerkraft aus dem Auffangbecken abzuleiten. Diese Vorrichtung kann beispielsweise als eine Pumpe, eine Absaugvorrichtung oder auch als eine nach unten in Schwerkraftrichtung ausgebildete Ablauföffnung ausgebildet sein. Die Abführleitung kann als Schlauch aus Edelstahl oder Kunststoff oder alternativ als teleskopierbares Rohr ausgeführt sein.

Die erfindungsgemäße Abführleitung der Entsorgungsvorrichtung ist so ausgestaltet, dass die Absaugöffnung mindestens über einer Höhe des oberen Randes des Auffangbeckens bevorzugt auf Kniehöhe eines Bedieners zwischen 300 und 800 mm über einer Reifenaufstandsfläche des Fahrzeugs besonders bevorzugt 500 mm über der Reifenaufstandsfläche des Fahrzeugs angeordnet und vorzugsweise nach oben gerichtet ausgebildet ist. Aufgrund der Höhe und der Ausrichtung der Absaugöffnung kann nicht abgesaugtes Grauwasser und/oder Schwarzwasser nicht auf die Reifenaufstandsfläche des Fahrzeugs gelangen.

Unter der Betriebsposition der Entsorgungsstation ist eine Position zu verstehen, in welche alle für einen Entsorgungsvorgang notwendigen Bestandteile der Entsorgungsstation gebracht werden müssen, um den Entsorgungsvorgang und somit einen Absaugvorgang starten zu können. In dieser Position befindet sich das Fahrzeug in einer Entsorgungs-Parkposition. Weist der Abwassertank des Fahrzeugs den Ablassstutzen auf, so ist in der Betriebsposition die Entsorgungsvorrichtung so zu positionieren, auszurichten und mit der Fixiervorrichtung der Lenkrolle zu fixieren, dass das Auffangbecken unterhalb der Ablassöffnung angeordnet ist. Dadurch kann das aus dem Ablassstutzen austretende Abwasser in Schwerkraftrichtung durch eine Auffangbeckenöffnung in einen Innenraum des Auffangbeckens einströmen. Ferner muss der Absaugschlauch an der Absaugöffnung angeschlossen werden, um das Grauwasser und/oder Schwarzwasser vorzugsweise kontinuierlich über die Abführleitung mittels der im Auffangbecken angeordneten Abführeinheit herausführen zu können. Weist der Abwassertank des Fahrzeugs jedoch anstelle des Ablassstutzens den Absaugstutzen auf, so ist in der Betriebsposition lediglich der Absaugschlauch an den Absaugstutzen anzuschließen, um das Abwasser direkt aus dem Abwassertank des Fahrzeugs herausführen zu können. Damit beschreibt die Betriebsposition die Position der Bestandteile der Entsorgungsstation, in der die Entsorgungsstation in Betrieb genommen werden kann, wobei unter in Betrieb nehmen und somit unter einem Betriebszustand hierbei zu verstehen ist, dass die Förderpumpe, welche mit dem Absaugschlauch in Verbindung steht, aktiviert ist, um das Fluid aus dem Abwassertank des Fahrzeugs durch die Entsorgungsstation abführen zu können.

Unter der Nicht-Betriebsposition ist somit eine Position zu verstehen, in welcher ein erfindungsgemäßer Absaugvorgang durch die Absaugvorrichtung nicht durchführbar und nicht wünschenswert ist. In dieser Position ist die Entsorgungsvorrichtung nicht positioniert und unter dem Ablassstutzen des Abwassertanks ausgerichtet und/oder der Absaugschlauch ist nicht an der Absaugöffnung oder dem Absaugstutzen des Abwassertanks angeschlossen. In der Nicht-Betriebsposition kann der Absaugschlauch in einer Lagerstellung vorzugsweise mit einer ersten Aufnahmeeinheit verbunden sein, die den Absaugschlauch an der Entsorgungsstation befestigt. Damit beschreibt die Nicht-Betriebsposition die Position eines, mehrerer, sämtlicher oder aller notwendiger Bestandteile der Entsorgungsstation, in der die Entsorgungsstation nicht in Betrieb genommen werden kann. Dementsprechend ist unter einem Nicht-Betriebszustand ein Zustand der Entsorgungsvorrichtung zu verstehen, indem ein, mehrere, sämtliche oder alle Bestandteile der Entsorgungsstation sich in der Nicht-Betriebsposition befinden und die Förderpumpe deswegen nicht in Betrieb genommen ist oder werden kann.

Erfindungsgemäß ist die Absaugvorrichtung, welche eine Förderpumpe und einen Absaugschlauch umfasst, vorgesehen, um Grauwasser und/oder Schwarzwasser entweder aus der positionierbaren Entsorgungsvorrichtung oder aus dem Abwassertank des Fahrzeugs selbst abzusaugen. Einlassseitig ist das erste Schlauchende des Absaugschlauchs erfindungsgemäß mit der Förderpumpe verbunden. Die Förderpumpe hat sich als besonders vorteilhaft erwiesen, um eine effiziente Entsorgung des Grauwassers und/oder des Schwarzwassers zu ermöglichen, insbesondere wenn eine Aufnahme beispielsweise in Form eines Abwassersammeltanks für das aus dem Abwassertank des Fahrzeugs hinausgeführte Fluid leicht erhöht angeordnet ist, also in Schwerkraftrichtung oberhalb der Auffangbeckens ausgebildet ist. In diesen Fällen ist das Hineinleiten allein durch Schwerkrafteinwirkung nicht mehr möglich. Erfindungsgemäß wird die Förderpumpe während des Entsorgungsvorgangs aktiviert, um so das Fluid aus dem Auffangbecken oder aus dem Abwassertank des Fahrzeugs abzuleiten. Durch ein Entstehen eines Sogs kann bei dem Absaugvorgang über die Entsorgungsvorrichtung verhindert werden, dass Spritzer aus dem Auffangbecken hinaus geraten und Gerüche entstehen.

Gemäß einer ersten bevorzugten Ausführungsform ist die Abführeinheit als ein Absaugstutzen ausgebildet, welcher in dem Auffangbecken insbesondere im Bereich des unteren Bodens angeordnet ist und den Absaugstutzen umfasst. Durch diese Ausführungsform kann das Abwasser direkt aus dem Auffangbecken abgesaugt werden, ohne dass größere Rückstände in dem Auffangbecken oder in der Abführleitung zurückbleiben. Durch das Vermeiden derartiger Rückstände kann eine Geruchsentstehung und eine Frostgefahr verhindert werden. Alternativ kann das Auffangbecken eine nach unten in Schwerkraftrichtung ausgebildete Ablauföffnung, vorzugsweise an dem relativ zu einer horizontalen Ebene nach unten geneigten Boden des Auffangbeckens aufweisen. Die Ablauföffnung kann über die Abführleitung mit der Absaugöffnung verbunden sein. Eine derartige Ablauföffnung ermöglicht ein schwerkraftbedingtes Ablassen des Abwassers aus dem Auffangbecken. Die Verbindung zwischen dem Auffangbecken, und der Ablauföffnung, der der Ablauföffnung und der Abführleitung sowie der Absaugleitung und der Absaugöffnung können hierbei bevorzugt dichtend ausgestaltet sein, beispielsweise durch eine Dichtung mit entsprechenden Dichtungsringen.

Gemäß einer weiter bevorzugten Ausführungsform umfasst die Entsorgungsstation eine Abwasserableitung, die mit einem Tank zur Aufnahme eines Fluids, welches durch den Absaugschlauch ableitbar ist, und/oder einem Kanalisationsanschluss verbindbar ist. Hierbei ist die Förderpumpe auslassseitig über eine Anschlussmöglichkeit mit der Abwasserableitung verbunden. Durch diese Ausgestaltung ist die Förderpumpe über die Abwasserableitung mit dem Tank, der vorzugsweise als Abwassersammeltank ausgestaltet ist, und/oder dem Kanalisationsanschluss verbunden, um abgesaugtes Abwasser und/oder Fäkalien in der Kanalisation oder dem Tank zu entsorgen.

Gemäß einer weiteren bevorzugten Ausführungsform umfasst die Entsorgungsstation ein Gehäuse, welches einen Bestandteil, mehrere oder sämtliche Bestandteile der Entsorgungsstation umschließt und eine Isolierschicht aufweist und/oder eine Heizvorrichtung umfasst. Eine Isolierung kann z.B. als eine selbstklebende Schaumstoffmatte aufgebracht oder ein Schaum aufgesprüht werden, alternativ oder zusätzlich können die gro-βen Gehäusewände oder das gesamte gehäuse aus einem Sandwichmaterial gefertigt sein.

Ein derartiges Gehäuse kann als eine Konsole ausgebildet sein. Dadurch kann die Entsorgungsstation in Form einer Zapfsäule ausgebildet sein und kann beispielsweise an Tankstellen neben einer herkömmlichen Zapfsäule oder an Parkplätzen, Busbetriebshöfen, Reisebusbahnhöfen, Campingplätzen oder Ähnlichem aufgestellt werden. Die Entsorgungsstation mit einem derartigen Gehäuse weist eine kompakte Bauform auf und ist vor Witterung und/oder Vandalismus geschützt.

Die Heizvorrichtung innerhalb des Gehäuses ermöglicht einen Betrieb der Entsorgungsstation auch bei frostigen Temperaturen ohne Weiteres - insbesondere ohne Störungen oder Wartezeiten -, da die Heizvorrichtung ein Einfrieren von Fluiden jeglicher Art verhindern kann. Weiterhin kann durch das Beheizen des Auffangbeckens, der Absaugvorrichtung und Leitungen jeglicher Art verhindert werden, dass die dort hineingeleiteten Fluide, insbesondere Wasser, während der Leitung hinunter kühlen, einfrieren und die Leitungen oder das Auffangbecken verstopfen oder gegebenenfalls zerstören. Es ist bevorzugt, dass die Heizvorrichtung einen Temperaturfühler aufweist, um eine Temperatur zu messen und mit einem zuvor eingestellten Sollwert zu vergleichen. Die Heizvorrichtung wird hierbei so gesteuert, dass sie durch Aktivierung und Deaktivierung die Temperatur in der Umgebung des Temperaturfühlers auf dem Sollwert hält. Dabei kann die Heizvorrichtung auch derart ausgestaltet sein, dass sie ein Kühlen ermöglicht. Vorzugsweise kann ein zweiter Temperaturfühler außen an der Entsorgungsstation angebracht sein.

Durch die isolierende Ausgestaltung des Gehäuses und die Beheizbarkeit können Umgebungstemperaturen von -20 °C bis +55 °C ausgeglichen werden und eine im Wesentlichen konstante Temperatur im Inneren der Entsorgungsstation gewährleistet werden. Auf diese Weise kann verhindert werden, dass der Inhalt des Abwassertanks sich beispielsweise aufgrund von Sonneneinstrahlung aufheizt und hierdurch ein Geruch verstärkt wird. Insbesondere ist bevorzugt, dass das erste Kupplungsteil des zweiten Schlauchendes wahlweise mit dem zweiten Kupplungsteil, das um die Absaugöffnung angeordnet ist, oder mit einem dritten Kupplungsteil, das um einen Absaugstutzen eines Abwassertanks des Fahrzeugs angeordnet ist, lösbar koppelbar ist. Dadurch bietet die Entsorgungsstation den Vorteil einer erhöhten Flexibilität, da das Grauwasser und/oder Schwarzwasser des Abwassertanks des Fahrzeugs sowohl abgelassen als auch direkt abgesaugt werden kann. Es spielt demnach keine Rolle, ob der Abwassertank einen Ablassstutzen oder einen Absaugstutzen aufweist, da das zweite Schlauchende des Absaugschlauchs sowohl mit der Absaugöffnung der positionierbaren Entsorgungsvorrichtung als auch mit dem Absaugstutzen des Fahrzeugabwassertanks lösbar verbindbar ist. Hierdurch kann der Absaugschlauch erfindungsgemäß alleinstehend oder in Kombination mit der positionierbaren Entsorgungsvorrichtung verwendet werden. Die Entsorgungsstation weist ferner einen hohen hygienischen und ästhetischen Standard auf, vermeidet Spritzer oder unhygienische bzw. unangenehme Gerüche und Anblicke.

Das erste Kupplungsteil ist hierbei vorzugsweise als Kupplungselement ausgebildet. Ferner ist das zweite Kupplungsteil ein korrespondierendes Kupplungsteil, das vorzugsweise als erste Kupplungsaufnahme ausgebildet ist. Der Absaugstutzen des Fahrzeugs ist gleichermaßen wie das zweite Kupplungsteil ein korrespondierendes drittes Kupplungsteil, vorzugsweise eine zweite Kupplungsaufnahme, wobei das zweite Kupplungsteil und das dritte Kupplungsteil mit dem ersten Kupplungsteil lösbar in Eingriff bringbar sind. Die Kupplungsaufnahmen weisen jeweils eine Einstecköffnung für die korrespondierenden Kupplungselemente auf. Eine Kupplung bestehend aus derartigen Kupplungselementen und Kupplungsaufnahmen wird zur flexiblen Nutzung des Absaugschlauchs eingesetzt. Derartige Kupplungen sind erfindungsgemäß trennbar gestaltet, um ein rationelles, schnelles sowie zuverlässiges Anschließen und Lösen der Kupplungsteile zu ermöglichen.

Vorzugsweise ist die Kupplung als eine Camlock-Kupplung bestehend aus einem Vaterteil, dem Kupplungselement, und einem Mutterteil, der Kupplungsaufnahme, ausgebildet. Alternativ dazu können auch Stecknippel-Verbindungen oder Bajonett-Verschlüsse vorgesehen sein. Das zweite und das dritte Kupplungsteil sind hierbei identisch ausgebildet, um den Anschluss an das erste Kupplungsteil zu ermöglichen. Durch diese Ausgestaltung kann der Absaugschlauch sowohl an der Absaugöffnung der Entsorgungsvorrichtung als auch an dem Absaugstutzen des Abwassertanks des Fahrzeugs lösbar angeschlossen werden.

In einer weiter bevorzugten Ausführungsform ist die Förderpumpe, die mit dem ersten Schlauchende des Absaugschlauchs verbunden ist, als eine Drehkolbenpumpe ausgebildet.

Besonders bevorzugt ist es, wenn die Entsorgungsstation den Abwassersammeltank zur Aufnahme des Fluids, welches durch die Absaugleitung abgesaugt wurde, umfasst. Die Entsorgungsstation kann hierbei stationär aber auch mobil, ohne auf Vorteile einer stationären Entsorgungsstation verzichten zu müssen, ausgestaltet sein. Unabhängig davon, ob die Entsorgungsstation stationär oder mobil ausgebildet ist, ist der Abwassersammeltank zur Aufnahme des Fluids aus dem Abwassertank des Fahrzeugs mit einem derartig großen Füllvermögen vorgesehen, so dass das gesamte Füllvolumen des Fahrzeugabwassertanks in den Abwassersammeltank abgesaugt werden kann. Besonders bevorzugt weist ein derartiger Abwassersammeltank ein Füllvolumen von mindestens 2000 Litern auf. Der Abwassersammeltank kann hierbei unterirdisch angeordnet sein, damit das Fluid einfach mittels Schwerkraft in den Abwassersammeltank geleitet werden kann. Alternativ dazu kann der Abwassersammeltank jedoch auch überirdisch, insbesondere an einer erhöhten Position im Verhältnis zu dem Auffangbecken angeordnet sein. In diesem Fall leitet die Förderpumpe, insbesondere die Drehkolbenpumpe das Fluid in den Abwassersammeltank. In dieser Konfiguration kann die Drehkolbenpumpe auslasseitig über die Abwasserableitung mit dem Abwassersammeltank verbunden werden und einen Unterdruck innerhalb des Abwassersammeltanks aufbauen. Durch den im Abwassersammeltank erzeugten Unterdruck kann das Fluid aus dem Auffangbecken in den Abwassersammeltank gesogen werden. Der Abwassersammeltank kann hierbei austauschbar und/oder entleerbar, besonders bevorzugt mit einer Kanalisation verbunden und automatisch entleerbar ausgestaltet sein.

Insbesondere bevorzugt ist in der Entsorgungsstation eine erste Einhausung zur Aufnahme der Entsorgungsvorrichtung ausgebildet, in der mindestens Abschnitte der Entsorgungsvorrichtung in einer Parkposition der Entsorgungsvorrichtung entnehmbar gelagert sind. Durch diese Ausgestaltung kann die positionierbare Entsorgungsvorrichtung in dem Nicht-Betriebszustand in die Entsorgungsstation eingeschoben und damit in die Parkposition gebracht werden. Die Parkposition beschreibt die Position der Entsorgungsvorrichtung, in der sich sämtliche Abschnitte der Entsorgungsstation in der ersten Einhausung befinden. Bevorzugt kann hierdurch das Auffangbecken verschlossen werden. Das Einschieben der Entsorgungsvorrichtung in die erste Einhausung ermöglicht eine Sicherung gegen Diebstahl und Vandalismus sowie einen Schutz vor Witterungsbedingungen. Ferner kann verhindert werden, dass Fäkalien und/oder Abwasser im Nicht-Betriebszustand in das Auffangbecken eingeführt werden oder, dass das Auffangbecken missbräuchlich als Mülleimer verwendet wird. Gemäß dieser Ausgestaltung weist die Entsorgungsstation eine kompakte, platzsparende Bauform auf.

Besonders bevorzugt ist es, wenn die Entsorgungsstation eine erste Aufnahmeeinheit zur Aufnahme des ersten Kupplungsteils in einer Lagerstellung umfasst, in welcher das erste Kupplungsteil in Schwerkraftrichtung oberhalb der Förderpumpe angeordnet ist und in welcher das erste Kupplungsteil vertikal oberhalb des Auffangbeckens angeordnet ist, wenn die Entsorgungsvorrichtung in der Parkposition ist. Die erste Aufnahmeeinheit kann hierbei in der ersten Einhausung ausgebildet sein. Durch eine derartige Hochlagerung des ersten Kupplungsteils und damit eines Schlauchendes des Absaugschlauchs in der Lagerstellung kann verhindern, dass nicht abgesaugtes Abwasser auf die Reifenaufstandsfläche oder in die erste Einhausung tropft.

Weiter bevorzugt ist es, wenn die Entsorgungsvorrichtung unterhalb der Absaugvorrichtung vorzugsweise im Bereich der Reifenaufstandsfläche des Fahrzeugs gelagert ist. Dadurch wird ein einfaches Ein- und Ausschieben der positionierbaren Entsorgungsvorrichtung, die bevorzugt wie ein Wagen ausgebildet ist, auf der Reifenaufstandsfläche des Fahrzeugs ermöglicht. Für das Positionieren der Entsorgungsvorrichtung ist daher weder Fremdpersonal noch ein großer Krafteinsatz nötig.

Weiter bevorzugt ist es, wenn die Entsorgungsvorrichtung in der Parkposition in der ersten Einhausung mit einem elektrisch oder mechanisch lösbaren ersten Riegel gesichert ist. Durch das Sichern der Entsorgungsvorrichtung in der Parkposition kann ein missbräuchliches Herausziehen der Entsorgungsvorrichtung aus der Entsorgungsstation verhindert werden. Besonders bevorzugt kann der Riegel mit der Entsorgungsstation, insbesondere mit der Förderpumpe, signaltechnisch gekoppelt sein. Dadurch kann ein Entriegeln nur durch eine Inbetriebnahme der Entsorgungsstation und insbesondere durch die Aktivierung der Förderpumpe ermöglicht werden. Der Riegel kann in Form eines Sicherungsbügels an dem Ende der Entsorgungsvorrichtung angebracht werden, das zuerst in die erste Einhausung einschiebbar ist und demnach gegenüber der Absaugöffnung und des Griffes liegt. Der Sicherungsbügel ist besonders bevorzugt an der äußeren Beckenwandung des Auffangbeckens und in horizontaler Richtung mittig ausgebildet.

Gemäß einer weiter bevorzugten Ausführungsform ist die Entsorgungsstation als Versorgungstation ausgebildet und umfasst einen aus einer Speicherstellung in eine Versorgungsstellung ausziehbaren Brauchwasserschlauch und/oder eine aus einer Speicherstellung in eine Versorgungstellung ausziehbaren Frischwasserschlauch. Durch diese Ausführungsform kann es einem Bediener ermöglicht werden auf eine Brauchwasserversorgung und/oder eine Frischwasserversorgung zugreifen zu können.

Die Speicherstellung beschreibt eine Stellung des Brauchwasserschlauchs bzw. des Frischwasserschlauchs in der Nicht-Betriebsposition in der ein wesentlicher Teil des jeweiligen Schlauchs im Inneren der Entsorgungsstation angeordnet ist und nur ein Schlauchende aus einer jeweiligen Aufnahmeöffnung vorsteht. Durch derartige Aufnahmeöffnungen können Schläuche aus dem Inneren der Entsorgungsstation hindurchgeführt werden, um einem Bediener einen Zugriff auf den jeweiligen Schlauch von außen zu ermöglichen. Ferner können derartige Aufnahmeöffnungen so ausgestaltet sein, dass ein Zurückrutschen der Schläuche in das Innere der Entsorgungsstation verhindert werden kann. In der Speicherstellung können der Frischwasserschlauch bzw. der Brauchwasserschlauch bevorzugt mit jeweils einer Aufnahmeeinheit verbunden sein, die den jeweiligen Schlauch an der Entsorgungsstation befestigt. Die Aufnahmeeinheit kann hierbei ein Kupplungsteil aufweisen, welches vorzugsweise korrespondierend zu dem jeweiligen Kupplungsteil des Schlauches ausgestaltet ist. Alternativ dazu können Schläuche auch lose aus der jeweiligen Aufnahmeöffnung hervorstehen. Dementsprechend ist unter einer Versorgungsstellung eine Stellung des Brauchwasserschlauchs bzw. des Frischwasserschlauchs in der Betriebsposition zu verstehen, in der ein wesentlicher Teil des jeweiligen Schlauchs durch die jeweilige Aufnahmeöffnung aus dem Inneren der Entsorgungsstation ausgezogen ist.

Ist die Entsorgungsstation eine mobile Entsorgungsstation kann ein Brauchwassertank vorgesehen sein, welcher mit dem Brauchwasserschlauch verbunden ist, um eine Brauchwasserversorgung und somit beispielsweise das Auffüllen eines Brauchwassertanks am Fahrzeug zu ermöglichen. Analog dazu kann ein Frischwassertank vorgesehen sein, welcher mit dem Frischwasserschlauch verbunden ist, um eine Frischwasserversorgung und somit beispielsweise das Auffüllen eines Frischwassertanks am Fahrzeug zu ermöglichen. Der Brauchwassertank und der Frischwassertank können hierbei an der Entsorgungsstation angeordnet werden. Der Brauchwassertank und der Frischwassertank können bevorzugt innerhalb der Konsole untergebracht sein. Der Brauchwassertank und der Frischwassertank können beispielsweise wiederauffüllbar sein oder aber auch an eine Brauchwasserversorgungsleitung bzw. einer Frischwasserversorgungsleitung angeschlossen sein, um kontinuierlich Brauchwasser und/oder Frischwasser bereit zu stellen.

Unter Frischwasser kann bevorzugt Trinkwasser verstanden werden. Hierbei kann die Entsorgungsstation an ein Trinkwassernetz angeschlossen sein und die Frischwasserversorgung durch einen Systemdruck des Trinkwassernetzes gewährleisten.

In einer weiterbevorzugten Ausführungsform weist ein Anschluss des Frischwasserschlauchs an die Frischwasserversorgung und/oder ein Anschluss des Brauchwasserschlauchs an die Brauchwasserversorgung je eine Messeinrichtung zur Messung der ausgegebenen Menge des Frischwassers bzw. des Brauchwassers auf. Diese Messungen können dann zur Berechnung von etwaigen Kosten verrechnet werden, die für den Nutzer für das Nachfüllen eines Frischwassertanks bzw. des Brauchwassertanks am Fahrzeug anfallen. Derartige Messeinrichtungen können als Wasserzähler ausgebildet sein.

In einer bevorzugten Weiterentwicklung kann der Frischwasserschlauch in regelmäßigen Intervallen, insbesondere dann, wenn der Frischwasserschlauch zwei oder drei Tage nicht verwendet wurde, automatisch gespült werden, um einen Hygienestandard zu gewährleisten. In dieser bevorzugten Weiterbildung kann die Aufnahmeeinheit zur Befestigung des Frischwasserschlauchs an der Entsorgungsstation mit einem Frischwasserspülschlauch verbunden sein, der auslassseitig mit einem dafür vorgesehenen Tank in Form eines Auffangbehälters für zu entsorgendes Frischwasser verbunden sein. Ferner können im Innenraum der Entsorgungsstation, dem Anschluss an das Trinkwassernetz nachgelagert, eine erste Absperrarmatur mit einem ersten Ventil und dem nachgelagert eine zweite Absperrarmatur mit einem zweiten Ventil ausgebildet sein. Die erste Absperrarmatur mit dem ersten Ventil kann hierbei auslassseitig mit einer ersten Frischwasserableitung verbunden sein. Die erste Frischwasserableitung, die einlassseitig über die erste Absperrarmatur und das erste Ventil mit einer Frischwasserversorgungsleitung verbunden ist, kann auslassseitig mit einem Systemtrenner verbunden sein. Die zweite Absperrarmatur mit dem zweiten Ventil kann hierbei auslassseitig mit einer zweiten Frischwasserableitung verbunden sein. Die zweite Frischwasserableitung, die einlassseitig über die zweite Absperrarmatur und das zweite Ventil mit der Frischwasserversorgungsleitung verbunden ist, kann auslassseitig mit dem Auffangbehälter verbunden sein. Die Frischwasserversorgungsleitung beschreibt hierbei die Leitung die mit dem Frischwassertank und/oder dem Trinkwassernetz verbunden ist. Der Auffangbehälter kann besonders bevorzugt mit einem Schwimmschalter ausgestattet sein.

Vorzugsweise kann die Brauchwasserversorgung über den Systemtrenner, insbesondere bevorzugt der Kategorie 5 bzw. AA, erfolgen, der besonders bevorzugt mit einer Tauchpumpe ausgestattet sein kann. Der Systemtrenner kann einlassseitig mit der ersten Frischwasserableitung verbunden sein und kann verhindern, dass Nicht-Frischwasser, das in den Systemtrenner geleitet wird in die Frischwasserversorgung aufgrund Druckveränderungen zurückfließen kann und Keime in das Frischwassernetz gelangen können. Der Systemtrenner kann weiter über eine Leitung mit dem Auffangbehälter verbunden sein, um nicht zu verwendendes Wasser in den Auffangbehälter zu leiten.

In einer bevorzugten Ausführungsform ist der Auffangbehälter auslassseitig über eine Ableitung, die eine weitere Absperrarmatur aufweist, mit der Förderpumpe verbunden, um das in dem Auffangbehälter gesammelte Wasser gemeinsam mit dem aus dem Fahrzeug abgeleiteten Abwasser bzw. zumindest über die selbe Abwasserableitung zu entsorgen. Die Absperrarmatur, die nur geöffnet wird, wenn Wasser aus dem Auffangbehälter abzuleiten ist, kann verhindern, dass Bestandteile des Abwassers in den Auffangbehälter gelangen.

In einer bevorzugten Weiterbildung kann die Entsorgungsstation weiterhin eine Spülvorrichtung umfassen. Vorzugsweise kann die Spülvorrichtung mit dem Brauchwasserschlauch verbindbar oder aus dem Brauchwasserschlauch ausgebildet sein. Die Spülvorrichtung kann hierbei ausgebildet sein, um das Auffangbecken der positionierbaren Entsorgungsvorrichtung zu spülen. Dazu kann das Auffangbecken eine Einlassöffnung umfassen, die mittels einer Spülwasserleitung, vorzugsweise in Form eines Schlauchs, mit der Spülvorrichtung verbunden ist. Über die Spülwasserleitung kann durch die Einlassöffnung Spülwasser in das Auffangbecken geleitet werden. Durch ein vorzugsweise kontinuierliches Spülen des Auffangbeckens kann dieses gereinigt werden. Insbesondere kann diese Spülwasserleitung mit einem hohen Überdruck und solcherart gerichtet erfolgen, dass hierdurch ein Unterdruck im Auffangbecken erzeugt und somit eine Absaugwirkung erreicht wird. Dies kann der Entstehung und Verbreitung unangenehmer Gerüche entgegenwirken und zudem eine zuverlässige Abfuhr des Grauwassers und/oder Abwassers aus dem Auffangbecken erzielen und verstärken. Alternativ dazu kann der Brauchwasserschlauch zum manuellen Spülen einer Toilettenschüssel des Fahrzeugs während des Absaugvorgangs verwendet werden. Hierdurch kann eine nachfolgende Spülung des Auffangbeckens an sich gegebenenfalls unnötig sein.

Insbesondere bevorzugt ist, dass in der Entsorgungsstation eine zweite Einhausung bereitgestellt ist, die zur Aufnahme des Absaugschlauchs und gegebenenfalls des Brauchwasserschlauchs ausgebildet ist. Weiter bevorzugt ist es, wenn ein wesentlicher Teil des Absaugschlauchs innerhalb einer ersten Aufnahmeöffnung und ausziehbar aus der ersten Aufnahmeöffnung gelagert ist und gegebenenfalls ein wesentlicher Teil des Brauchwasserschlauchs innerhalb einer zweiten Aufnahmeöffnung und ausziehbar aus der zweiten Aufnahmeöffnung gelagert ist. Die zweite Einhausung umfassend die erste und die zweite Aufnahmeöffnung für die Aufnahme des entnehmbaren Absaugschlauchs und des entnehmbaren Brauchwasserschlauchs gewährleistet eine kompakte Bauform der Entsorgungsstation.

Bevorzugt ist es, dass in der Entsorgungsstation eine dritte Einhausung zur Aufnahme des Frischwasserschlauchs ausgebildet ist. Weiter bevorzugt ist es, wenn ein wesentlicher Teil des Frischwasserschlauchs innerhalb einer dritten Aufnahmeöffnung und ausziehbar aus der dritten Aufnahmeöffnung gelagert ist. Die Einhausung umfassend die dritte Aufnahmeöffnung für die Aufnahme des entnehmbaren Frischwasserschlauchs gewährleistet eine kompakte Bauform der Entsorgungsstation. Ferner kann durch die Unterbringung des Frischwasserschlauchs in einer separaten Einhausung ein Risiko einer Dekontamination durch das Brauchwasser oder das Abwasser verringert werden.

Die Ausgestaltungen der zweiten und der dritten Einhausung und somit die Lagerung des Absaugschlauchs bzw. des Brauchwasserschlauchs und des Frischwasserschlauchs kann auf einer Seite der Entsorgungsstation oder auf unterschiedlichen Seiten der Entsorgungsstation ausgebildet sein. Durch eine "räumliche" Trennung und einer derartigen Ausgestaltung der Einhausungen auf unterschiedlichen Seiten der Entsorgungsstation kann das Risiko der Dekontamination des Frischwasserschlauchs und somit des Frischwassers weiter verringert werden.

Vorzugsweise weist der Brauchwasserschlauch ein viertes Kupplungsteil und der Frischwasserschlauch ein fünftes Kupplungsteil auf. Das vierte Kupplungsteil ist derart ausgebildet, dass der Brauchwassertank an dem Fahrzeug und/oder gegebenenfalls die Spülvorrichtung ein korrespondierendes Kupplungsteil aufweisen. Analog dazu ist das fünfte Kupplungsteil derart ausgebildet, dass der Frischwassertank an dem Fahrzeug ein korrespondierendes Kupplungsteil aufweist. Durch diese Ausgestaltung ist eine lösbare Anschlussmöglichkeit und somit eine flexible Nutzung des jeweiligen Schlauchs gegeben.

In einer besonders bevorzugten Ausführungsform sind das erste Kupplungsteil des Absaugschlauchs, gegebenenfalls das vierte Kupplungsteil des Brauchwasserschlauchs und gegebenenfalls das fünfte Kupplungsteil des Frischwasserschlauchs unterschiedlich ausgeführt. Diese Ausführungsform hat den Vorteil, dass ein Verwechseln des Frischwasserschlauchs, des Brauchwasserschlauchs und des Absaugschlauchs vermieden werden kann, da ein irrtümlicher Anschluss aufgrund der unterschiedlich ausgeführten Kupplungsteile nicht möglich ist.

Insbesondere bevorzugt können der Frischwasserschlauch, der Brauchwasserschlauch und der Absaugschlauch vor dem jeweiligen Kupplungsteil jeweils eine Absperrarmatur aufweisen. Durch diese Ausgestaltung können die Schläuche in dem Nicht-Betriebszustand verschlossen gelagert werden, sodass weder von außen etwas in die Schläuche noch Rückstände aus den Schläuchen nach außen gelangen kann. Vorzugsweise kann für den Frischwasserschlauch eine GEKA-Kupplung in Verbindung mit einem Kugelhahn oder auch eine weitere trinkwasserzugelassene Kupplung insbesondere eine ABA Ventil-Steckkupplung, für den Brauchwasserschlauch eine Gardena-Kupplung und für den Absaugschlauch eine Camlock-Kupplung verwendet werden.

Vorzugsweise sind eine, gegebenenfalls zwei oder gegebenenfalls drei Vorrichtungen zur Aufbewahrung in einer Nicht-Betriebsposition und zum Rückholen in die Nicht-Betriebsposition des Absaugschlauchs und gegebenenfalls des Brauchwasserschlauchs und gegebenenfalls des Frischwasserschlauchs ausgebildet. Der Absaugschlauch, der Brauchwasserschlauch und der Frischwasserschlauch können vorzugsweise 5 m lang sein und einen Arbeitsradius von mindestens 3 m und maximal 5 m gewährleisten. Gemäß dieser Ausführungsform werden der Absaugschlauch, der Brauchwasserschlauch und der Frischwasserschlauch in die entsprechenden Vorrichtungen zum Aufbewahren und Rückholen angeordnet, wenn sie nicht verwendet werden. Bevorzugt weisen diese Vorrichtungen einen Mechanismus zum Rückholen dieser Schläuche auf. Hierbei kann die Vorrichtung beispielsweise ein Gewicht umfassen, welches gegen den jeweiligen Schlauch wirkt und diesen so in die Vorrichtung einzieht. Eine denkbare Ausgestaltung stellt ein seilgeführtes Gewinde dar. Weiter denkbar ist der Einsatz eines Balancers, der insbesondere rastbar ausgestaltet sein kann. Alternativ dazu kann die Vorrichtung auch als eine Haspel mit einem Federmechanismus ausgestaltet sein. Der Federmechanismus ist hierbei so ausgelegt, dass er die Haspel dreht und so den Schlauch innerhalb der Vorrichtung aufwickelt. Derartige Haspeln ermöglichen eine sehr gute Schlauchführung und sind rastbar. Dadurch kann eine sehr gute Bedienbarkeit gewährleistet werden.

Weiter bevorzugt ist es, wenn der Absaugschlauch und/oder der Brauchwasserschlauch und/oder der Frischwasserschlauch im Wesentlichen zwischen Brust- und Kopfhöhe, insbesondere zwischen 1 m und 2 m, besonders bevorzugt zwischen 1,25 m und 1,38 m, aus der Entsorgungsstation entnehmbar sind. Somit kann eine leichte Entnahme insbesondere des schweren Absaugschlauchs ohne Inanspruchnahme der Auszugskräfte der Haspel ermöglicht werden. Ferner verbleibt eine etwaige nicht abgesaugte Restmenge des Grauwassers und/oder des Schwarzwassers in der unteren Schlaufe des Absaugschlauchs und kann nicht aus dem Absaugschlauch auf die Reifenaufstandsfläche des Fahrzeugs oder in das Innere der Konsole tropfen.

Weiter bevorzugt ist es, wenn gegebenenfalls die zweite Einhausung mit einer ersten Klappe und gegebenenfalls die dritte Einhausung mit einer zweiten Klappe abgedeckt sind. Durch diese Ausgestaltung befinden sich der Absaugschlauch und der Brauchwasserschlauch getrennt von dem Frischwasserschlauch in separaten Einhausungen und hinter separaten Klappen. Dadurch kann das Risiko der Dekontamination des Frischwasserschlauchs und somit des Frischwassers weiter verringert werden.

Gemäß einer weiter bevorzugten Ausführungsform ist die Absaugöffnung mit einer dritten Klappe abgedeckt, welche aus einer Schließposition, in der die Absaugöffnung abgedeckt ist, in eine Offenstellung bewegbar, insbesondere verschwenkbar ist, wobei sowohl in der Schließstellung als auch in der Offenstellung die mindestens Abschnitte der Entsorgungsvorrichtung in der ersten Einhausung aufgenommen sind. Die dritte Klappe kann hierbei bevorzugt an der Entsorgungsstation selbst ausgebildet oder befestigt sein und eine Abdeckung der Absaugöffnung in der Parkposition der Entsorgungsvorrichtung ermöglichen.

Besonders bevorzugt kann die Entsorgungsvorrichtung mit der ersten Klappe, der zweiten Klappe und der dritten Klappe ausgestattet sein, um sämtliche Einhausungen und/oder Öffnungen der Entsorgungsstation in der Nicht-Betriebsposition abzudecken. Durch diese Ausgestaltung ist eine Art Garage oder eine Überdachung der Entsorgungsstation nicht notwendig.

Weiter bevorzugt ist es, wenn gegebenenfalls die erste Klappe, gegebenenfalls die zweite Klappe und/oder gegebenenfalls die dritte Klappe durch elektrisch oder mechanische betätigbare Riegel verriegelt sind und, wenn gegebenenfalls die erste Klappe und die zweite Klappe gegenseitig verriegelt sind. Vorzugsweise können zusätzlich die dritte Klappe und die zweite Klappe gegenseitig verriegelt sein. Diese Ausgestaltung ermöglicht eine Entriegelung der zweiten Klappe, welche die dritte Einhausung umfassend den Frischwasserschlauch abdeckt, nur, wenn die erste Klappe, welche die zweite Einhausung umfassend den Brauchwasserschlauch und den Absaugschlauch abdeckt, bzw. wenn die dritte Klappe, welche die Absaugöffnung der Entsorgungsvorrichtung abdeckt, geschlossen ist. Hierdurch kann der Frischwasserschlauch erst aus der Speicherstellung in die Versorgungsstellung bzw. die Betriebsposition gebracht werden, wenn die Brauchwasserversorgung und/oder der Absaugvorgang abgeschlossen sind.

Vorzugsweise können die Brauchwasserversorgung und der Absaugvorgang zeitgleich möglich sein. Diese Ausgestaltung ist besonders dann vorteilhaft, wenn der Brauchwasserschlauch als Spülvorrichtung verwendet wird und beispielsweise das Auffangbecken während des Absaugvorgangs vorzugsweise kontinuierlich spült, um Gerüche zu vermeiden. Hierdurch kann nach dem Absaugvorgang das zumindest teilweise gespülte Auffangbecken in die erste Einhausung eingeschoben werden.

In einer weiter bevorzugten Ausführungsform weist das Gehäuse der Entsorgungsvorrichtung Wartungsklappen auf, die einen Zugang in ein Inneres der Entsorgungsvorrichtung und somit eine Wartung, eine Reparatur oder einen Austausch eines Elements der Entsorgungsvorrichtung ermöglichen. Derartige Wartungsklappen können an allen Seiten bzw. Teilen einer Seite des Gehäuses ausgebildet sein. Bevorzugt sind Wartungsklappen einer bestimmten Breite auf einer Höhe der Seite des Gehäuses ausgebildet, die einer Höhe und einer Breite zumindest eines wesentlichen Bestandteils der Entsorgungsstation entspricht, um den Zugang zu diesem zumindest einem wesentlichen Bestandteil zu ermöglichen.

Gemäß einer vorteilhaften Ausführungsform umfasst die Entsorgungsstation weiterhin eine Steuerungseinrichtung, welche vorzugsweise mit einer Benutzerschnittstelle signaltechnisch gekoppelt ist und ausgebildet ist, um einen Absaugvorgang und/oder gegebenenfalls eine Brauchwasserversorgung und/oder gegebenenfalls eine Frischwasserversorgung zu starten und/oder zu stoppen. Die Steuerungseinrichtung kann bevorzugt updatefähig sein und einen ausreichenden Speicher für eventuelle größere Updates, die Speicherung von Daten, weitere softwareabhängige Dienstleistungen oder Ähnliches aufweisen.

Vorzugsweise sind die Riegel der ersten, zweiten und/oder dritten Klappe elektrisch betätigbar und die Steuerungseinrichtung ist mit der ersten, der zweiten und der dritten Klappe signaltechnisch gekoppelt und ausgebildet, um zeitgleich die erste und die dritte oder die zweite Klappe zu entriegeln.

Vorzugsweise ist die Benutzerschnittstelle als ein Bedienfeld ausgestaltet und oberhalb einer Entnahmestelle des Absaugschlauchs, des Brauchwasserschlauchs und des Frischwasserschlauchs ausgeführt. Ein derartiges Bedienfeld kann mittels der signaltechnischen Koppelung mit der Steuerungseinrichtung den Absaugvorgang, die Brauchwasserzuleitung und die Frischwasserzuleitung starten und/oder stoppen, vorzugsweise mittels eines Knopfdrucks.

Das Bedienfeld kann vorzugsweise als ein Display oder ein Touchscreen mit Dateneingabe zur Interaktion mit dem Bediener ausgebildet sein. Auf einem derartigen Display oder Touchscreen können abhängig von einer gewählten und durchzuführenden Funktion eine Gebrauchsanweisung oder Bedienerhinweise, aber auch Werbung, Nachrichten, Entertainment etc. angezeigt werden. Die Gebrauchsanweisung oder die Bedienerhinweise können derart eingerichtet sein, dass graphisch oder mittels eines Texts immer ein nächster Schritt auf dem Display dargestellt wird. Die Steuerungseinrichtung kann hierbei ausgebildet sein, um ein Durchführen eines Schrittes zu erfassen und dadurch ein Anzeigen des nächsten Schrittes zu veranlassen. Alternativ dazu können die Bedienerhinweise oder die Gebrauchsanweisung auch akustisch wiedergegeben werden. Die Art der Gebrauchsanweisung oder der Bedienerhinweise bzw. ob eine derartige Hilfe erwünscht ist kann zu Beginn ausgewählt werden. Vorzugsweise können zum Erfassen des Schritts beispielsweise geeignete Sensoren an den jeweiligen Elementen der Entsorgungsstation angebracht sein, die mit der Steuerungseinrichtung signaltechnisch gekoppelt sind. Durch eine derartige Ausgestaltung, wird eine Verwendung der Entsorgungsstation ohne Fremdpersonal ermöglicht.

In einer bevorzugten Ausführungsform kann der Absaugschlauch transparent ausgebildet sein, damit der Bediener erkennen kann, ab welchem Zeitpunkt kein Grauwasser und/oder Schwarzwasser mehr gefördert werden und die Absaugvorrichtung abgeschaltet werden kann. Eine alternative Ausführungsform kann einen zweckmäßigen Sensor aufweisen, der ausgebildet ist zu erkennen ab wann kein Grauwasser und/oder Schwarzwasser mehr gefördert werden. Eine weitere Alternative kann derart ausgestaltet sein, dass sich die Absaugvorrichtung automatisch nach einer über die Steuerungseinrichtung vorprogrammierten Zeit, vorzugsweise nach einer vorprogrammierten Zeit von maximal 10 min bis 20 min abstellt. Diese Ausgestaltungen können ein frühzeitiges Abschalten der Absaugvorrichtung gewährleiten, um ein Trockenlaufen der Förderpumpe zu verhindern.

Gemäß einer weiter bevorzugten Ausführungsform kann eine Bezahlmöglichkeit ausgebildet sein, vorzugsweise oberhalb der Entnahmestelle des Absaugschlauchs, des Brauchwasserschlauchs und/oder des Frischwasserschlauchs. Die Bezahlung kann durch Münzen, Jetons, Geldscheine, Kredit- oder Flottenkarten, sowie ggf. durch Einsatz eines Mobiltelefons erfolgen. Die Bezahlmöglichkeit kann hierbei mit der Steuerungseinrichtung signaltechnisch gekoppelt sein. Dadurch kann ein Freischalten der Entsorgungsstation oder bestimmte Bestandteile der Entsorgungsstation, welche für eine bezahlte Funktion benötigt werden, veranlasst werden. Vorzugsweise ist die Bezahlmöglichkeit mit der Förderpumpe signaltechnisch gekoppelt, so dass die Förderpumpe erst aktiviert werden kann, wenn ein bestimmter Betrag bezahlt wurde. Alternativ dazu ist eine einfache Freischaltung der Entsorgungsstation analog zu einer Tanksäule denkbar. Die Überwachung kann hierbei durch eine nahe der Entsorgungsstation angebrachte Kamera erfolgen und die Bezahlung kann an einer Kasse beispielsweise innerhalb einer dazugehörigen Tankstelle erfolgen.

In einer bevorzugten Weiterbildung der Entsorgungsstation kann die Steuerungseinrichtung mit der Bezahlmöglichkeit und den Klappen signaltechnisch gekoppelt sein. In einem ersten Schritt kann die gewünschte Funktion der Entsorgungsstation über das Bedienfeld, welches in dieser Weiterbildung besonders bevorzugt als Display ausgebildet ist, auswählbar sein. Das Display kann derart ausgestaltet sein, dass ein Betrag für die gewählte Funktion anzeigt werden kann. In einem zweiten Schritt kann der Betrag über eine Bezahlmöglichkeit in Form eines Geldscheinschlitzes und/oder eines Münzschlitzes, welche direkt an der Entsorgungsstation ausgebildet sind, bezahlbar sein. Durch das Bezahlen des angezeigten Betrags und das Auswählen der Funktion kann die Klappe oder gegebenenfalls können die Klappen der Bestandteile der Entsorgungsstation, die zum Ausführen der gewählten Funktion benötigt werden, entriegelt werden. Vorzugsweise kann die Funktion für eine gewisse Zeit oder eine bestimmte Durchflussmenge freigeschalten werden. Die Bezahlmöglichkeit kann derart ausgebildet sein, dass alle gängigen Karten insbesondere ec, Visa, DKV, Kundenkarten oder Ähnliche akzeptiert werden und für die Bezahlung verwendet werden können. Vorzugsweise kann die Entsorgungsstation auch in ein Kassensystem integriert sein. Ferner soll die Möglichkeit einer Monatsabrechnung, einer Art Flatrate und/oder eines Flottenmanagement bestehen. Besonders bevorzugt kann für die Bezahlmöglichkeit mit Bargeld ein Tresor im Inneren der Entsorgungsstation vorgesehen sein, der angeführtes Bargeld aufnehmen kann und Wechselgeld bereitstellen kann. Ein derartiger Tresor kann täglich entleert und entsprechend befüllt werden.

Insbesondere bevorzugt ist es, wenn die Bezahlmöglichkeit auf einer Funktechnik, insbesondere auf Near Field Communication (NFC) basiert. Dadurch kann mittels eines Smartphones, welches mit einem NFC-Chip ausgestattet ist, und einer entsprechenden Bezahl-App ein Zahlungsvorgang durch eine Kommunikation auf kurze Entfernung abgewickelt werden. Die Entsorgungsstation ist hierbei mit einem entsprechenden NFC-Reader (Scanner) ausgestattet und ermöglicht die Bezahlung eines bestimmten Betrages durch die Aktivierung der App und die Funkverbindung, welche eine räumliche Nähe, vorzugsweise weniger als 10 cm Abstand, des Smartphones zu dem NFC-Reader erfordert.

In einer bevorzugten Weiterentwicklung kann das Fahrzeug mit einem Transponder, insbesondere einem NFC-Chip oder einem NFC-Sticker, versehen und die Entsorgungsstation mit einem NFC-Reader ausgestattet sein. Der Transponder kann Daten des Fahrzeugs bereitstellen. Der NFC-Reader ist hierbei derart an der Entsorgungsstation anzubringen, dass eine räumliche Nähe zu dem Transponder des Fahrzeugs herstellbar ist. Aufgrund vieler verschiedenen Fahrzeugarten und Fahrzeuggrößen ist es besonders bevorzugt wenn der NFC-Reader höhenverstellbar ausgebildet ist. Alternativ zu der Bezahlung mittels eines Smartphones kann auch ein Internet-Terminal vorgesehen sein.

In einer alternativen Ausführungsform kann eine App für ein Smartphone oder ein einziger Transponder bereitgestellt sein, welche die vorstehend genannte kontaktlose Bezahlung und die vorstehend genannte Fahrzeugidentifikation zusammenführt. Durch diese Ausgestaltung kann eine gewünschte Funktion der Entsorgungsstation gewählt werden und mittels der vorstehend genannten Funkverbindung der Betrag der Funktion bezahlt und Informationen über das Fahrzeug übermittelt werden.

Vorzugsweise kann eine Geräuschquelle vorgesehen sein, die mit der Steuerungseinrichtung signaltechnisch gekoppelt ist. Die Steuerungseinrichtung kann ausgebildet sein, das Entriegeln einer der Klappen, einen Beginn des Betriebszustands und/oder ein Ende des Betriebszustands akustisch zu signalisieren. Alternativ dazu kann das Entriegeln einer der Klappen, der Beginn des Betriebszustands und/oder das Ende des Betriebszustands an dem Display angezeigt werden.

In einer weiter denkbaren Ausführungsform kann die Förderpumpe erst dann gestartet werden, wenn das Kupplungsteil des Absaugschlauchs entweder am Absaugstutzen des Abwassertanks oder an der Absaugöffnung der Entsorgungsvorrichtung angeschlossen ist. Durch diese Ausführungsform kann verhindert werden, dass der Bediener beispielsweise nur die Entsorgungsvorrichtung positioniert, aber vergisst den Absaugschlauch an der Absaugöffnung anzuschließen. In solch einem Fall könnte das Auffangbecken der Entsorgungsvorrichtung überlaufen, wenn das Fassungsvermögen erreicht wird. Bei dieser Ausführungsform müsste ein zweckmäßiger Sensor an dem Kupplungsteil des Absaugschlauchs angebracht werden, der erkennt, dass der Absaugschlauch nicht mehr an der Entsorgungsstation befestigt ist, sondern in Betriebsposition gebracht ist.

Ferner kann die erfindungsgemäße Entsorgungsstation so weiterentwickelt sein, dass sie mindestens einen weiteren zweckmäßigen Sensor aufweist, welcher mit der Steuerungseinrichtung signaltechnisch gekoppelt und ausgebildet ist, um Fehler und/oder Störungen der Entsorgungsstation zu signalisieren. Die Steuerungseinrichtung kann bei dieser Ausgestaltung mit dem Bedienfeld, welches vorzugsweise als Display ausgebildet ist, signaltechnisch gekoppelt sein, so dass auf dem Bedienfeld die jeweiligen Fehler und/oder Störungen angezeigt werden. Eine denkbare Alternative ist ein Signalisieren der Fehler und/oder Störungen durch ein akustisches Signal.

In einer bevorzugten Weiterentwicklung kann die erfindungsgemäße Entsorgungsstation mindestens einen weiteren zweckmäßigen Sensor aufweisen, welcher ein Entnehmen des Absaugschlauchs und/oder des Frischwasserschlauchs und/oder des Brauchwasserschlauchs erkennt und durch eine signaltechnische Kopplung mit der Steuerungseinrichtung signalisiert. Vorzugsweise können die Sensoren auch die Aufnahme des Absaugschlauchs und/oder des Frischwasserschlauchs und/oder des Brauchwasserschlauchs in die jeweiligen Aufnahmeeinheiten erfassen. Besonders bevorzugt können die jeweiligen Klappen durch das Erfassen der Aufnahme des Absaugschlauchs und/oder des Frischwasserschlauchs und/oder des Brauchwasserschlauchs in die jeweilige Aufnahmeeinheiten verriegelt werden, vorzugsweise nach einer über die Steuerungseinrichtung vorprogrammierten Zeit. Die vorprogrammierte Zeit soll so eingestellt sein, dass ein Bediener Zeit hat, seine Hand aus der Einhausung zu entfernen.

Besonders bevorzugt kann ein weiterer Sensor an dem Abwassersammeltank vorgesehen sein, der ausgebildet ist, um eine bestimmte Füllmenge des Abwassersammeltanks zu erfassen. Durch eine signaltechnische Kopplung mit der Steuerungseinrichtung kann ein erfasstes Signal des Sensors dann angezeigt oder mittels des akustischen Signals signalisiert werden. Eine denkbare Alternative ist, dass der Sensor signaltechnisch mit einer Entleerungsvorrichtung gekoppelt ist, die ausgebildet ist, den Abwassersammeltank aufgrund des erfassten Signals vorzugsweise in die Kanalisation zu entleeren.

Vorzugsweise kann ein Signal des Sensors/der Sensoren drahtlos übertragen werden, um eine Verkabelung vermeiden zu können. Besonders bevorzugt können Daten über ein Kurzstreckenmodem, ein Analogmodem, ein GSM-Modem oder einen ISDN-Terminaladapter erfolgen.

In einer weiter bevorzugten Ausführungsform umfasst die Entsorgungsstation eine Fahrzeugidentifikationsvorrichtung zur Erfassung eines Fahrzeugidentifikationscodes, wobei die Fahrzeugidentifikationsvorrichtung signaltechnisch mit der Steuerungseinrichtung und einem elektronischen Speicher gekoppelt ist und ausgebildet ist, um aus dem Fahrzeugidentifikationscode eine Positionierungskenngröße zu jedem mittels der Fahrzeugidentifikationsvorrichtung identifizierten Fahrzeugidentifikationscodes zu ermitteln. In dem elektronischen Speicher können hierbei individuelle Positionierungskenngrößen zu jedem mittels der Fahrzeugidentifikationsvorrichtung identifizierten Fahrzeugidentifikationscode gespeichert sein.

Gemäß einer weiter bevorzugten Ausführungsform umfasst die Entsorgungsstation weiterhin eine Abstandsmesseinheit. Hierbei ist die Steuerungseinrichtung ausgebildet, um in einem Konfigurationsmodus einen mittels der Abstandsmesseinheit gemessenen Abstand einem mittels der Fahrzeugidentifikationsvorrichtung erfassten Fahrzeugidentifikationscodes zuzuordnen und in dem Speicher diesem Fahrzeugidentifikationscode zugeordnet abzuspeichern.

Durch die signaltechnische Kopplung der Steuerungseinrichtung mit der Benutzerschnittstelle und der Abstandsmesseinheit und die Ausbildung, um die Benutzerschnittstelle in Abhängigkeit des gemessenen Abstands und der individuellen Positionierungskenngröße anzusteuern. Gemäß dieser Ausführungsform erfolgt die korrekte Positionierung des Fahrzeugs mit Hilfe einer Positionierungskenngröße. Diese Positionierungskenngröße ist in einem elektronischen Speicher abgespeichert und einem ebenfalls darin abgespeicherten Fahrzeugidentifikationscode zugeordnet.

Die Positionierungskenngröße kann beispielsweise ein Abstand zwischen der von der Abstandsmesseinheit erfassten Fläche des Fahrzeugs, beispielsweise der Frontfläche des Fahrzeugs, und dem Ablassstutzen des Abwassertanks des Fahrzeugs sein. Die Positionierungskenngröße kann aus dem Speicher ausgelesen werden, nachdem mittels einer entsprechenden Fahrzeugidentifikationsvorrichtung der Fahrzeugidentifikationscode erfasst wurde. Dies kann beispielsweise erfolgen, indem ein am Fahrzeug befestigter oder am Schlüsselbund Transponder (NFC, Bluetooth, RFID oder dergleichen) mittels eines entsprechenden Empfängers, der an der Entsorgungsvorrichtung angeordnet ist, ausgelesen wird und auf diese Art und Weise das Fahrzeug eindeutig mittels eines in dem Transponder abgespeicherten Fahrzeugidentifikationscodes erkannt wird.

Der Fahrzeugidentifikationscode kann in sich selbst bereits eine Positionierungskenngrö-βe enthalten, die demzufolge entsprechend durch eine entsprechende Software der Steuerungseinrichtung umgesetzt wird, was im erfindungsgemäßen Sinne auch als abgespeicherte Positionierungskenngröße verstanden wird. In diesem Fall speichert die Steuerungseinrichtung einen entsprechenden Softwarecode ab, der aus dem ausgelesenen Fahrzeugidentifkationscode eine entsprechende Positionierungskenngröße ableitet.

Ebenso kann jedoch auch in der Steuerungseinrichtung eine tabellenartige Zuordnung von Fahrzeugidentifikationscodes und Positionierungskenngrößen abgespeichert sein und anhand eines ausgelesenen Fahrzeugidentifikationscodes aus dieser Tabelle die dazugehörige Positionierungskenngröße ausgelesen werden und für die Positionierung des Fahrzeugs verwendet werden.

Die Fahrzeugidentifikation kann auch in anderer Weise erfolgen, beispielsweise indem das Kennzeichen des Fahrzeugs erfasst wird und dieses Kennzeichen als Fahrzeugidentifikationscode weiterverarbeitet wird.

Durch die solcherart ausgelesene Positionierungskenngröße kann eine exakte Bestimmung der Position der mit der Abstandsmesseinheit gemessenen Fläche des Fahrzeugs relativ zu der Entsorgungsvorrichtung bzw. relativ zu einem Referenzpunkt der Abstandsmesseinheit durchgeführt werden und hierdurch der Ablassstutzen des Abwassertanks des Fahrzeugs präzise und reproduzierbar oberhalb der Beckenöffnung platziert werden.

Insbesondere ist zu verstehen, dass die Steuerungseinrichtung auch durch eine benachbart zum Auffangbecken angeordnete elektronische Schaltung einerseits und eine zentral und beabstandet hierzu angeordneten elektronischen Speicher gebildet werden kann. Ein solcher zentral an einem anderen Ort angeordneter elektronischer Speicher kann beispielsweise durch entsprechende Datenverbindungen mit der elektronischen Schaltung der Steuerungseinrichtung verbunden sein. Insbesondere kann ein solcher elektronischer Speicher mit mehreren elektronischen Schaltungen verbunden sein, die entsprechend mehreren Auffangbecken und deren Positionierungsvorrichtungen zugeordnet sind. So ist es beispielsweise vorteilhaft, wenn Positionierungskenngrößen und Fahrzeugidentifikationscodes zentral auf einem Server in einem elektronischen Speicher abgespeichert sind und von einer Vielzahl dezentral hierzu angeordneter Positionierungsvorrichtungen aus zugänglich sind, um abgerufen zu werden und hierdurch eine korrekte Positionierung eines Fahrzeugs an mehreren verschiedenen Orten mittels entsprechender Positionierungsvorrichtungen zu ermöglichen.

Gemäß einer weiteren bevorzugten Ausführungsform ist vorgesehen, dass die Steuerungseinheit ausgebildet ist, um in einem Konfigurationsmodus einen mittels der Abstandsmesseinheit gemessenen Abstand einem mittels der Fahrzeugidentifikationsvorrichtung erfassten Fahrzeugidentifikationscodes zuzuordnen und in dem Speicher diesem Fahrzeugidentifikationscode zugeordnet abzuspeichern. Gemäß dieser Ausführungsform kann die Steuerungseinheit in einem Konfigurationsmodus programmiert werden und hierbei ein Fahrzeug mit einer spezifisch erfassten Positionierungskenngröße abgespeichert werden. Hierzu wird das Fahrzeug, welches zuvor nicht mit Hilfe der Positionierungsvorrichtung korrekt positioniert werden konnte, solcherart positioniert, dass der Ablassstutzen des Abwassertanks des Fahrzeugs oberhalb der Beckenöffnung angeordnet ist und aus dem in dieser Position des Fahrzeugs mittels der Abstandsmesseinheit ermitteltem Abstand dann eine Positionierungskenngröße abgeleitet, dem Fahrzeugidentifikationscode zugeordnet und entsprechend in dem elektronischen Speicher abgespeichert. Dies erlaubt eine Teach-In-ähnliche Vorgehensweise zur Registrierung von Fahrzeugen und deren passender Positionierungskenngröße und kann folglich ein einfaches und schnelles Aufbauen einer Datenbank für unterschiedliche Fahrzeuge zur Nutzung der erfindungsgemäßen Entsorgungsvorrichtung erzielen.

Weiter ist es bevorzugt, dass die Entsorgungsstation auf einen in der Reifenaufstandsfläche des Fahrzeugs einbetonierten Einbaurahmen montierbar ist und zum Anschluss an eine Versorgungsleitung für Frischwasser und/oder Brauchwasser und eine Entsorgungsleitung für Abwasser innerhalb des Einbaurahmens ausgebildet ist. Der Einbaurahmen kann hierbei mindestens eine Bohrung für eine Verrohrung und mindestens eine weitere Bohrung zur Befestigung aufweisen. Der derartige Einbaurahmen dient als Schablone für aus der Reifenaufstandsfläche des Fahrzeugs kommenden frostfrei verlegte Rohre und Kabel. In dieser Ausführungsform umfasst die Entsorgungsstation wenigstens eine stationäre Einheit, wobei die Förderpumpe, insbesondere die Drehkolbenpumpe, an der stationären Einheit ortsfest angeordnet ist und über den Absaugschlauch mit dem Absaugstutzen des Abwassertanks des Fahrzeugs oder der Absaugöffnung der Entsorgungsvorrichtung verbunden ist. Der Abwassersammeltank zur Aufnahme des Fluids kann dabei stationär oder mobil ausgestaltet sein und mit der Kanalisation verbunden sein, so dass ein Entleeren oder ein Auswechseln des Abwassersammeltanks nicht notwendig ist. Besonders bevorzugt kann der Abwassersammeltank mit einem direkten Zugang zur Kanalisation ausgestaltet sein, der sich beispielsweise automatisch entleeren kann. Die Verrohrung kann hierbei bevorzugt innerhalb des Bodens und demnach unterhalb und in der Reifenaufstandsfläche erfolgen, so dass eine Beschädigung durch versehentliches Übertreten verhindert werden kann. Alternativ zu einem Rohr kann auch ein flexibler Schlauch vorgesehen sein, der das Risiko einer Beschädigung verringert. Im Fall einer Verbindung mit der Kanalisation kann das Volumen des Fluids aus dem Abwassertank des Fahrzeugs beliebig groß sein, da das Fluid direkt in die Kanalisation weitergeleitet werden kann.

Die erfindungsgemäße Entsorgungsstation kann so ausgeführt sein, dass weder die Frischwasserversorgung noch die Brauchwasserversorgung integriert sind. Weiter kann die Entsorgungsstation entweder die Frischwasserversorgung oder die Brauchwasserversorgung aufweisen.

Schließlich ist es bevorzugt, dass der Absaugschlauch um eine drehbar auf einer Achse gelagerte Umlenkrolle geführt ist, wobei die Achse translatorisch beweglich entlang einer Führungsbahn gelagert und aus einer eingezogenen Position des Absaugschlauchs entlang der Führungsbahn in eine ausgezogene Position des Absaugschlauchs beweglich ist.

Vorzugsweise erstreckt sich die Führungsbahn mit einer vertikalen Richtungskomponente und die Umlenkrolle ist in der eingezogenen Position des Absaugschlauchs oberhalb einer Position der Umlenkrolle in der ausgezogenen Position des Absaugschlauchs angeordnet.

Besonders bevorzugt ist es, wenn die Entsorgungsstation zumindest eine Kamera für eine Aufzeichnung eines Bereichs oberhalb des Auffangbeckens und eine Anzeigevorrichtung, die eingerichtet ist, um einem Nutzer die Aufzeichnung der Kamera anzuzeigen.

Im Falle eines mobilen Auffangbeckens, also eines positionierbaren Auffangbeckens, ist die Kamera bevorzugt an der Entsorgungsvorrichtung angebracht. Weiter kann es bevorzugt sein die Kamera innerhalb des Auffangbeckens oder innerhalb der Reifenaufstandsfläche unterzubringen.

Diese Ausführungsform beruht auf der Erkenntnis, dass es notwendig ist, das Auffangbecken möglichst genau unter der Ablassöffnung des Fahrzeugs zu positionieren, um so möglichst effektiv Beeinträchtigungen wie das Entstehen von Spritzern und die Ausbreitung von Gerüchen verhindern zu können. Eine derart präzise Positionierung stellt deshalb eine Schwierigkeit dar, weil sich die Ablassöffnung unterhalb des Fahrzeugs befindet und ein Nutzer somit beim Positionieren ständig den Bereich unterhalb des Fahrzeugs im Blick haben muss, wodurch dem Nutzer zusätzliche Unannehmlichkeiten entstehen können.

Die vorstehend genannte Ausführungsform löst dieses Problem dadurch, dass sie dem Nutzer zumindest eine Kamera und eine entsprechende Anzeigevorrichtung zur Verfügung stellt. Die Kamera ist hierbei so eingerichtet, dass sie einen Bereich oberhalb des Auffangbeckens aufzeichnet. Dieser Bereich wird dem Nutzer dann als Aufzeichnung der Kamera auf der Anzeigevorrichtung, wie einem LCD-Bildschirm, angezeigt. Diese Anzeigevorrichtung kann beispielsweise auch gleichzeitig als Benutzerschnittstelle ausgebildet sein.

Der "Bereich oberhalb des Auffangbeckens" beschreibt hierbei einen Bereich über dem Auffangbecken, wobei das Auffangbecken nicht immer innerhalb dieses Bereichs erkennbar sein muss. Im Falle eines mobilen und höhenverstellbaren Auffangbeckens ist es beispielsweise möglich, dass sich das Auffangbecken in einer abgesenkten Position nicht innerhalb des von der Kamera aufgezeichneten Bereichs befindet und erst beim Anheben in diesen Bereich eintritt. Hierdurch wird es ermöglicht, dass im Falle der Positionierung des Auffangbeckens unterhalb der Ablassöffnung auch die Ablassöffnung in dem von der Kamera aufgezeichneten Bereich erkennbar ist.

Wenn nun das Auffangbecken durch die Positionierungsvorrichtung in den Bereich unter die Ablassöffnung gelangt, kann der Nutzer auf der Anzeigevorrichtung diese Ablassöffnung erkennen. Hierdurch wird dem Nutzer ermöglicht, anhand des von der Kamera übertragenen Bildes zu bestimmen, ob das Auffangbecken bereits gut ausgerichtet ist oder ob weitere Korrekturen der Position notwendig sind. Vorteilhaft ist zudem, dass der Nutzer beim Verändern der Position seinen Blick auf die Anzeigevorrichtung gerichtet belassen kann und den Positionierungsvorgang nicht zur regelmäßigen Kontrolle der Position unterbrechen muss. Hierdurch werden also zum Einen die Unannehmlichkeiten für den Nutzer reduziert, zum Anderen wird eine schnellere Positionierung des Auffangbeckens - sowohl in horizontaler Richtung durch Verschieben, als auch in vertikaler Richtung durch Verstellen der Höhe - ermöglicht.

Alternativ oder zusätzlich ist gemäß einer weiteren Ausführungsform bevorzugt, dass die Entsorgungsvorrichtung eine Spiegelvorrichtung umfasst.

Eine derartige Spiegelvorrichtung kann im Falle eines mobilen Auffangbeckens an der Positionierungsvorrichtung angeordnet sein. Über die Spiegel wird es dem Bediener ermöglicht, beim Bedienen der Entsorgungsvorrichtung mittels dem Griff einen Unterboden des Fahrzeugs zu beobachten. Der Bediener kann so ohne großen Aufwand die Ablassöffnung des Fahrzeugs an dessen Unterboden suchen und die Entsorgungsvorrichtung möglichst genau ausrichten. Es ist bevorzugt, dass die Spiegelvorrichtung Markierungen aufweist, an denen sich der Bediener beim Positionieren der Entsorgungsvorrichtung orientieren kann. Besonders vorteilhaft ist eine Markierung in Form eines Ringes oder Fadenkreuzes.

In einer weiteren bevorzugten Ausführungsform umfasst die Entsorgungsvorrichtung eine Beleuchtungseinrichtung.

Es ist vorteilhaft, die Entsorgungsvorrichtung mit einer Beleuchtungseinrichtung auszustatten, die zum Einen eine ausreichende Beleuchtung für den Bediener im Falle eines Nachtbetriebs bereitstellt, zum Anderen aber auch eine ausreichende Beleuchtung zur Positionierung gewährleistet. Hierzu kann die Beleuchtungsvorrichtung eine oder mehrere Beleuchtungselemente umfassen, die an unterschiedlichen Stellen der Entsorgungsvorrichtung oder auch an der Entsorgungsstation angeordnet sind.

Insbesondere ist es bevorzugt, eine Beleuchtung der Bedienelemente für die Entsorgungsstation bereitzustellen. Weiterhin ist es vorteilhaft, die Spiegelvorrichtung so zu beleuchten, dass der Fahrzeugführer auch im Dunkeln eine Positionierung durchführen kann. Die Beleuchtung kann hierbei mittels eines Bewegungsmelders aktiviert werden.

Weiterhin ist es von Vorteil, die Entsorgungsstation und insbesondere die Entsorgungsvorrichtung mit einer Beleuchtung für eine Kamera und/oder die Kamera selbst mit einem Beleuchtungselement auszustatten. Hierdurch kann auch bei schlechten Lichtverhältnissen unterhalb des Fahrzeugs eine gut erkennbare Aufzeichnung des Bereichs oberhalb des Auffangbeckens durch die Kamera erreicht werden. Insbesondere ermöglich eine solche Beleuchtungsvorrichtung, dass auch bei schlechtem Wetter oder in der Nacht eine Aufzeichnung von guter Qualität und hoher Erkennbarkeit auf der Anzeigevorrichtung angezeigt werden kann.

In einer bevorzugten Weiterentwicklung kann eine zentrale Datenerfassungseinrichtung vorgesehen sein, die mit der Steuerungseinrichtung signaltechnisch gekoppelt ist, und ausgebildet ist, um einen, mehrere und sämtliche Funktionen der Entsorgungsstation zu erfassen und zu überwachen. Ferner können auftretende Fehlermeldungen und/oder Alarme eingesehen und verwaltet werden. Besonders bevorzugt können Daten der zentralen Datenerfassungseinrichtung über eine mobile Benutzerschnittstelle eingesehen werden, deren Zugang insbesondere Passwortgeschützt ausgebildet sein kann.

Vorzugsweise erfolgt die Datenübertragung von der Steuerungseinrichtung zu der zentralen Datenerfassungseinrichtung drahtlos. Besonders bevorzugt ist die Datenübertragung mittels eines Kurzstreckenmodems, eines Analogmodems, eines GSM-Modems oder eines ISDN-Terminaladapters.

Die zentrale Datenerfassungseinrichtung kann ausgebildet sein, um sämtliche Betriebsinformationen bereitzustellen. So sind beispielsweise ein Wasserverbrauch, Betriebsstunden der Drehkolbenpumpe und gegebenenfalls der Tauchpumpe einsehbar. Zudem können erfasste Daten als Trockenlaufüberwachung der Pumpe und Motorschutz der Drehkolbenpumpe dienen. Zusätzlich kann zu den Daten ein definierter Zeitstempel und der Temperaturverlauf der Entsorgungsstation aufgezeichnet werden. Vorzugsweise können Daten der Bediendauer sowohl der Absaugvorrichtung als auch der positionierbaren Entsorgungsvorrichtung aufgezeichnet und ausgewertet werden. Neben den Betriebsinformationen kann die zentrale Datenerfassungseinrichtung ausgebildet sein, etwaige Alarme zu übertragen und an der mobilen Benutzerschnittstelle anzuzeigen. Derartige Alarme können technische oder auch nicht-technische Ursachen haben, die separat angezeigt werden können. Die erfassten Betriebsdaten und/oder Alarme können hierbei für Statistiken und/oder Auswertungen verwendet werden. Ergänzend können in der zentralen Datenerfassungseinrichtung Daten über die Füll-/Absaugmengen bzw. die Füll-/Absaugdauer und der Zeitpunkt eines Füll-/Absaugvorgangs erfasst und gespeichert werden.

Schließlich ist ein Notstromaggregat weiter bevorzugt, welches eine Stromversorgung auch im Falle eines Stromausfalls sicherstellt. Besonders bevorzugt stellt das Notstromaggregat Strom für die Förderpumpe bereit. Dadurch kann im Fall des Stromausfalls während des Absaugvorgangs das Absaugen eines sich in dem Absaugschlauch oder in der Entsorgungsvorrichtung sichergestellt werden.

Ferner kann das Notstromaggregat dazu verwendet werden, im Falle einer Bezahlung mit Karte eine Kartenrückgabe sicherzustellen.

Den vorstehend genannten Ausführungsformen der Erfindung liegt der Gedanke zu Grunde so viele Informationen über das Fahrzeug selbst und dessen Absaug- bzw. Füllvorgänge zu erfassen, und insbesondere mittels der Daten Statistiken oder andere Auswertungen zu erstellen. Derartige Daten können einen Wasserverbrauch und Betriebsstunden der Förderpumpe bzw. gegebenenfalls der Tauchpumpe aufzeichnen sowie eine Trockenlaufüberwachung der Pumpe und einen Motorschutz der Förderpumpe gewährleisten. Vorzugsweise können die Daten mit einem Zeitstempel, der besonders bevorzugt in der Steuerungseinrichtung hinterlegt ist, versehen. Hierdurch können Ereignissen, wie beispielsweise einem Absaugvorgang, einem Befüllvorgang, einer Absaugmenge, einer Befüllmenge und etwaigen Fehlermeldungen, eine bestimmte Zeit zugeordnet werden. Mit den Informationen über ein Fahrzeug kann nachverfolgt werden zu welcher Zeit das Fahrzeug an welchem Ort ist. Ferner kann aufgezeichnet und ausgewertet werden wann und wie oft die Entsorgungsvorrichtung bzw. wann und wie oft der Absaugschlauch direkt für einem Absaugvorgang verwendet wird.

In einer bevorzugten Ausführungsform können Daten über einen Temperaturverlauf im Inneren des Gehäuses zur Veranlassung einer Wartung genutzt werden. Hierfür sind in der Steuerungseinrichtung Referenzwerte hinterlegt. Alternativ dazu kann eine Wartung auch nach einer bestimmten gemessenen Bediendauer oder nach Ablauf einer definierten Zeit veranlasst werden.

Schließlich ist es weiter bevorzugt, wenn die erfindungsgemäße Entsorgungsstation an ein Fahrzeugdiagnosesystem, insbesondere an eine On-Board-Diagnose eines Fahrzeugs, angebunden ist. Das erfindungsgemäße Fahrzeugdiagnosesystem ist eine Software, die ausgebildet ist, abgasbeeinflussende Systeme und weitere wichtige Steuergeräte eines Fahrzeugs zu erfassen und zu überwachen. Auftretende Fehler können einem Fahrzeugführer beispielsweise über eine Kontrollleuchte angezeigt werden und im jeweiligen Steuergerät gespeichert werden. Durch ein derartiges Aufzeichnen von Fehlern können dann später durch eine Fachwerkstatt über genormte Schnittstellen abgefragt werden. Alternativ dazu können derartige Fehler und weitere Daten, insbesondere nachstehend dargelegte Daten, auch an den Bediener selbst, vorzugsweise mittels einer E-Mail, übermittelt werden.

Das Fahrzeugdiagnosesystem kann einen Beschleunigungssensor beinhalten, der mittels Beschleunigungsdaten einen Fahrstil erfassen und auswerten kann. Hierbei kann ein Brems- und Beschleunigungsverhalten eines Fahrzeugführers aufgezeichnet werden. Ferner können ein CPU-Chip zum Steuern von Prozessen, ein GPS/GSM Modul zum Orten eines Fahrzeugs und zum Verbinden zu einer Cloud, ein Flash-Speicher zum Speichern von Fahrten, eine Sim-Karte zur Identifikation der Datenverbindung und/oder eine interne Batterie als BackUp zur Stromversorgung im Falle einer Unterbrechung der Stromversorgung durch das Fahrzeug in dem Fahrzeugdiagnosesystem integriert sein.

Ein weiterer Aspekt der Erfindung ist ein Fahrzeugdiagnosesystem mit einem OBD2 Stecker zur Anbindung des erfindungsgemäßen Fahrzeugdiagnosesystems umfassend einen Beschleunigungssensor zum Erfassen und Analysieren Beschleunigungs- und Abbremsvorgänge eines Fahrzeugs, einen CPU-Chip zum Steuern eines Prozesses, ein GPS/GSM Modul zum Orten des Fahrzeuges und zum Herstellen einer Verbindung zu einer Cloud, einen Flash Speicher zum Speichern von Daten, eine Sim-Karte zur Identifikation einer Datenverbindung und eine interne Batterie. Das Fahrzeugdiagnosesystem beinhaltet hierbei eine Kundenkartenfunktion in Form von Tanktalern bzw. Prämien und/oder ein Bezahlsystem und ist ausgebildet, um einen Zeitpunkt und/oder einen Ort eines Entsorgungsvorgangs und/oder gegebenenfalls eine Notwendigkeit einer Auffüllung und/oder einer Absaugung zu berechnen. Eine derartige Funktion stellt eine Ergänzung zu einem herkömmlichen Fahrtenbuch dar. Durch ein Speichern der Daten eines Absaugvorgangs und/oder einer Befüllung kann ein durchschnittlicher Bedarf bestimmt werden und dadurch können etwaige Unregelmäßigkeiten erkannt und eine unentdeckte Leckage verhindert werden.

Das Fahrzeugdiagnosesystem kann ausgebildet sein zu berechnen wann und wo das nächste Mal Abwasser entleert und/oder Frischwasser bzw. Brauchwasser aufgefüllt werden muss. Ferner kann das Fahrzeugdiagnosesystem ausgebildet sein Orte von derartigen Entsorgungsstationen zu speichern und dem Bediener aufzuzeigen. Besonders bevorzugt kann das Fahrzeugdiagnosesystem dem Bediener den Ort einer Entsorgungsstation aufzuzeigen, die der Bediener gemäß des durchschnittlichen Bedarfs und einer zu fahrenden Route als nächstes ansteuern muss.

Schließlich ist es bevorzugt, dass der OBD2 Stecker ausgebildet ist, um Daten des Fahrzeugs, wie zum Beispiel einen Batteriezustand, einen Kilometerstand, einen Tankfüllstand, ein elektronisches Fahrtenbuch oder einen Fahrtenverlauf zu erfassen, die durch manuelle Einträge ergänzt werden können und auslesbar vorzugsweise per E-Mail sind.

Bestandteil des Fahrzeugdiagnosesystems kann ein Durchflusssensor in der Frischwasserleitung, ein Vergleich der tatsächlich verbrauchten Menge Frischwasser anhand der abgesaugten Abwassermenge mit der von einem Benutzer in den Frischwassertank zugeführten Frischwassermenge und eine Signalisierung eines untypischen Verhältnisses zwischen zugeführtem und verbrauchtem Frischwasser, zur Anzeige von Leckagen oder Fehlbedienungen. Weiterhin kann anhand eines Vergleichs der Durchflussmenge und des Pegelstands bzw. der Pegelstandsänderung im Frischwassertank des Fahrzeugs ermittelt werden, ob die Frischwasserzufuhr leckagefrei erfolgt und im Falle einer festgestellten verlustbehafteten Zufuhr von Frischwasser ein Signal ausgegeben werden oder die Frischwasserzufuhr unterbrochen werden. In gleicher Weise kann anhand eines Vergleichs der Durchflussmenge des Absaugschlauchs und des Pegelstands bzw. der Pegelstandsänderung im Abwassertank des Fahrzeugs ermittelt werden, ob die Abwasserabsaugung leckagefrei erfolgt und im Falle einer festgestellten verlustbehafteten Absaugung ein Signal ausgegeben werden oder der Entleerungsvorgang unterbrochen werden.

Bevorzugte Ausführungsformen der Erfindung werden anhand der beiliegenden Figuren näher erläutert. Es zeigen:
- Fig. 1: eine schematische Darstellung der erfindungsgemäßen Absaugvorrichtung im Betrieb für einen Absaugvorgang,
- Fig. 2: die schematische Darstellung gemäß Fig. 1 im Betrieb für einen Spülvorgang,
- Fig. 3: eine Seitenansicht einer erfindungsgemäßen Absaugvorrichtung in einer angeschlossenen Situation an einen Abwasserbehälter,
- Fig. 4A-E: Fünf Varianten der Absaugvorrichtung im Bereich des Abwasserbehälters in einer teilgeschnittenen Seitenansicht. 5
- Fig. 5A: Vorderansicht der erfindungsgemäßen Entsorgungsstation mit ausgeblendetem Gehäuse gemäß einer bevorzugten Ausführungsform.
- Fig. 5B: Vorderansicht der erfindungsgemäßen Entsorgungsstation mit Gehäuse und geöffneten Klappen gemäß der Fig. 5A.
- Fig. 5C: Vorderansicht der erfindungsgemäßen Entsorgungsstation mit Gehäuse und geschlossenen Klappen gemäß der Fig. 5A.
- Fig. 6A: Rechte Seitenansicht der erfindungsgemäßen Entsorgungsstation mit ausgeblendetem Gehäuse gemäß der bevorzugten Ausführungsform.
- Fig. 6B: Rechte Seitenansicht der erfindungsgemäßen Entsorgungsstation ohne Wartungsklappen gemäß der bevorzugten Ausführungsform.
- Fig. 6C: Rechte Seitenansicht der erfindungsgemäßen Entsorgungsstation mit Wartungsklappen gemäß der bevorzugten Ausführungsform.
- Fig. 7: Linke Seitenansicht der erfindungsgemäßen Entsorgungsstation mit Wartungsklappen und ausgezogener Entsorgungsvorrichtung gemäß der bevorzugten Ausführungsform.
- Fig. 8A: Linke Seitenansicht der erfindungsgemäßen Entsorgungsstation mit ausgeblendetem Gehäuse gemäß der bevorzugten Ausführungsform.
- Fig. 8B: Linke Seitenansicht der erfindungsgemäßen Entsorgungsstation ohne Wartungsklappen gemäß der bevorzugten Ausführungsform.
- Fig. 9A: Perspektivische Seitenansicht von vorne rechts der erfindungsgemäßen Entsorgungsstation mit ausgeblendetem Gehäuse gemäß der bevorzugten Ausführungsform.
- Fig. 9B: Perspektivische Seitenansicht von vorne rechts der erfindungsgemäßen Entsorgungsstation gemäß der bevorzugten Ausführungsform.
- Fig. 10A: Perspektivische Seitenansicht von hinten rechts der erfindungsgemäßen Entsorgungsstation mit ausgeblendetem Gehäuse gemäß der bevorzugten Ausfüh ru ngsform.
- Fig. 10B: Perspektivische Seitenansicht von hinten rechts der erfindungsgemäßen Entsorgungsstation gemäß der bevorzugten Ausführungsform.
- Fig. 11A: Perspektivische Seitenansicht von vorne links der erfindungsgemäßen Entsorgungsstation mit ausgeblendetem Gehäuse gemäß der bevorzugten Ausfüh ru ngsform.
- Fig. 11B: Perspektivische Seitenansicht von vorne links der erfindungsgemäßen Entsorgungsstation mit ausgeblendetem Gehäuse gemäß der bevorzugten Ausführungsform.
- Fig. 12A: Perspektivische Seitenansicht von hinten links der erfindungsgemäßen Entsorgungsstation gemäß der bevorzugten Ausführungsform.
- Fig. 12B: Perspektivische Seitenansicht von hinten links der erfindungsgemäßen Entsorgungsstation mit ausgeblendetem Gehäuse gemäß der bevorzugten Ausführungsform.

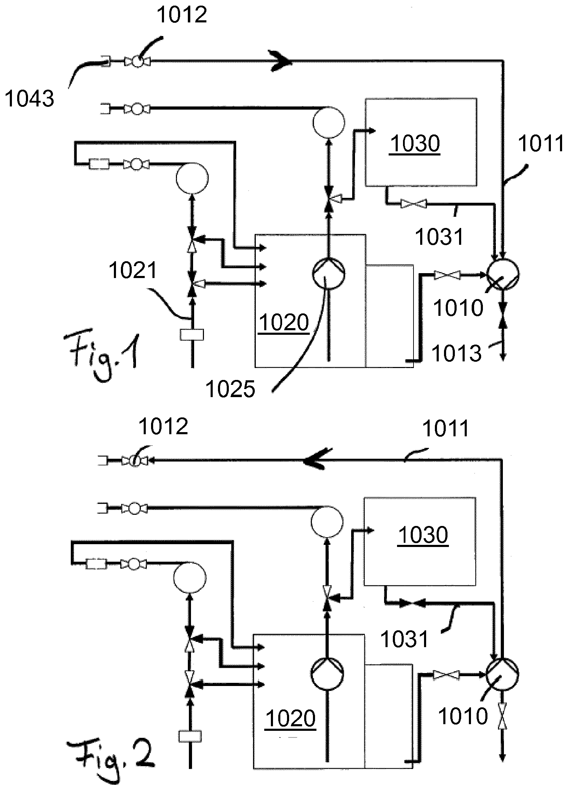

Bezug nehmend zunächst auf Fig. 1 umfasst die erfindungsgemäße Absaugvorrichtung eine Drehkolbenpumpe 1010, die über eine Absaugleitung 1011 mit einem kombinierten Absaug- und Spülkanal verbunden ist, der in einem Abwasserbehälter montiert (nicht dargestellt) ist. Die Absaugleitung 1011 wird über eine Bajonettanschlusskupplung 1012 mit einem Anschlussstutzen, der fest am Abwasserbehälter montiert ist, verbunden und hierdurch eine fluiddichte Verbindung hergestellt.

Während des Absaugens ist die Drehkolbenpumpe so angesteuert, dass sie das Abwasser aus dem Abwasserbehälter in Absaugrichtung A in eine Abwasserleitung 1013 fördert.

Die Absaugvorrichtung umfasst weiterhin einen Systemtrenner 1020, der über eine Frischwasserleitung 1021 mit dem Frischwasserleitungsdruck befüllt wird. Der Systemtrenner nimmt eine über entsprechende Schwimmerschalter und Überlauf abgesicherte maximale Menge an Frischwasser auf und hat keine direkte Verbindung zum Absaugleitungskreislauf.

Mittels einer Systemtrennerpumpe 1025 wird das im Frischwasserbehälter zwischengespeicherte Frischwasser in einen Spültank 1030 gefördert. Der Spültank 1030 dient dazu, das Frischwasser getrennt von dem Frischwasserbehälter zwischenzulagern. Der Spültank 1030 ist über eine Spülwasserleitung 1031 mit der Drehkolbenpumpe 1010 verbunden und kann der Drehkolbenpumpe Spülwasser zuführen.

Fig. 2 zeigt den Spülwasserfluss bei dem Spülprozess der erfindungsgemäßen Absaugvorrichtung. Spülwasser wird aus dem Spülwasserbehälter 1030 über die Spülwasserleitung 1031 der Drehkolbenpumpe 1010 zugeführt, deren Drehrichtung nun gegenüber der Drehrichtung gemäß Fig. 1 beim Absaugvorgang umgekehrt ist. Das Spülwasser wird über die Absaugleitung 1011 dem an die Anschlusskupplung 1012 angeschlossenen Abwasserbehälter unter hohem Druck zugeführt und bewirkt eine Ablösung und Aufwirbelung von Feststoffen im Abwasserbehälter. Nachdem ein solcher Spülprozess durchgeführt wurde, kann nachfolgend wiederum ein Absaugvorgang mit der Verschaltung gemäß Fig. 1 durchgeführt werden.

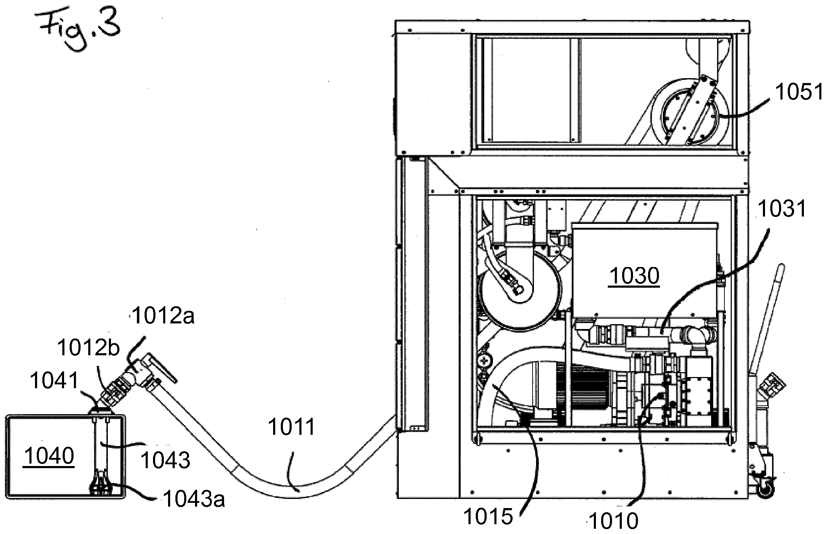

Fig. 3 zeigt den konstruktiven Aufbau der erfindungsgemäßen Absaugvorrichtung. Wie ersichtlich, ist die Absaugleitung 1011 mittels einer Bajonettanschlusskupplung 1012 an die Anschlusskupplung des Abwasserbehälters 1040 fluiddicht angeschlossen. Ein integraler Absaug- und Spülkanal 1043 erstreckt sich ausgehend von einem integralen Absaug- und Spülanschlussflansch 1041 senkrecht in den Abwasserbehälter 1040. Der Absaugkanal erstreckt sich hierbei ausgehend von dem in der oberen Behälterwandung eingesetzten Anschlussflansch 1041 bis kurz über die innere Oberfläche des Behälterbodens und weist am unteren Ende eine Absaugglocke 1043a auf.

Die Absaugleitung 1011 wird über eine Rollenführung als Schlauchhalter umgelenkt und ist an die Drehkolbenpumpe 1010 angeschlossen. Weiterhin ist die Drehkolbenpumpe mit einem Abwasserschlauch 1015 an einen Abwasseranschluss angeschlossen, sodass im Absaugbetrieb die Absaugleitung 1011 die Saugseite der Drehkolbenpumpe und die Abwasserleitung 1015 die Druckseite der Drehkolbenpumpe 1010 bildet.

Ein Spülwasserbehälter 1030 ist über eine Spülwasserleitung 1031 mit der Drehkolbenpumpe verbunden und führt im Spülbetrieb der Drehkolbenpumpe Spülwasser auf der Saugseite zu. Dieses Spülwasser wird in die Absaugleitung 1011, die in dieser Spülförderrichtung die Druckseite darstellt, zugeführt.

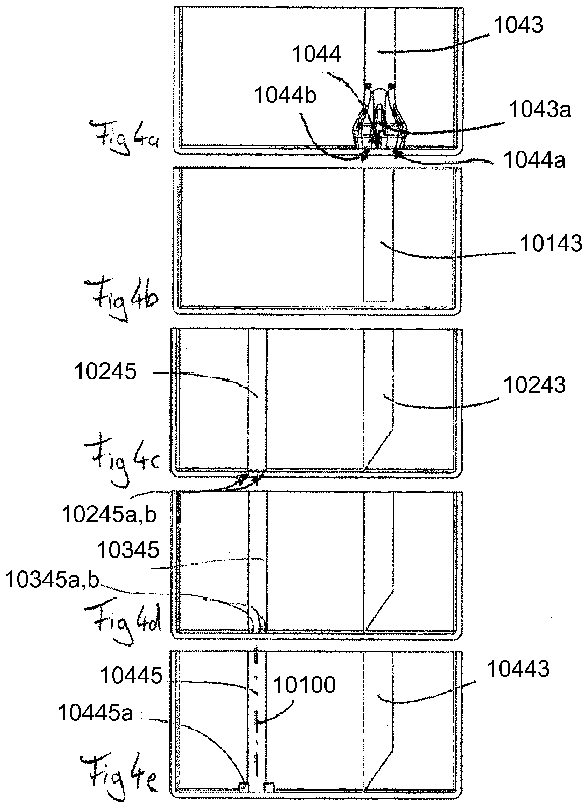

Fig. 4A zeigt eine Ausführungsform eines integralen Absaug- und Spülkanals in Einbausituation in einem Abwasserbehälter. Der integrale Absaug- und Spülkanal 1043 weist an seinem unteren Ende eine Absaugglocke 1043a auf, die aus gummielastischem Material geformt ist und einen unteren umlaufenden Rand 1044 aufweist, der mehrere Ausnehmungen aufweist. Diese Ausnehmungen 1044a, b erlauben einen radialen Austritt von Spülwasser in einem scharfen Spülstrahl in Verbindung mit dem der Absaugöffnung gegenüberliegenden Behälterboden und hierdurch eine wirksame Ablösung von Feststoffen vom Boden des Abwasserbehälters.

Fig. 4B zeigt eine Variante, bei der ebenfalls ein integraler Absaug- und Spülkanal 10143 in Form eines starren Rohres ausgebildet ist, das knapp oberhalb des Behälterbodens endet und sowohl zum Absaugen als auch zum Spülen dient.

Fig. 4C zeigt eine Ausführungsform, bei der ein Absaugkanal 10243 mit einer schräg angeschnittenen Absaugöffnung am unteren Ende und ein hiervon separater Spülkanal 10245 mit einer knapp oberhalb des Behälterbodens angeordneten Spülöffnung mit mehreren Ausnehmungen 10245a,b im Rand der Öffnung bereitgestellt ist. Mit dieser Ausgestaltung wird der Absaugvorgang und der Spülvorgang über separate Kanäle ausgeführt. Insbesondere können hierbei auch mehrere Spülkanäle 10245 vorgesehen sein, um bei großen Abwasserbehältern eine wirksame Ablösung von Ablagerungen auf dem Behälterboden zu erzielen.

Fig. 4D zeigt eine Variante zu Fig. 4C, bei der der Spülkanal 10345 keine Ausnehmungen am unteren Spülkanalrand, sondern mehrere Öffnungen 10345a,b in radialer Richtung aufweist. Bei dieser Ausgestaltung kann der Spülkanal auf den Behälterboden aufgesetzt werden, und die radialen Öffnungen sind knapp oberhalb des Behälterbodens angeordnet und bewirken mehrere Hochdruckspülstrahlen, die in radialer Richtung aus dem Spülkanal austreten.

Fig. 4E zeigt eine Variante, bei der ebenfalls ein Absaugkanal 10443 mit schräg angeschnittener unterer Absaugöffnung vorgesehen ist. Der Spülkanal 10445 ist bei dieser Variante mit einer selbstdrehenden Düse 10445a am unteren Ende ausgerüstet. Diese selbstdrehende Düse 10445a kann solcherart ausgebildet sein, dass durch das Spülwasser eine Anströmfläche angeströmt und in Bewegung versetzt wird, die die Düse in Rotation um die Längsachse 10100 des Spülkanals versetzt und hierdurch einen einzigen, zwei oder einige wenige Hochdruckspülstrahlen nach radial oder radial-tangential zur Längsachse 10100 aus den sich bewegenden, um die Längsachse rotierenden Düsen austreten lassen und hierdurch eine wirksame Ablösung von Ablagerungen bewirken.

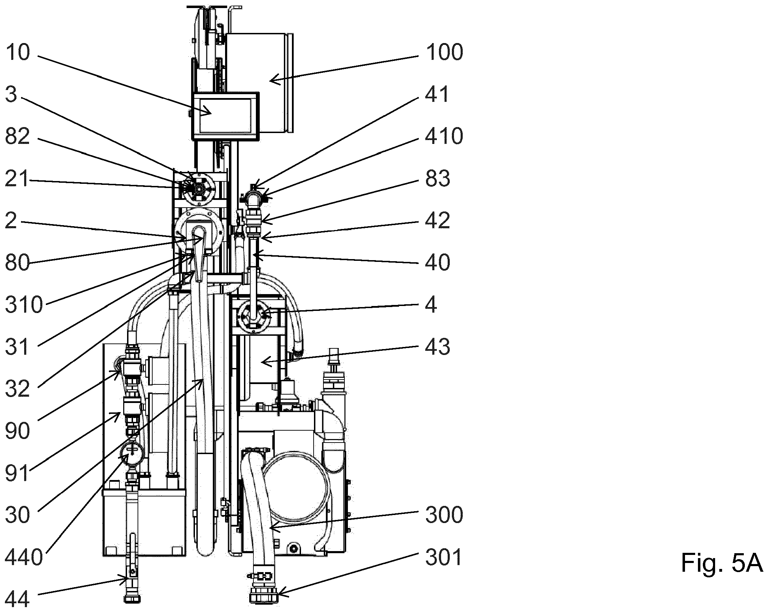

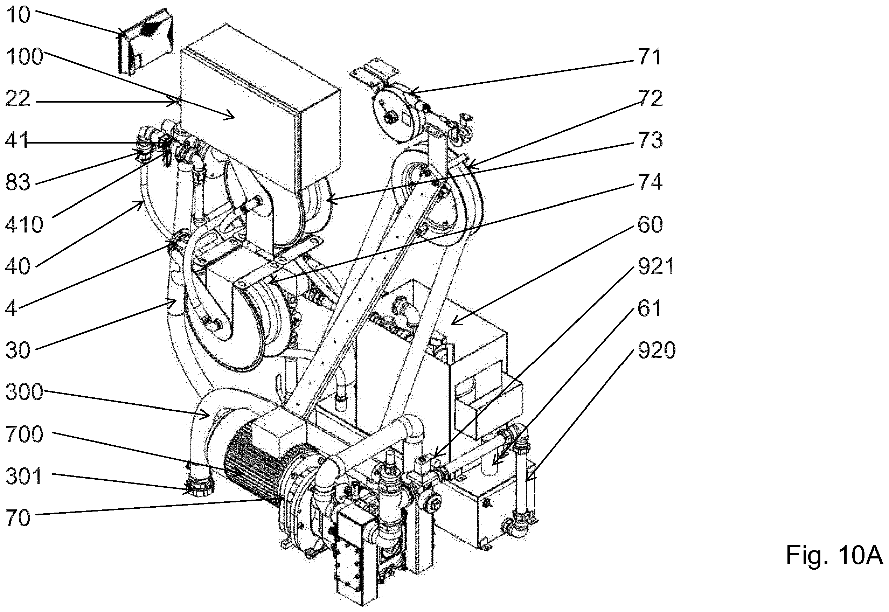

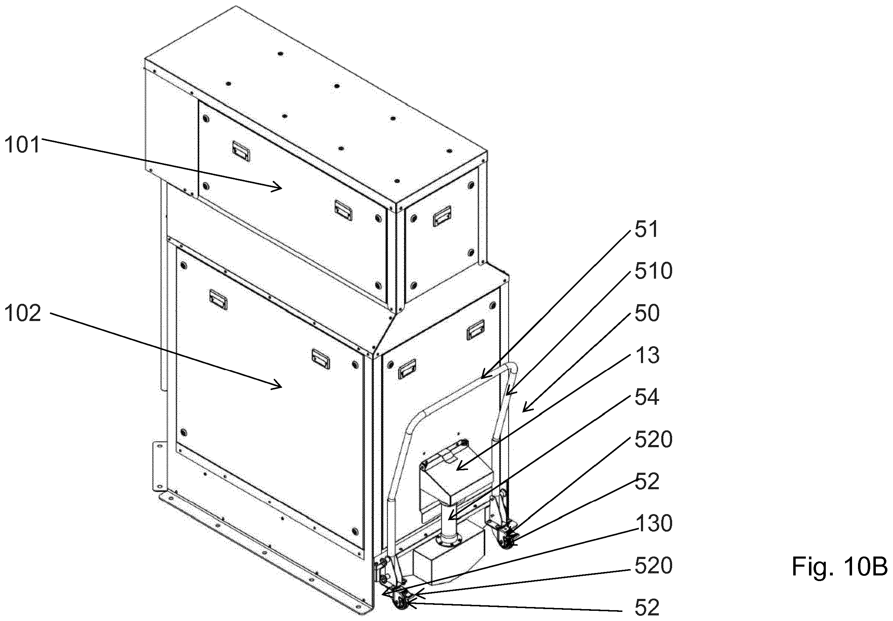

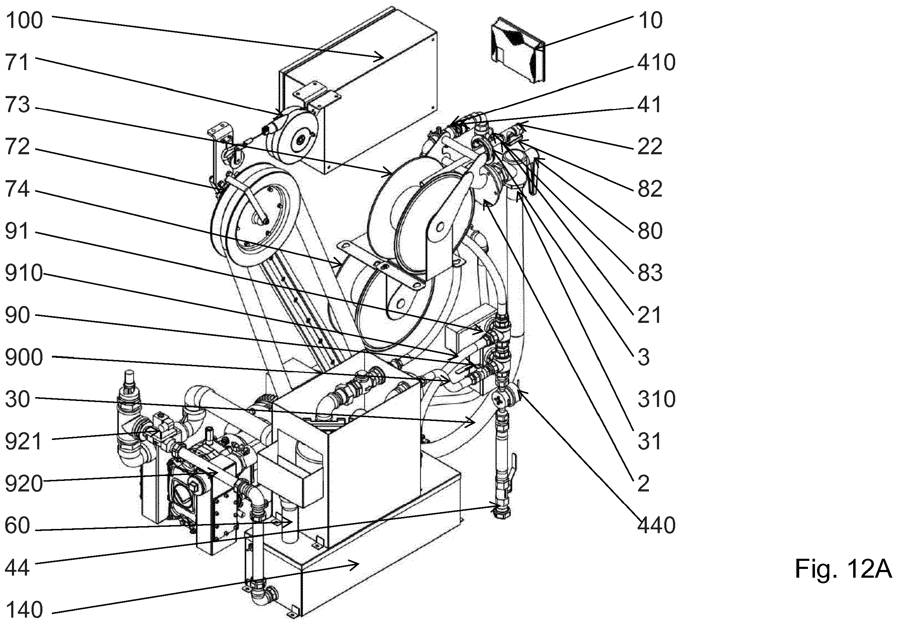

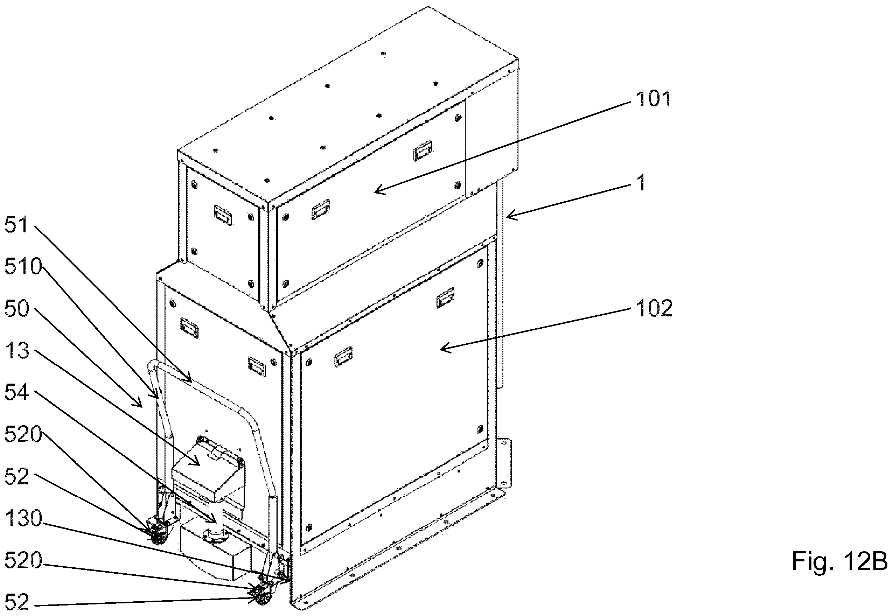

Die Absaugvorrichtung der Figuren 1 - 4E kommt bei der nachfolgenden beschriebenen Entsorgungsstation der Figuren 5A bis 12B zum Einsatz. Fig. 5A bis 12B zeigen eine bevorzugte Ausführungsform der erfindungsgemäßen Entsorgungsstation in unterschiedlichen Ansichten und Perspektiven, so dass alle wesentliche Bestandteile der Erfindung gezeigt werden. Zusätzlich zu den Darstellungen der unterschiedlichen Ansichten und Perspektiven ist die erfindungsgemäße Entsorgungsstation in der jeweiligen Ansicht und Perspektive jeweils mit und ohne Gehäuse dargestellt. Ferner sind die Darstellungen mit Gehäuse jeweils mit verschlossenen Klappen und/oder Wartungsklappen und geöffneten Klappen und/oder Wartungsklappen ausgeführt. Gemäß dieser bevorzugten Ausführungsform sind sämtliche Bestandteile innerhalb des Gehäuses angeordnet. Die Figuren zeigen eine kompakte Bauform der erfindungsgemä-βen Entsorgungsstation gemäß der bevorzugten Ausführungsform in einer Nicht-Betriebsposition, wobei sich eine Entsorgungsvorrichtung in einer Parkposition, ein Absaugschlauch in einer Lagerstellung sowie ein Frischwasserschlauch und ein Abwasserschlauch in einer Speicherstellung befinden.

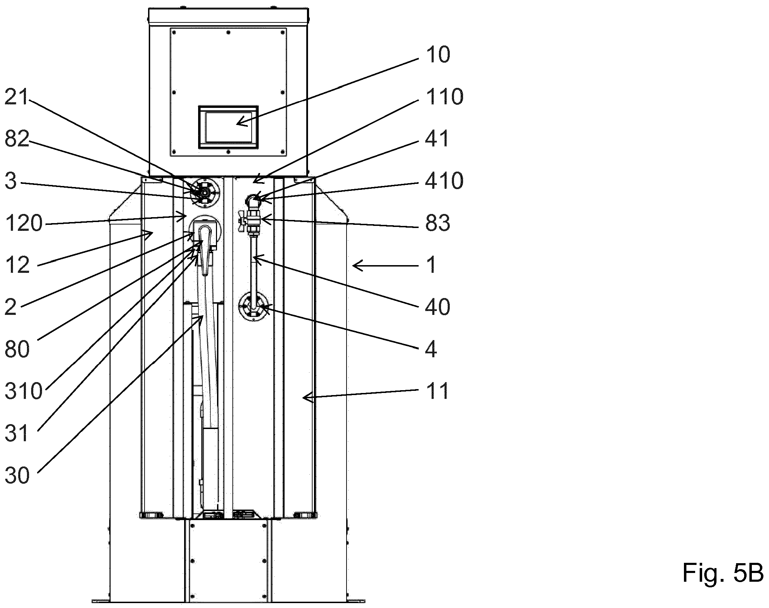

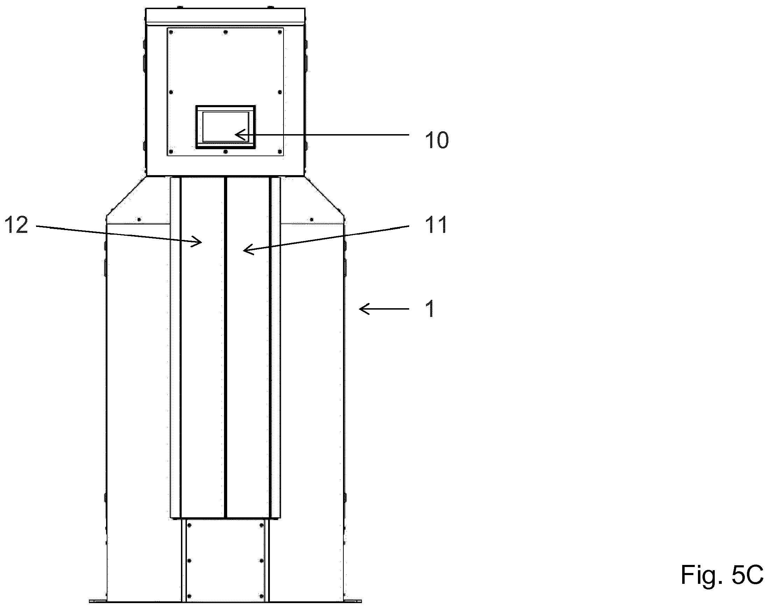

Fig. 5A bis 5C zeigen eine Vorderansicht der erfindungsgemäßen Entsorgungsstation mit einem Bedienfeld 10 in einer Darstellung ohne einem Gehäuse 1 (Fig. 5A), mit dem Gehäuse 1 und geöffneten Klappen 11, 12 (Fig. 5B) und mit dem Gehäuse 1 und geschlossenen Klappen 11, 12 (Fig. 5C) gemäß einer bevorzugten Ausführungsform. Das Bedienfeld 10 ist oberhalb einer Entnahmestelle ausgeführt. Die Entnahmestelle beinhaltet einen Absaugschlauch 30, einen Brauchwasserschlauch 21 sowie einen Frischwasserschlauch 40 und ist aus zwei Einhausungen 110, 120, welche von zwei Klappen 11, 12 abdeckbar sind, ausgestaltet.

In der Fig. 5A ist eine Steuerungseinrichtung 100 räumlich hinter einem Bedienfeld 10 angeordnet. Die erfindungsgemäße Entsorgungsstation umfasst einen Absaugschlauch 30, dessen erstes Schlauchende einlassseitig mit einer Förderpumpe 70 verbunden ist und dessen zweites Schlauchende 32 aus einer ersten Aufnahmeöffnung 2 hervorsteht und über ein erstes Kupplungssteil 31 mit einer korrespondierenden ersten Aufnahmeeinheit 310 lösbar verbunden ist. Das erste Kupplungsteil 31 kann in einer Betriebsposition entweder mit einem korrespondierenden Kupplungsteil eines Absaugstutzens eines Fahrzeugabwassertanks (nicht dargestellt) oder mit einem korrespondierenden zweiten Kupplungsteil einer Absaugöffnung einer positionierbaren Entsorgungsvorrichtung (in Fig. 5A bis 5C nicht dargestellt) verbunden werden. Gemäß der bevorzugten Ausführungsform sind das erste Kupplungsteil 31 und die erste Aufnahmeeinheit 310 als Kupplungsteile einer Camlock-Kupplung ausgebildet.

Ferner weist die Entsorgungsstation eine mit der Förderpumpe 70 und somit mit dem Abwasserschlauch 30 verbundene Abwasserableitung 300, die eine Anschlussmöglichkeit 301 zum Anschluss an einen Abwassersammeltank (nicht dargestellt) oder eine Kanalisation (nicht dargestellt) aufweist. Aufgrund der Ausrichtung der Abwasserableitung 300 in Schwerkraftrichtung kann der Anschluss an die Kanalisation oder den Abwassersammeltank unterhalb bzw. im unteren Teil der Entsorgungsstation ausgebildet sein. Dadurch kann ein abgesaugtes Fluid einfach mittels Schwerkraft entsorgt werden.

Gemäß der bevorzugten Ausführungsform ist die Entsorgungsstation weiter als eine Versorgungsstation ausgebildet und umfasst sowohl einen Frischwasserschlauch 40 als auch einen Brauchwasserschlauch 21.

Der Brauchwasserschlauch 21 ist durch eine zweite Aufnahmeöffnung 3 hindurchgeführt und steht aus dieser hervor. Die zweite Aufnahmeöffnung 3 ist derart ausgebildet, dass der Brauchwasserschlauch 21 nicht in das Innere der Entsorgungsstation rutschen kann. Der Brauchwasserschlauch 21 weist ein viertes Kupplungsteil in Form einer Gardena-Kupplung auf.

Der Frischwasserschlauch 40 steht aus einer dritten Aufnahmeöffnung 4 hervor und ist über ein fünftes Kupplungsteil 41 in Form einer GEKA-Kupplung mit einer zweiten Aufnahmeeinheit 410 in Form eines korrespondierenden Kupplungsteil lösbar verbunden. Die Frischwasserversorgung wird über eine Frischwasserversorgungsleitung 44 ermöglicht. Die Frischwasserversorgungsleitung 44 kann bevorzugt an das Trinkwassernetz angeschlossen werden (nicht dargestellt), um eine Versorgung aufgrund eines Systemdrucks des Trinkwassernetzes zu ermöglichen. Ferner ist an der Frischwasserversorgungsleitung 44 ein Wasserzähler vorgesehen, der ein Volumen einer durchflossenen Wassermenge anzeigt.

Das erste Kupplungsteil 31 (Camlock-Kupplungsteil), das vierte Kupplungsteil 22 (Gardena-Kupplungsteil) und das fünfte Kupplungsteil 41 (GEKA-Kupplungsteil) und somit auch die erste Aufnahmeeinheit 310 (Camlock-Kupplungsteil) und die zweite Aufnahmeeinheit 410 (GEKA Kupplungsteil) sind ersichtlich unterschiedlich ausgebildet. Durch diese Ausgestaltung kann ein versehentliches Falschanschließen und somit eine Dekontamination des Frischwasserschlauchs 40 und somit des auch des Frischwassers vermieden werden.

Gemäß der Ausführungsform weisen der Absaugschlauch 30 eine erste Absperrarmatur 80, der Brauchwasserschlauch 21 eine zweite Absperrarmatur 81 und der Frischwasserschlauch 40 eine dritte Absperrarmatur 82 auf. Die dritte Absperrarmatur 40 ist als Kugelhahn ausgebildet. Durch diese Ausgestaltung können die Schläuche 21, 30, 40 in dem Nicht-Betriebszustand verschlossen gelagert werden, sodass weder von außen etwas in die Schläuche noch Rückstände aus den Schläuchen nach außen gelangen kann.

Fig. 5B zeigt eine Vorderansicht der Entsorgungsvorrichtung gemäß der Fig. 5A in einem Gehäuse 1 mit geöffneten Klappen 11, 12. Die Klappen 11, 12 sind ein Teil des Gehäuses 1 und decken zwei nebeneinander angeordnete Einhausungen 110, 120 ab. Die zweite Einhausung 120 umfasst gemäß der bevorzugten Ausführungsform einen Brauchwasserschlauch 21 sowie einen Absaugschlauch 30. Die dritte Einhausung 110 umfasst einen Frischwasserschlauch 40. Sowohl der Frischwasserschlauch 40 als auch der Absaugschlauch 30 und der Brauchwasserschlauch 21 sind erfindungsgemäß entnehmbar in der jeweiligen Einhausung 110, 120 ausgestaltet. Durch diese Ausgestaltung kann der Frischwasserschlauch 40, der Absaugschlauch 30 und der Brauchwasserschlauch 21 in die jeweilige Einhausung 110, 120 eingeschoben werden, ein jeweiliges Kupplungsteil 41, 31 mit der jeweiligen korrespondierenden Aufnahmeeinheit 410, 310 verbunden werden und die Klappen 11, 12 geschlossen werden. In der bevorzugten Ausführungsform ist ein viertes Kupplungsteil 22 des Brauchwasserschlauchs 21 in der Nicht-Betriebsposition lose, also nicht mit einer korrespondierenden Aufnahmeeinheit verbunden, in der zweiten Einhausung 120 gelagert, da diese Zuleitung 21 weder vor Dekontamination geschützt werden muss, noch geschlossen ausgestaltet sein muss, um Gerüche zu vermeiden.

Aufgrund der räumlichen Trennung des Frischwasserschlauchs 40 von dem Absaugschlauch 30 und dem Brauchwasserschlauch 21 durch die zweite Einhausung 120 und die dritte Einhausung 110 kann ein Risiko der Dekontamination des Frischwasserschlauchs 40 und somit des Frischwassers gesenkt werden. Besonders bevorzugt sind die erste Klappe 12 der zweiten Einhausung 120 und die zweite Klappe 11 der dritten Einhausung nicht zeitgleich zu öffnen.

Fig. 5C zeigt die Vorderansicht der Entsorgungsvorrichtung gemäß der Fig. 5A in einem Gehäuse 1 mit geschlossenen Klappen 11, 12. Die Klappen 11, 12 decken eine zweite Einhausung 120 und eine dritte Einhausung 110 ab. Die erfindungsgemäße Entsorgungsvorrichtung ist im Wesentlichen wie eine Zapfsäule ausgebildet, die eine kompakte Bauform aufweist und durch die Klappen vor Vandalismus und Witterung geschützt ist.

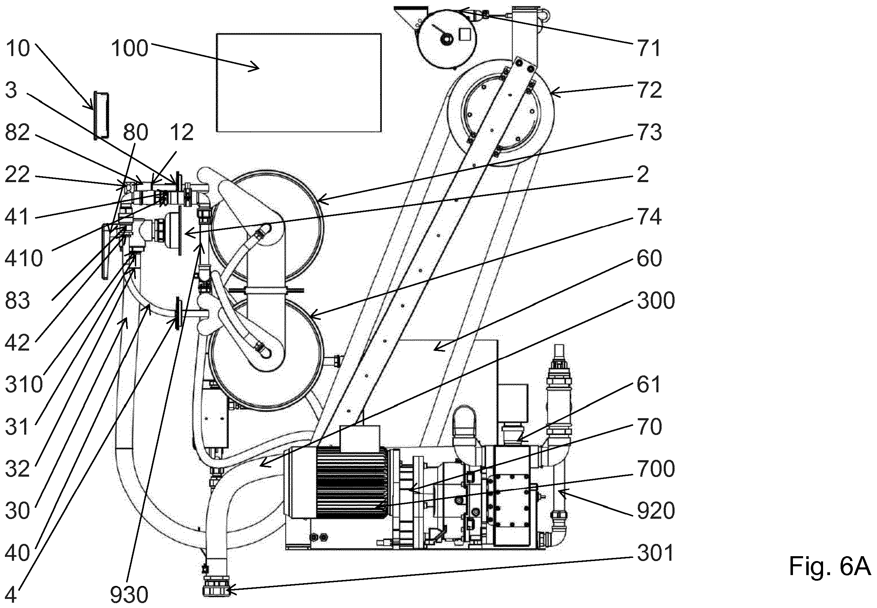

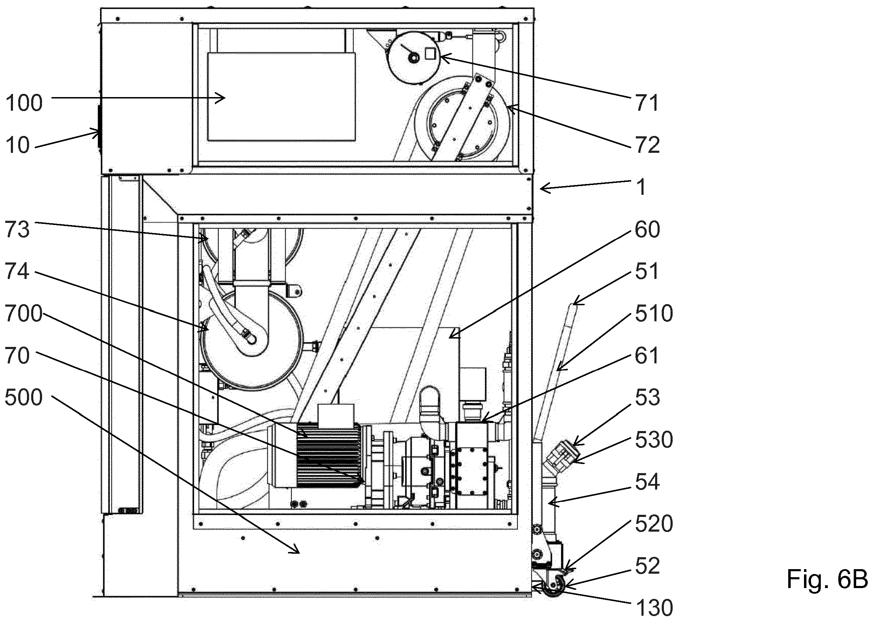

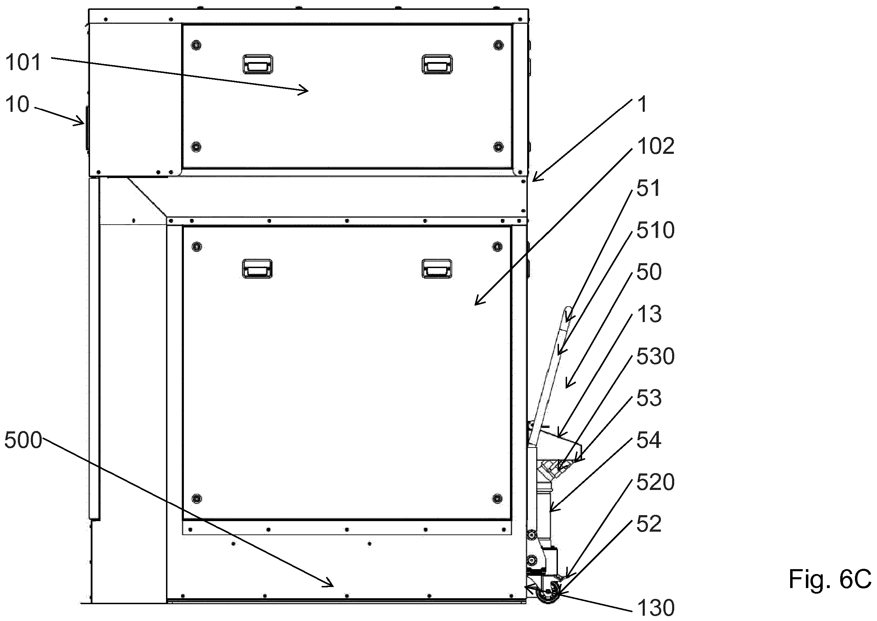

Fig. 6A bis 6C zeigen eine rechte Seitenansicht der erfindungsgemäßen Entsorgungsstation mit einem Bedienfeld 10 sowie ohne einem Gehäuse 1 (Fig. 6A), mit dem Gehäuse 1 aber ohne Wartungsklappen 101, 102 (Fig. 6B) oder mit dem Gehäuse 1 und Wartungsklappen 101, 102 (Fig. 6C) gemäß der bevorzugten Ausführungsform.

Fig. 6A zeigt die rechte Seitenansicht der Entsorgungsstation ohne ein Gehäuse 1. Die erfindungsgemäße Entsorgungsstation umfasst eine Absaugvorrichtung mit einer Förderpumpe 70, welche von einem Motor 700 angetrieben wird und mit einem ersten Schlauchende eines Absaugschlauchs 30 verbunden ist. Die Förderpumpe 70 ist auslassseitig über eine Abwasserableitung 300 mit einem Kanalisationsanschluss oder einem Abwassersammeltank verbindbar (nicht dargestellt). Durch diese Ausgestaltung kann abgesaugtes Grauwasser und/oder Schwarzwasser entsorgt werden.

Der Absaugschlauch 30, der Frischwasserschlauch 40 und der Brauchwasserschlauch können vorzugsweise zwischen 2 m und 30 m, besonders bevorzugt 5 m lang sein. Fig. 6A zeigt Vorrichtungen zur Aufbewahrung und zum Rückholen des Absaugschlauchs 30, des Frischwasserschlauchs 40 und des Brauchwasserschlauchs 21 in das Innere der Entsorgungsstation. Sowohl der Frischwasserschlauch 40 als auch der Brauchwasserschlauch 21 sind auf Haspeln 73, 74 angeordnet. Der Absaugschlauch 30 ist mittels eines Balancers 71 und einer Umlenkrolle 72 im Inneren der Entsorgungsstation gelagert.

Fig. 6B und 6C zeigen die Ausgestaltung des Gehäuses 1 mit und ohne einer ersten Wartungsklappe 101 und einer zweiten Wartungsklappe 102. Das Gehäuse umschließt einen Innenraum der Entsorgungsstation, welcher sämtliche Bestandteile der Entsorgungsstation beinhaltet. Die Wartungsklappen 101, 102 ermöglichen einen einfachen Zugang zu den einzelnen Bestandteilen um diese zu warten, zu reparieren und/oder auszutauschen.

Ferner zeigen Fig. 6B und 6C eine positionierbare Entsorgungsvorrichtung 50 in einer Parkposition. In der Parkposition sind sämtliche Bestandteile der Entsorgungsvorrichtung 50 in eine erste Einhausung 130 eingeschoben. Einige Bestandteile der Entsorgungsvorrichtung 50 stehen hierbei aus der Entsorgungsstation hervor. Nicht in die Entsorgungsstation eingeschoben und somit nicht von dem Gehäuse 1 umgeben sind ein Bügel 510 mit einem Griff 51, eine Lenkrolle 52 mit einer Fixiervorrichtung 520, die in der bevorzugten Ausführungsform als Total-Stopper für die Lenkrolle 520 ausgestaltet ist. Der Total-Stopper ist ausgebildet, um die positionierbare Entsorgungsvorrichtung 50 in einer Betriebsposition zu fixieren. Weiter nicht in die Entsorgungsstation eingeschoben sind ein Teil einer Abführleitung 54, deren Leitungsende eine Absaugöffnung 53 mit einem zweiten Kupplungsteil 530 aufweist. Die Absaugöffnung 53 der Entsorgungsvorrichtung 50 ist in einer Nicht-Betriebsposition durch eine Klappe 13, welche an dem Gehäuse 1 ausgebildet ist, abgedeckt. Das zweite Kupplungsteil 530 ist in einer Betriebsposition mit einem ersten Kupplungsteil 31 eines Absaugschlauchs 30 lösbar verbindbar. Die Klappe 13 wird auch elektromechanisch verriegelt.

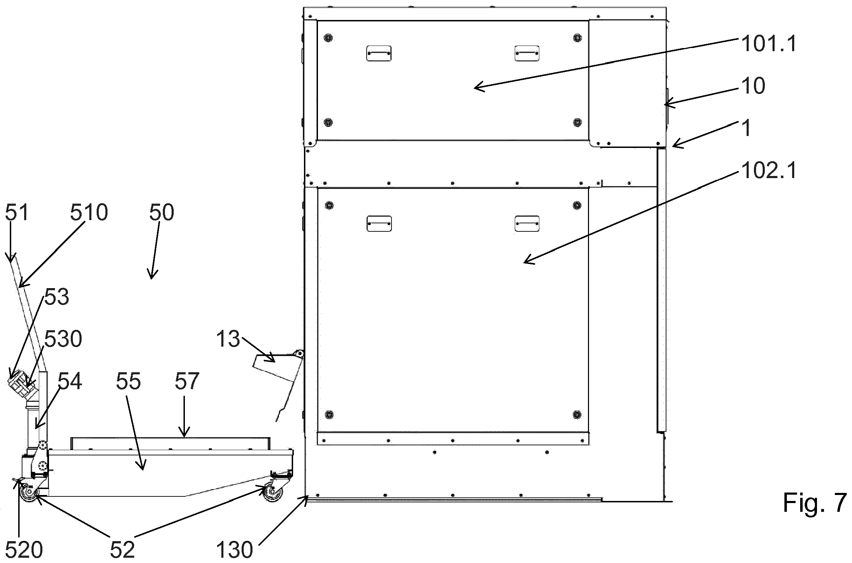

Fig. 7 zeigt die bevorzugte Ausführungsform der erfindungsgemäßen Entsorgungsstation mit Gehäuse 1 und geschlossenen Wartungsklappen 101.1, 102.2. Das Gehäuse umschließt einen Innenraum der Entsorgungsstation, welcher sämtliche Bestandteile beinhaltet und von dem Gehäuse 1 umgeben ist. Ferner ist die frei positionierbare Entsorgungsvorrichtung 50 aus der ersten Einhausung 130 der Entsorgungsstation herausgeschoben dargestellt. Die Entsorgungsvorrichtung 50 ähnelt in ihrer Ausgestaltung einem Wagen und weist ein Auffangbecken 55 mit einer oberen Beckenöffnung 57 und einen Absaugstutzen sowie einer Abführleitung 54 dessen Leitungsende den Absaugstutzen umfasst(nicht dargestellt). Ein zweites Leitungsende der Abführleitung 54 ist mit einer Absaugöffnung 53 verbunden. Ferner weist die frei positionierbare Entsorgungsvorrichtung 50 eine Lenkrollen 52 mit einer Fixiervorrichtungen 520, eine zweite Lenkrolle 52.1 und einen Bügel 510 mit einem Griff 51 auf. Dadurch ist die Entsorgungsvorrichtung 50 frei verfahrbar. Um die Entsorgungsvorrichtung 50 in der Betriebsposition zu fixieren ist die Fixiervorrichtung 520 der Lenkrolle 52 zu betätigen, so dass die Entsorgungsvorrichtung nicht mehr verfahrbar ist. In einem Betriebszustand ist das erste Kupplungsteil 31 des Absaugschlauchs 30 aus der korrespondierenden ersten Aufnahmeeinheit 310 zu lösen und mit dem Kupplungsteil 530 der Absaugöffnung 53 in Eingriff zu bringen.

Die Abführleitung 54 ist so ausgestaltet, dass die Absaugöffnung 53 nach oben gerichtet und in etwa auf Kniehöhe über einer Höhe des Auffangbeckens 55 ausgestaltet ist. Durch diese Ausgestaltung kann vermieden werden, dass nicht abgesaugtes Grauwasser und/oder Schwarzwasser nach lösen der Verbindung zwischen der Absaugöffnung 53 und dem Absaugschlauch 30 aus der Abführleitung 54 austritt. Vielmehr kann nicht abgesaugtes Grauwasser und/oder Schwarzwasser zurück in die Abführleitung 54 oder in das Auffangbecken 55 zurücklaufen,

Erfindungsgemäß weist das Auffangbecken 55 einen relativ zu einer horizontalen Ebene nach unten geneigten Boden auf. Der Absaugstutzen ist hierbei möglichst an dem tiefsten Punkt des Bodens ausgebildet, um ein optimales Abführen des aufgefangen Grauwassers und/oder Schwarzwassers zu ermöglichen.

Die Wartungsklappen 101, 101.1, 102, 102.1 sind in der Ausführungsform der beiliegenden Figuren sind auf einer Höhe der Seite des Gehäuses 1 ausgebildet, die einer Höhe zumindest eines wesentlichen Bestandteils der Entsorgungsstation entspricht, um den Zugang zu diesem zumindest einem wesentlichen Bestandteil zu ermöglichen. Die Wartungsklappen 101, 101.1, 102, 102.1 sind hierbei unterschiedlich groß ausgebildet. Die Größe der Wartungsklappen 101, 101.1, 102, 102.1 sind abhängig von den jeweiligen Elemente der Entsorgungsstation zu denen die Wartungsklappen 101, 101.1, 102, 102.2 einen Zugang gewährleisten sollen.

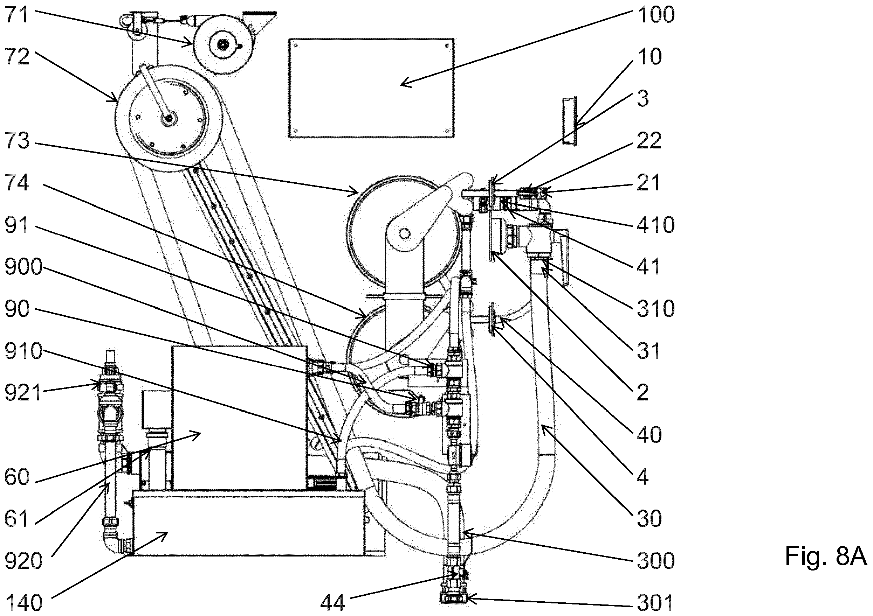

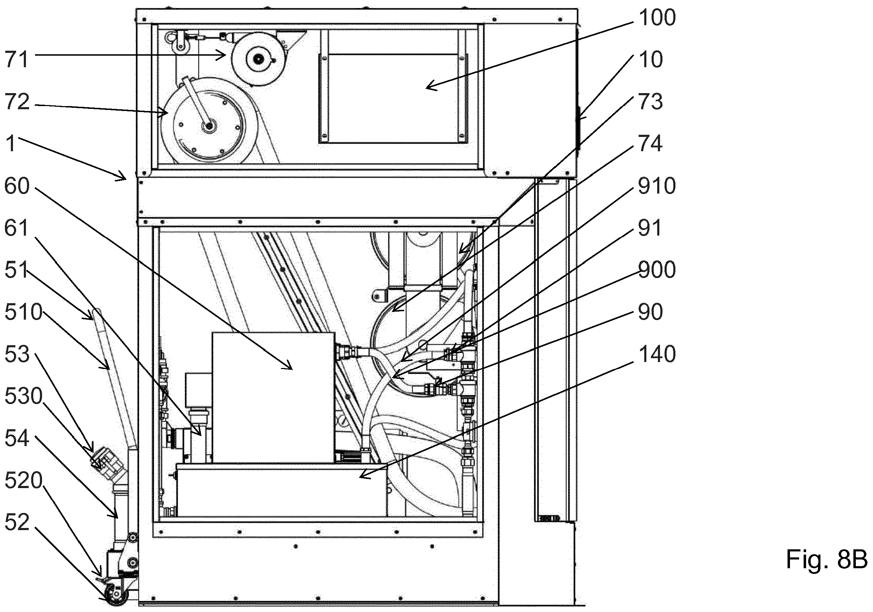

Fig. 8A und 8B zeigen die erfindungsgemäße Entsorgungsstation gemäß der bevorzugten Ausführungsform in einer Seitenansicht von links, ohne einem Gehäuse 1 sowie mit dem Gehäuse 1 und ohne Wartungsklappen 101.1, 102.1. Ohne der dritten Wartungsklappe 101.1 und der vierten Wartungsklappe 102.1 ist ein einfacher Zugang zu den einzelnen Bestandteilen in einem Innenraum der Entsorgungsstation gewährleistet. Dieser ermöglicht eine Wartung, eine Reparatur und/oder einen Austausch der Bestandteile. In der Seitenansicht von links der Figuren 8A und 8B ist ferner ein Auffangbehälter 140 unter einem Systemtrenner 60 angeordnet.

Gemäß der Ausführungsform ist die zweite Aufnahmeeinheit 410 des Frischwasserschlauchs 40 mit einem Frischwasserspülschlauch 930 verbunden, der ausgebildet ist, um den Frischwasserschlauch 40 zu spülen. Der Frischwasserspülschlauch 930 ist auslassseitig mit einem Auffangbehälter 140 verbunden ist, um Frischwasser einer Frischwasserspülung abzuführen.

An der Frischwasserversorgungsleitung 44 ist eine erste Absperrarmatur mit einem ersten Ventil 90 und eine der ersten Absperrarmatur mit dem ersten Ventil 90 nachgelagerte zweite Absperrarmatur mit zweiten Ventil ausgebildet. Die erste Absperrarmatur mit dem ersten Ventil 90 ist auslassseitig mit einer ersten Frischwasserableitung 900 verbunden sein. Die erste Frischwasserableitung 900, die einlassseitig über die erste Absperrarmatur und das erste Ventil 90 mit der Frischwasserversorgungsleitung 44 verbunden ist, kann auslassseitig mit dem Systemtrenner 60 verbunden sein. Die zweite Absperrarmatur mit dem zweiten Ventil 91 kann hierbei auslassseitig mit einer zweiten Frischwasserableitung 910 verbunden sein. Die zweite Frischwasserableitung 910, die einlassseitig über die zweite Absperrarmatur und das zweite Ventil 91 mit der Frischwasserversorgungsleitung 44 verbunden ist, kann auslassseitig mit dem Auffangbehälter 140 verbunden sein. Die Frischwasserversorgungsleitung 44 beschreibt hierbei die Leitung die mit dem Frischwassertank und/oder dem Trinkwassernetz verbindbar ist.

Vorzugsweise kann die Brauchwasserversorgung über den Systemtrenner 60 erfolgen. Der Systemtrenner 60 ist einlassseitig mit der ersten Frischwasserableitung 900 verbunden und verhindert hierdurch, dass Nicht-Frischwasser, das in den Systemtrenner 60 geleitet wird in die Frischwasserversorgung aufgrund Druckveränderungen zurückfließen kann und Keime in das Frischwassernetz gelangen können. Der Systemtrenner 60 ist weiter über eine Leitung 61 mit dem Auffangbehälter 140 verbunden, um nicht zu verwendendes Wasser in den Auffangbehälter 140 zu leiten.

Der Auffangbehälter 140 ist auslassseitig über eine Ableitung 920, die eine weitere Absperrarmatur 921 aufweist, mit der Förderpumpe 70 verbunden, um das in dem Auffangbehälter 140 gesammelte Wasser gemeinsam mit dem aus dem Fahrzeug abgeleiteten Abwasser bzw. zumindest über die selbe Abwasserableitung 300 zu entsorgen. Die Absperrarmatur 920, die nur geöffnet wird, wenn Wasser aus dem Auffangbehälter abzuleiten ist, verhindert, dass Bestandteile des Abwassers in den Auffangbehälter gelangen.

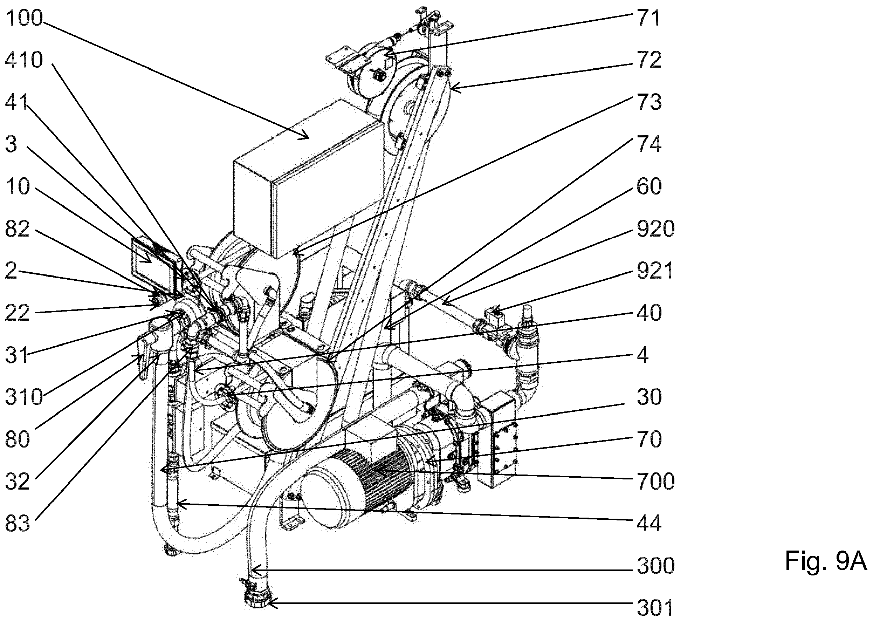

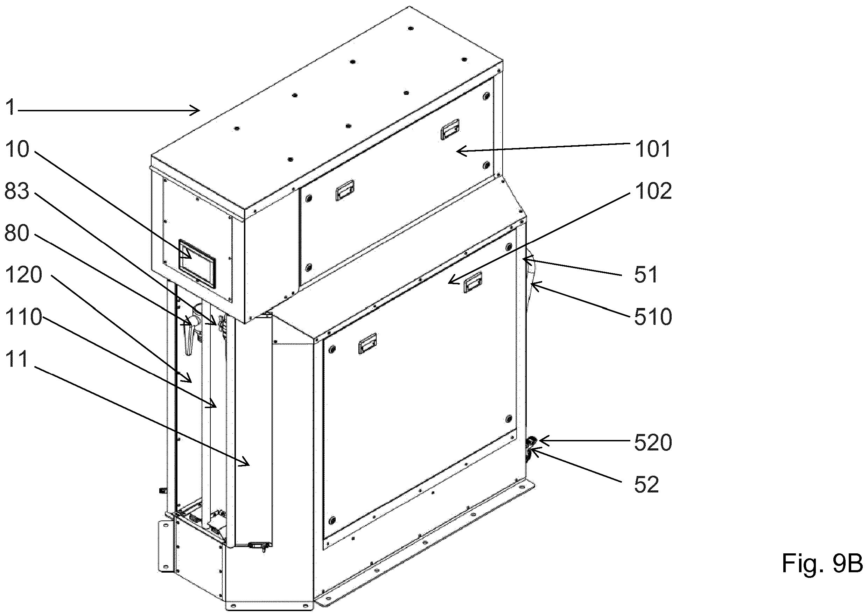

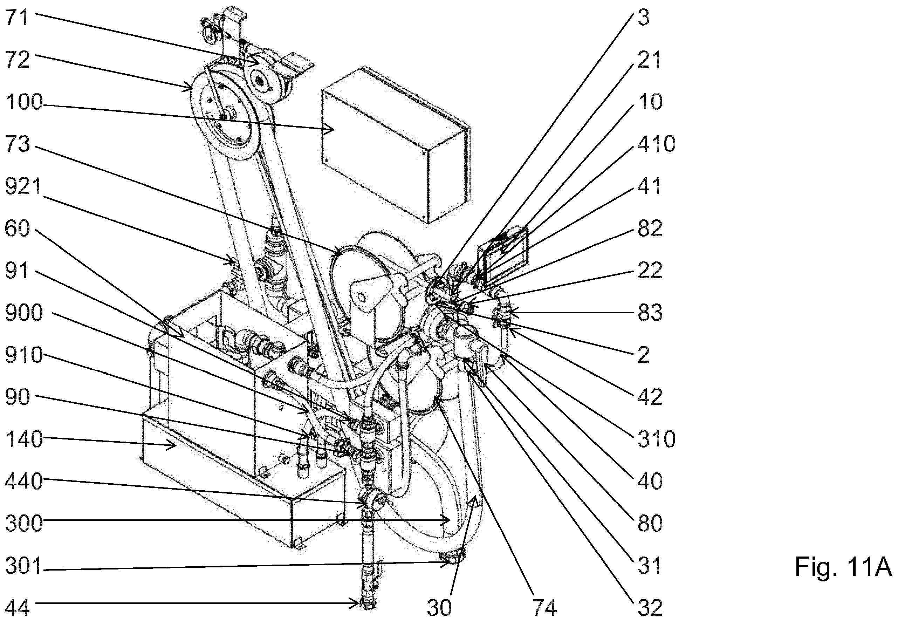

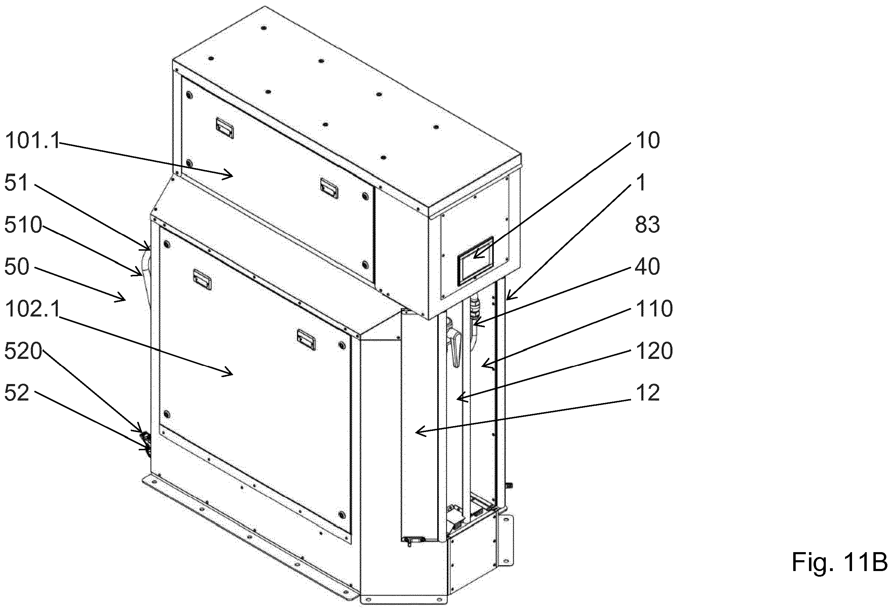

In Fig. 9A bis 10B sind perspektivische Seitenansichten von links der erfindungsgemäßen Entsorgungsstation gemäß der bevorzugten Ausführungsform dargestellt. Fig. 11A bis 12B zeigen entsprechende perspektivische Seitenansichten von rechts der erfindungsgemäßen Entsorgungsstation gemäß der bevorzugten Ausführungsform. Die Die perspektivischen Ansichten der erfindungsgemäßen Entsorgungsstation gemäß Fig. 9A bis 12B zeigen die bereits aufgeführten Elemente Fig. 5A bis 8B in anderen Perspektiven. Die Bezugszeichen entsprechen einander.

### Bezugszeichenliste

- 1: Gehäuse
- 2: erste Aufnahmeöffnung
- 3: zweite Aufnahmeöffnung
- 4: dritte Aufnahmeöffnung
- 10: Bedienfeld / Benutzerschnittstelle
- 11: zweite Klappe
- 12: erste Klappe
- 13: dritte Klappe
- 21: Brauchwasserschlauch
- 22: viertes Kupplungsteil
- 30: Absaugschlauch
- 31: erstes Kupplungsteil
- 32: zweites Schlauchende des Absaugschlauchs 30
- 40: Frischwasserschlauch
- 41: fünftes Kupplungsteil
- 42: Schlauchende des Trinkwasserschlauch 40
- 44: Frischwasserversorgungsleitung
- 50: positionierbare Entsorgungsvorrichtung
- 51: Griff
- 52: Lenkrolle
- 52.1: zweite Lenkrolle
- 53: Absaugöffnung
- 54: Abführleitung
- 55: Auffangbecken
- 56: oberer Rand des Auffangbeckens 55
- 57: Auffangbeckenöffnung
- 60: Systemtrenner
- 61: Leitung
- 70: Förderpumpe
- 71: Balancer für Absaugschlauch 30
- 72: Umlenkrolle für Absaugschlauch 30
- 73: Haspel für Spülwasserzuleitung 21
- 74: Haspel für Trinkwasserzuleitung 40
- 80: erste Absperrarmatur
- 82: zweite Absperrarmatur
- 83: dritte Absperrarmatur
- 90: erste Absperrarmatur mit erstem Ventil
- 91: zweite Absperrarmatur mit zweiten Ventil
- 100: Steuerungseinrichtung
- 101: erste Wartungsklappe
- 101.1: dritte Wartungsklappe
- 102: zweite Wartungsklappe
- 102.1: vierte Wartungsklappe
- 110: dritte Einhausung
- 120: zweite Einhausung
- 130: erste Einhausung
- 140: Auffangbehälter
- 300: Abwasserableitung
- 301: Anschlussmöglichkeit der Abwasserableitung 300
- 310: erste Aufnahmeeinheit
- 410: zweite Aufnahmeeinheit
- 440: Wasserzähler
- 510: Bügel
- 520: Fixiervorrichtung
- 530: zweites Kupplungsteil
- 700: Motor
- 900: erste Frischwasserableitung
- 910: zweite Frischwasserableitung
- 920: Ableitung
- 921: Absperrarmatur
- 930: Frischwasserspülschlauch
- 1010: Drehkolbenpumpe
- 1011: Absaugleitung
- 1012: Bajonettanschlusskupplung /Anschlusskupplung
- 1013: Abwasserleitung
- 1015: Abwasserschlauch
- 1020: Systemtrenner
- 1021: Frischwasserleitung
- 1025: Systemtrennerpumpe
- 1030: Spültank / Spülwasserbehälter
- 1031: Spülwasserleitung
- 1040: Abwasserbehälter
- 1041: Absaug- und Spülanschlussflansch
- 1043: Absaug- und Spülkanal
- 1043a: untere Ende einer Absaugglocke
- 1044: unteren umlaufenden Rand
- 1044a,b: Ausnehmung
- 10143: Absaug- und Spülkanal
- 10243: Absaugkanal
- 10245: Spülkanal /Spülkanäle
- 10245a,b: Ausnehmungen
- 10345: Spülkanal
- 10345a,b: Öffnungen
- 10443: Absaugkanal
- 10445: Spülkanal
- 10445a: Düse
- 10100: Längsachse

## Patentansprüche

1. Absaugvorrichtung für Abwasserbehälter (1040), umfassend:
- einen Absaugkanal (1043, 10143, 10243, 10443) der sich von einem zur Befestigung im Bereich einer Öffnung des Abwasserbehälters ausgebildeten Absauganschlussflansch (1041) zu einer Absaugöffnung erstreckt,
- eine Anschlusskupplung (1012), die sich von dem Absauganschlussflansch erstreckt,
wobei die Anschlusskupplung und der Absaugkanal in Bezug auf den Absauganschlussflansch solcherart angeordnet sind, dass bei dem im Bereich der Öffnung des Abwasserbehälters montierten Absauganschlussflansch sich der Absaugkanal in den Abwassertank hinein erstreckt und die Anschlusskupplung außerhalb des Abwasserbehälters angeordnet ist,
- eine Absaugpumpe (1010) mit einer Verbindungsleitung (1011), die mit der Anschlusskupplung (1012) flüssigkeitsdicht verbindbar ist, und
- eine Pumpensteuerungseinheit (100), die zur Ansteuerung der Absaugpumpe mit dieser signaltechnisch verbunden ist, und einen Spülkanal (1043, 10143, 10245, 10345, 10445), der sich von
einem zur Befestigung im Bereich einer Öffnung des Abwasserbehälters ausgebildeten Spülanschlussflansch (1041) zu einer Spülöffnung erstreckt, wobei die Pumpensteuerungseinheit ausgebildet ist, um einen Absaugvorgang solcherart zu steuern, dass mittels der Absaugpumpe ein Absaugvorgang von Abwasser aus dem Abwasserbehälter durch den Absaugkanal, die Verbindungsleitung und die Absaugpumpe erfolgt, und
- ein Spülvorgang des Abwasserbehälters durch den Spülkanal erfolgt, **dadurch gekennzeichnet, dass** die Absaugpumpe als Saug- und Spülpumpe (1010) ausgebildet ist und die Pumpensteuerungseinheit ausgebildet ist, um die Absaugpumpe solcherart anzusteuern, dass
- in einem ersten Schritt ein Absaugvorgang von Abwasser aus dem Abwasserbehälter durch den Absaugkanal und die Verbindungsleitung erfolgt,
- in einem zweiten Schritt die Förderrichtung der Absaugpumpe umgekehrt wird und ein Spülvorgang des Abwasserbehälters durch den Spülkanal erfolgt, und
- in einem dritten Schritt die Förderrichtung der Absaugpumpe erneut umgekehrt wird und ein Absaugvorgang aus dem Abwasserbehälter durch den Absaugkanal und die Verbindungsleitung erfolgt.

2. Absaugvorrichtung nach Anspruch 1,
**dadurch gekennzeichnet, dass** der Spülkanal im Bereich der Absaugöffnung
- einen umlaufenden Rand (1044) aufweist, der eine axiale Öffnung umgibt und der mindestens eine, vorzugsweise mehrere, sich axial erstreckende Randausnehmungen (1044a, b) aufweist,
- mehrere radiale Öffnungen (10345a, b) aufweist, oder
- eine drehbar gelagerte Düse (10445a) aufweist, die ausgebildet ist, um durch das beim Spülvorgang durch den Absaugkanal strömende Wasser in Rotation versetzt zu werden und das Spülwasser in einer Richtung mit radialer Richtungskomponente in einem um die Längsachse des Absaugkanals umlaufenden Winkel ausströmen lässt.

3. Absaugvorrichtung nach einem der vorhergehenden Ansprüche,
**dadurch gekennzeichnet, dass** der Absaugkanal im Bereich der Absaugöffnung als Absaugglocke (1043a) ausgeformt ist, die einen Glockeninnendurchmesser aufweist, der größer ist als der Durchmesser des Absaugkanals im Bereich des Anschlussflansches.

4. Absaugvorrichtung nach einem der vorhergehenden Ansprüche,
**dadurch gekennzeichnet, dass** der Absaugkanal im Bereich der Absaugöffnung aus gummielastischem Material ausgebildet ist.

5. Absaugvorrichtung nach einem der vorhergehenden Ansprüche,
**dadurch gekennzeichnet, dass** der Absaugkanal und der Spülkanal als ein integraler Absaug- und Spülkanal (1043, 10143) ausgebildet sind und dass der Absauganschlussflansch und der Spülanschlussflansch als integraler Absaug- und Spülanschlussflansch (1041) ausgebildet sind, von dem sich der Absaug- und Spülkanal erstreckt.

6. Absaugvorrichtung nach einem der vorhergehenden Ansprüche,
**dadurch gekennzeichnet, dass** die Absaugpumpe auf der der Verbindungsleitung gegenüberliegenden Anschlussseite über eine Ventilvorrichtung mit einer Abwasserleitung und mit einer Spülwasserleitung verbunden ist, wobei
- die Ventilvorrichtung vorzugsweise ausgebildet ist, um die Absaugpumpe während des ersten und dritten Schritts mit der Abwasserleitung zu verbinden und während des zweiten Schritts mit der Spülwasserleitung zu verbinden,
- die Ventilvorrichtung vorzugsweise ausgebildet ist, um einen Zutritt von Abwasser in die Spülleitung zu sperren,
- die Ventilvorrichtung vorzugsweise einen Systemtrenner umfasst, der an eine Trinkwasserleitung angeschlossen ist und das daraus bezogene Trinkwasser als Spülwasser bereitstellt und den Zutritt von Spülwasser oder Abwasser in die Trinkwasserleitung sperrt.

7. Absaugvorrichtung nach einem der vorhergehenden Ansprüche,
**dadurch gekennzeichnet, dass** die Absaugpumpe eine Drehkolbenpumpe ist, die von der Pumpensteuerungseinheit zur Drehrichtungsumkehr zwischen dem ersten und zweiten Schritt und zwischen dem zweiten und dritten Schritt angesteuert wird.

8. Absaugvorrichtung nach einem der vorhergehenden Ansprüche,
**gekennzeichnet durch** eine Be- und Entlüftungseinheit, die einen Zutritt von Luft in den Abwasserbehälter während des Absaugens und ein Entweichen von Luft aus dem Abwasserbehälter während des Spülens ermöglicht, wobei die Be- und Entlüftungseinheit vorzugsweise im Flanschanschluss ausgebildet ist.

9. Verfahren zum Absaugen von Abwasser aus einem Abwasserbehälter, mit den Schritten:
a) Absaugen des Abwassers aus dem Abwasserbehälter durch einen Absaugkanal (1043, 10143), der sich in den Abwasserbehälter (1040) erstreckt, vorzugsweise bis einige Millimeter über den Innenboden des Abwasserbehälters, mittels einer Absaugpumpe (1010) in einer Absaugförderrichtung,
b) Spülen des Abwasserbehälters über einen Spülkanal (1043, 10143) in einer zur Absaugförderrichtung entgegengesetzten Spülförderrichtung,
c) Absaugen des Spül- und Abwassers aus dem Abwasserbehälter durch den Absaugkanal mittels der Absaugpumpe in der Absaugförderrichtung,
**dadurch gekennzeichnet, dass** die Pumprichtung der Absaugpumpe zwischen Schritt a) und b) und zwischen Schritt b) und c) geändert wird, und
der Absaugkanal und der Spülkanal durch einen integralen Absaug- und Spülkanal (1043,10143) gebildet werden und das Absaugen in Schritt a) und c) und das Spülen in Schritt b) mittels der Absaugpumpe durch den Absaug- und Spülkanal erfolgt.

10. Verfahren nach Anspruch 9,
**dadurch gekennzeichnet, dass** in Schritt b) der Abwasserbehälter bodennah mittels mindestens eines radial aus dem Spülkanal geführten Spülwasserstrahls gespült wird; und/oder in Schritt b) mit Spülwasser gespült wird und weiterhin umfassend den Schritt: Bereitstellen von Spülwasser aus einer Frischwasserquelle und Trennen des Systems aus Abwasserführung und Frischwasserquelle zur Vermeidung von Rückfluss von Abwasser zu der Frischwasserquelle

11. Entsorgungsstation für ein Fahrzeug, insbesondere für einen Reisebus, umfassend
- eine Absaugvorrichtung nach einem der Ansprüche 1 bis 8, mit einer Förderpumpe (70), welche einlassseitig mit einem ersten Schlauchende eines Absaugschlauchs (30) verbunden ist.

12. Entsorgungsstation nach Anspruch 11, weiterhin umfassend eine positionierbare, relativ zur Förderpumpe (70) bewegbare Entsorgungsvorrichtung (50) mit einem Auffangbecken (55), welches einen oberen Rand (56), eine sich von dem oberen Rand (56) zu einem unteren Boden des Auffangbeckens (55) erstreckende Beckenwandung und eine Abführeinheit aufweist, und mit einer Absaugöffnung (53), die mittels einer Abführleitung (54) mit der Abführeinheit des Auffangbeckens (55) verbunden ist,
**dadurch gekennzeichnet, dass** die Absaugöffnung (53) in Schwerkraftrichtung oberhalb des oberen Randes (56) des Auffangbeckens (55) angeordnet ist und
weiter **dadurch gekennzeichnet, dass** ein zweites Schlauchende (32) eines Absaugschlauchs (30) ein erstes Kupplungsteil (31) aufweist, das mit einem zweiten Kupplungsteil (530), das an der Absaugöffnung (53) ausgebildet ist, lösbar koppelbar ist.

13. Entsorgungsstation nach Anspruch 12, **dadurch gekennzeichnet, dass** die Abführeinheit als ein Absaugstutzen ausgebildet ist, welcher in dem Auffangbecken (55) insbesondere im Bereich des unteren Bodens angeordnet ist und weiter **dadurch gekennzeichnet, dass** die Abführleitung (54) den Absaugstutzen umfasst.

14. Entsorgungsstation nach einem der vorstehenden Ansprüche 12-13, **dadurch gekennzeichnet, dass** das erste Kupplungsteil (31) des zweiten Schlauchendes (32) wahlweise
- mit dem zweiten Kupplungsteil (530), das um die Absaugöffnung (53) angeordnet ist, oder
- mit einem dritten Kupplungsteil, das um einen Absaugstutzen eines Abwassertanks des Fahrzeugs angeordnet ist, ,
lösbar koppelbar ist.

## Claims

1. Suction device for wastewater tank (1040), comprising:
- a suction channel (1043, 10143, 10243, 10443) extending from a suction connection flange (1041) formed for attachment in the region of an opening of the wastewater tank to a suction opening,
- a connection coupling (1012) extending from the suction connection flange, wherein the connection coupling and the suction channel are arranged with respect to the suction connection flange in such a way that, with the suction connection flange mounted in the region of the opening of the wastewater tank, the suction channel extends into the wastewater tank and the connection coupling is arranged outside the wastewater tank,
- a suction pump (1010) having a connection line (1011) which can be connected to the connection coupling (1012) in a fluid-tight manner, and
- a pump control unit (100) which is signal-connected to the suction pump for controlling the latter, and
- a flushing channel (1043, 10143, 10245, 10345, 10445) which extends from a flushing connection flange (1041), which is designed for fastening in the region of an opening of the wastewater tank to a flushing opening,
- the pump control unit being designed to control a suction operation in such a way that
o a suction operation of wastewater from the wastewater tank is carried out by means of the suction pump through the suction channel, the connecting line and the suction pump, and
o a flushing process of the waste water tank is carried out through the flushing channel,
**characterized in that** the suction pump is configured as a suction and flushing pump (1010), and the pump control unit is configured to control the suction pump such that
- in a first step, a suction process of waste water from the waste water tank through the suction channel and the connecting line takes place,
- in a second step, the direction of delivery of the suction pump is reversed and a flushing process of the waste water tank through the flushing channel takes place, and
- in a third step, the direction of delivery of the suction pump is reversed again and a suction operation is performed from the wastewater tank through the suction channel and the connecting pipe.

2. Suction device according to claim 1,
**characterized in that** the flushing channel in the area of the suction opening
- has a circumferential edge (1044) which surrounds an axial opening and which has at least one, preferably several, axially extending edge recesses (1044a, b),
- has multiple radial openings (10345a, b), or
- has a rotatably mounted nozzle (10445a) configured to be rotated by the water flowing through the suction channel during the flushing operation and to discharge the flushing water in a direction having a radial directional component at an angle circumferential about the longitudinal axis of the suction channel.

3. Suction device according to any one of the preceding claims,
**characterized in that** the suction channel in the region of the suction opening is formed as a suction bell (1043a), which has a bell inner diameter that is larger than the diameter of the suction channel in the region of the connecting flange.

4. Suction device according to any one of the preceding claims,
**characterized in that** the suction channel in the area of the suction opening is made of rubber-elastic material.

5. Suction device according to any one of the preceding claims,
**characterized in that** the suction channel and the flushing channel are formed as an integral suction and flushing channel (1043, 10143), and **in that** the suction connection flange and the flushing connection flange are formed as an integral suction and flushing connection flange (1041) from which the suction and flushing channel extends.

6. Suction device according to any one of the preceding claims,
**characterized in that** the suction pump is connected to a waste water line and to a flushing water line via a valve device on the connection side opposite the connection line, wherein
- the valve device is preferably designed to connect the suction pump to the waste water line during the first and third steps and to the flushing water line during the second step,
- the valve device is preferably designed to block access of waste water into the flushing line,
- the valve device preferably comprises a system separator which is connected to a drinking water line and provides the drinking water drawn therefrom as flushing water and blocks the entry of flushing water or waste water into the drinking water line.

7. Suction device according to any one of the preceding claims,
**characterized in that** the suction pump is a rotary piston pump which is controlled by the pump control unit to reverse the direction of rotation between the first and second steps and between the second and third steps.

8. Suction device according to any one of the preceding claims,
**characterized by** an aeration and deaeration unit which allows air to enter the wastewater tank during suction and air to escape from the wastewater tank during flushing, the aeration and deaeration unit preferably being formed in the flange connection.

9. A method of siphoning wastewater from a wastewater tank, comprising the steps of:
a) Suction of the waste water from the waste water tank through a suction channel (1043; 10143) extending into the waste water tank (1040), preferably up to a few millimeters above the inner bottom of the waste water tank, by means of a suction pump (1010) in a suction conveying direction,
b) Flushing of the waste water tank via a flushing channel (1043; 10143) in a flushing conveying direction opposite to the suction conveying direction,
c) Suction of the flushing and waste water from the waste water tank through the suction channel by means of the suction pump in the suction conveying direction,
**characterized in that** the pumping direction of the suction pump is changed between step a) and b) and between step b) and c), and
the suction channel and the flushing channel are formed by an integral suction and flushing channel (1043, 10143), and the suction in steps a) and c) and the flushing in step b) are performed by means of the suction pump through the suction and flushing channel.

10. The method of claim 9,
**characterized in that** in step b) the waste water tank is flushed near the bottom by means of at least one flushing water jet radially guided out of the flushing channel; and/or in step b) is flushed with flushing water and further comprising the step of: providing flushing water from a fresh water source and separating the system of waste water guide and fresh water source to avoid backflow of waste water to the fresh water source.

11. Waste disposal station for a vehicle, in particular for a coach, comprising
- A suction device according to any one of claims 1 to 8, comprising a feed pump (70) connected on the inlet side to a first hose end of a suction hose (30).

12. The disposal station of claim 11, further comprising a positionable disposal device (50) movable relative to the feed pump (70), comprising a catch basin (55) having an upper rim (56), a basin wall extending from the upper rim (56) to a lower bottom of the catch basin (55) and a discharge unit, and comprising a suction opening (53) connected to the discharge unit of the catch basin (55) by means of a discharge line (54),
**characterized in that** the suction opening (53) is arranged above the upper rim (56) of the catch basin (55) in the direction of gravity, and
further **characterized in that** a second hose end (32) of a suction hose (30) has a first coupling part (31) that is detachably couplable to a second coupling part (530) formed at the suction opening (53).

13. Disposal station according to claim 12, **characterized in that** the discharge unit is designed as a suction nozzle, which is arranged in the catch basin (55), in particular in the region of the lower bottom, and further **characterized in that** the discharge line (54) comprises the suction nozzle.

14. A disposal station according to any one of the preceding claims 12-13, **characterized in that** the first coupling part (31) of the second hose end (32) is selectively
- with the second coupling part (530) arranged around the suction opening (53), or
- with a third coupling part arranged around a suction nozzle of a waste water tank of the vehicle,
can be coupled in a detachable manner.

## Revendications

1. Dispositif d'évacuation par aspiration pour des contenants d'eaux usagées (1040), comprenant :
- un canal d'évacuation par aspiration (1043, 10143, 10243, 10443), qui s'étend depuis une bride de connexion d'évacuation par aspiration (1041) réalisée pour la fixation dans la zone d'une ouverture du contenant d'eaux usagées jusqu'à une ouverture d'évacuation par aspiration,
- un couplage de connexion (1012), qui s'étend depuis la bride de connexion d'évacuation par aspiration,
dans lequel le couplage de connexion et le canal d'évacuation par aspiration sont disposés par rapport à la bride de connexion d'évacuation par aspiration de telle manière que, lorsque la bride de connexion d'évacuation par aspiration est montée dans la zone de l'ouverture du contenant d'eaux usagées, le canal d'évacuation par aspiration s'étend à l'intérieur du réservoir d'eaux usagées et le couplage de connexion est disposé à l'extérieur du contenant d'eaux usagées,
- une pompe d'évacuation par aspiration (1010) avec un conduit de raccordement (1011), qui peut être raccordé de manière étanche aux liquides au couplage de connexion (1012), et
- une unité de commande de pompe (100), qui est raccordée par une technique de signalisation à la pompe d'évacuation par aspiration pour le pilotage de celle-ci, et un canal de rinçage (1043, 10143, 10245, 10345, 10445), qui s'étend depuis une bride de connexion de rinçage (1041) réalisée pour la fixation dans la zone d'une ouverture du contenant d'eaux usées jusqu'à une ouverture de rinçage, dans lequel l'unité de commande de pompe est réalisée pour commander une opération d'évacuation par aspiration de telle manière qu'une opération d'évacuation par aspiration d'eaux usées hors du contenant d'eaux usagées est effectuée par le canal d'évacuation par aspiration, le conduit de raccordement et la pompe d'évacuation par aspiration au moyen de la pompe d'évacuation par aspiration, et
- une opération de rinçage du contenant d'eaux usagées est effectuée par le canal de rinçage,
**caractérisé en ce que** la pompe d'évacuation par aspiration est réalisée en tant que pompe d'aspiration et de rinçage (1010) et l'unité de commande de pompe est réalisée pour piloter la pompe d'évacuation par aspiration de telle manière que
- lors d'une première étape, une opération d'évacuation par aspiration d'eaux usagées hors du contenant d'eaux usagées est effectuée par le canal d'évacuation par aspiration et le conduit de raccordement,
- lors d'une deuxième étape, la direction de refoulement de la pompe d'évacuation par aspiration est inversée et une opération de rinçage du contenant d'eaux usagées est effectuée par le canal de rinçage, et
- lors d'une troisième étape, la direction de refoulement de la pompe d'évacuation par aspiration est à nouveau inversée et une opération d'évacuation par aspiration hors du contenant d'eaux usagées est effectuée par le canal d'évacuation par aspiration et le conduit de raccordement.

2. Dispositif d'évacuation par aspiration selon la revendication 1,
**caractérisé en ce que** le canal de rinçage
- présente dans la zone de l'ouverture d'évacuation par aspiration un bord périphérique (1044), qui entoure une ouverture axiale et qui présente au moins un, de préférence plusieurs évidements de bord (1044a, b) s'étendant axialement,
- présente plusieurs ouvertures radiales (10345a, b), ou
- présente une buse (10445a) montée de manière à pouvoir tourner, qui est réalisée pour être amenée en rotation par l'eau s'écoulant à travers le canal d'évacuation par aspiration lors de l'opération de rinçage et qui évacue l'eau de rinçage dans une direction avec une composante directionnelle axiale selon un angle s'étendant tout autour de l'axe longitudinal du canal d'évacuation par aspiration.

3. Dispositif d'évacuation par aspiration selon l'une quelconque des revendications précédentes,
**caractérisé en ce que** le canal d'évacuation par aspiration est formé dans la zone de l'ouverture d'évacuation par aspiration en tant que cloche d'évacuation par aspiration (1043a), qui présente un diamètre intérieur de cloche qui est plus grand que le diamètre du canal d'évacuation par aspiration dans la zone de la bride de connexion.

4. Dispositif d'évacuation par aspiration selon l'une quelconque des revendications précédentes,
**caractérisé en ce que** le canal d'évacuation par aspiration est réalisé dans la zone de l'ouverture d'évacuation par aspiration à partir de matériau élastique à la manière du caoutchouc.

5. Dispositif d'évacuation par aspiration selon l'une quelconque des revendications précédentes,
**caractérisé en ce que** le canal d'évacuation par aspiration et le canal de rinçage sont réalisés en tant qu'un canal d'évacuation par aspiration et de rinçage (1043, 10143) intégral, et que la bride de connexion d'évacuation par aspiration et la bride de connexion de rinçage sont réalisées en tant qu'une bride d'évacuation par aspiration et de connexion de rinçage (1041) intégrale, depuis laquelle s'étend le canal d'évacuation par aspiration et de rinçage.

6. Dispositif d'évacuation par aspiration selon l'une quelconque des revendications précédentes,
**caractérisé en ce que** la pompe d'évacuation par aspiration est raccordée à un conduit d'eaux usagées et à un conduit d'eau de rinçage par l'intermédiaire d'un dispositif de soupape sur le côté de connexion faisant face au conduit de raccordement, dans lequel
- le dispositif de soupape est réalisé de préférence pour raccorder la pompe d'évacuation par aspiration au conduit d'eaux usagées pendant la première et la troisième étape et pour la relier au conduit d'eau de rinçage pendant la deuxième étape,
- le dispositif de soupape est réalisé de préférence pour bloquer une entrée d'eaux usagées dans le conduit de rinçage,
- le dispositif de soupape comprend de préférence un séparateur de système, qui est connecté à un conduit d'eau potable et qui fournit l'eau potable provenant de celui-ci en tant qu'eau de rinçage et bloque l'entrée d'eau de rinçage ou d'eaux usagées dans le conduit d'eau potable.

7. Dispositif d'évacuation par aspiration selon l'une quelconque des revendications précédentes,
**caractérisé en ce que** la pompe d'évacuation par aspiration est une pompe à pistons rotatifs, qui est pilotée par l'unité de commande de pompe pour l'inversion de la direction de rotation entre la première et la deuxième étape et entre la deuxième étape et la troisième étape.

8. Dispositif d'évacuation par aspiration selon l'une quelconque des revendications précédentes,
**caractérisé par** une unité de ventilation et d'aération, qui permet une entrée d'air dans le contenant d'eaux usagées pendant l'évacuation par aspiration et un échappement d'air hors du contenant d'eaux usagées pendant le rinçage, dans lequel l'unité de ventilation et d'aération est réalisée de préférence dans la connexion de bride.

9. Procédé d'évacuation par aspiration d'eaux usagées hors du contenant d'eaux usagées, avec les étapes :
a) d'évacuation par aspiration des eaux usagées hors du contenant d'eaux usagées par un canal d'évacuation par aspiration (1043, 10143), qui s'étend dans le contenant d'eaux usagées (1040), de préférence jusqu'à quelques millimètres au-dessus du fond intérieur du contenant d'eaux usagées, au moyen d'une pompe d'évacuation par aspiration (1010), dans une direction de refoulement d'évacuation par aspiration,
b) de rinçage du contenant d'eaux usagées par l'intermédiaire d'un canal de rinçage (1043, 10143) dans une direction de refoulement de rinçage opposée à la direction de refoulement d'évacuation par aspiration,
c) d'évacuation par aspiration de l'eau de rinçage et des eaux usagées hors du contenant d'eaux usagées par le canal d'évacuation par aspiration au moyen de la pompe d'évacuation par aspiration dans la direction de refoulement d'évacuation par aspiration,
**caractérisé en ce que** la direction de pompage de la pompe d'évacuation par aspiration est modifiée entre l'étape a) et l'étape b) et entre l'étape b) et l'étape c), et
le canal d'évacuation par aspiration et le canal de rinçage sont formés par un canal d'évacuation par aspiration et de rinçage (1043, 10143) intégral et l'évacuation par aspiration lors de l'étape a) et de l'étape c) et le rinçage lors de l'étape b) sont effectués au moyen de la pompe d'évacuation par aspiration par le canal d'évacuation par aspiration et de rinçage.

10. Procédé selon la revendication 9,
**caractérisé en ce que** lors de l'étape b), le contenant d'eaux usagées est rincé à proximité du fond au moyen d'au moins un jet d'eau de rinçage guidé radialement hors du canal de rinçage ; et/ou est rincé lors de l'étape b) avec de l'eau de rinçage, et comprenant par ailleurs l'étape : de fourniture d'eau de rinçage provenant d'une source d'eau fraîche et de séparation du système du guidage d'eaux usagées et de la source d'eau fraîche pour éviter le reflux d'eaux usagées vers la source d'eau fraîche.

11. Station d'élimination pour un véhicule, en particulier pour un autocar, comprenant
- un dispositif d'évacuation par aspiration selon l'une quelconque des revendications 1 à 8, avec une pompe de refoulement (70), laquelle est raccordée côté entrée à une première extrémité de tuyau flexible d'un tuyau flexible d'évacuation par aspiration (30).

12. Station d'élimination selon la revendication 11, comprenant par ailleurs un dispositif d'élimination (50) positionnable pouvant être déplacé par rapport à la pompe de refoulement (70), avec une cuve de collecte (55), laquelle présente un bord supérieur (56), une paroi de cuve s'étendant depuis le bord supérieur (56) vers un fond inférieur de la cuve de collecte (55) et une unité d'évacuation guidée, et avec une ouverture d'évacuation par aspiration (53), qui est raccordée à l'unité d'évacuation guidée de la cuve de collecte (55) au moyen d'un conduit d'évacuation guidée (54),
**caractérisée en ce que** l'ouverture d'évacuation par aspiration (53) est disposée dans la direction de la force de gravité au-dessus du bord supérieur (56) de la cuve de collecte (55), et
**caractérisée par** ailleurs **en ce qu'**une deuxième extrémité de tuyau flexible (32) d'un tuyau flexible d'évacuation par aspiration (30) présente une première partie de couplage (31), qui peut être couplée de manière amovible à une deuxième partie de couplage (530), qui est réalisée sur l'ouverture d'évacuation par aspiration (53) .

13. Station d'élimination selon la revendication 12, **caractérisée en ce que** l'unité d'évacuation guidée est réalisée en tant qu'une tubulure d'évacuation par aspiration, laquelle est disposée dans la cuve de collecte (55) en particulier dans la zone du fond inférieur, et **caractérisée par** ailleurs **en ce que** le conduit d'évacuation guidée (54) comprend la tubulure d'évacuation par aspiration.

14. Station d'élimination selon l'une quelconque des revendications précédentes 12 - 13, **caractérisée en ce que** la première partie de couplage (31) de la deuxième extrémité de tuyau flexible (32) peut être couplée de manière amovible au choix
- à la deuxième partie de couplage (530), qui est disposée autour de l'ouverture d'évacuation par aspiration (53), ou
- à une troisième partie de couplage, qui est disposée autour d'une tubulure d'évacuation par aspiration d'un réservoir d'eaux usagées du véhicule.
